# EUROPEAN PATENT APPLICATION

(11) **EP 3 859 992 A1**
(43) Date of publication of application: **04.08.2021**
(21) Application number: 19864322.3
(22) Date of filing: 27.09.2019
(51) Int. Cl.: H04B 7/06, H04W 16/28, H04W 36/30

(54) **TRANSMISSION DEVICE, RECEPTION DEVICE, WIRELESS COMMUNICATION SYSTEM, CONTROL CIRCUIT, AND STORAGE MEDIUM**

(30) Priority: 27.09.2018 WO PCT/JP2018/035914
(71) Applicant: Mitsubishi Electric Corporation, Tokyo 100-8310 (JP)
(72) Inventor: KAMOHARA, Kenichiro, Chiyoda-ku, Tokyo 100-8310 (JP); HASEGAWA, Fumihiro, Chiyoda-ku, Tokyo 100-8310 (JP); NISHIMOTO, Hiroshi, Chiyoda-ku, Tokyo 100-8310 (JP)
(74) Representative: Pfenning, Meinig & Partner mbB
(86) International application number: PCT/JP2019/038216
(87) International publication number: WO 2020/067449

(57) **Abstract**

A base station (1) as a transmitter includes: a plurality of antenna units (18-1, 18-2) each capable of forming a plurality of beams; a candidate beam grouping unit (11) that performs grouping of each beam formable by the plurality of antenna units, the grouping being performed based on the antenna unit that forms each beam; and a transmission signal generation unit (15) that generates a transmission signal including beam identification information of a beam formed by the plurality of antenna units and group information indicating a group to which the beam belongs, and outputs the transmission signal generated to the antenna unit that forms a beam corresponding to the beam identification information included in the transmission signal.

## Description

### Field

The present invention relates to a transmitter including a plurality of antennas capable of forming a beam, a receiver, a wireless communication system, a control circuit, and a storage medium.

### Background

3rd Generation Partnership Project (3GPP) Release 16, which is a standard specification for wireless communication systems, has developed a wireless communication service with a transmitter station including a plurality of array antennas, each capable of beamforming independently, installed at different transmission/reception points. In order to implement communication using the array antennas in this wireless communication service, it is necessary to select a narrow-range high-gain beam for data transmission between each array antenna of the transmitter station and a receiver station. A narrow-range high-gain beam is a beam having a narrower width and thus having an enhanced gain.

As described in Non Patent Literature 1, when the receiver station performs initial access and completes a cell search, a rough direction of the receiver station from one array antenna can be acquired. That is, in the initial access, each of the plurality of array antennas of the transmitter station forms, toward all directions, a rough beam that is wider but has a lower gain than a narrow-range high-gain beam, and the receiver station selects one rough beam and notifies the transmitter station of the selection result. Consequently, the transmitter station finds a rough direction of the receiver station from the array antenna that forms the rough beam reported.

### Citation List

### Non Patent Literature

Non Patent Literature 1: "Initial Access, Mobility, and User-Centric Multi-Beam Operation in 5G New Radio", IEEE Communications Magazine, March 2018

### Summary

### Technical Problem

As described above, in order to implement communication using a plurality of array antennas, it is necessary to select a narrow-range high-gain beam for data transmission between each array antenna of the transmitter station and the receiver station. With the conventional method of cell search, the transmitter station finds a direction of the receiver station from one array antenna that forms a rough beam reported. Therefore, in the process of selecting a narrow-range high-gain beam, the transmitter station simply forms, for the array antenna that forms the rough beam reported, narrow-range high-gain beams only in the direction covered by the rough beam reported. However, because the direction of the receiver station from another array antenna is unknown, the transmitter station needs to form, for another array antenna, narrow-range high-gain beams in all directions to cause the receiver station to select the narrow-range high-gain beams to be used from among these beams. Therefore, as the number of array antennas increases, the cost for selecting narrow-range high-gain beams that the transmitter station uses for data transmission increases, that is, the processing load and required processing time increase, which is problematic.

The present invention has been made in view of the above, and an object thereof is to obtain a transmitter capable of reducing the processing load and required processing time for selecting the beams to be used.

### Solution to Problem

In order to solve the above-mentioned problems and achieve the object, a transmitter according to the present invention includes a plurality of antenna units each capable of forming a plurality of beams, and a grouping unit that performs grouping of each beam formable by the plurality of antenna units, the grouping being performed based on the antenna unit that forms each beam. The transmitter also includes a transmission signal generation unit that generates a transmission signal including beam identification information of a beam formed by the plurality of antenna units and group information indicating a group to which the beam belongs, and outputs the transmission signal generated to the antenna unit that forms a beam corresponding to the beam identification information included in the transmission signal.

### Advantageous Effects of Invention

The transmitter according to the present invention can achieve the effect of reducing the processing load and required processing time for selecting the beams to be used.

### Brief Description of Drawings

FIG. 1 is a diagram illustrating an exemplary configuration of a wireless communication system according to the present invention.
FIG. 2 is a diagram illustrating an exemplary configuration of a base station according to a first embodiment.
FIG. 3 is a flowchart illustrating an example of how the base station according to the first embodiment transmits an SS burst set.
FIG. 4 is a flowchart illustrating an example of how the base station according to the first embodiment transmits CSI-RS.
FIG. 5 is a diagram illustrating an exemplary configuration of a base station according to a second embodiment.
FIG. 6 is a diagram illustrating an exemplary configuration of a base station according to a third embodiment.
FIG. 7 is a flowchart illustrating an example of how the base station according to the third embodiment transmits an SS burst set.
FIG. 8 is a flowchart illustrating an example of how the base station according to the third embodiment transmits CSI-RS.
FIG. 9 is a diagram illustrating an exemplary configuration of a base station according to a fourth embodiment.
FIG. 10 is a diagram illustrating an exemplary configuration of a mobile station according to a fifth embodiment.
FIG. 11 is a flowchart illustrating an example of how the mobile station according to the fifth embodiment operates.
FIG. 12 is a sequence diagram illustrating an example of a beam management operation in a wireless communication system according to a sixth embodiment.
FIG. 13 is a diagram for explaining a first example of a method in which a base station according to the present invention notifies a mobile station of a beam grouping result.
FIG. 14 is a diagram for explaining a first example of a method in which a base station according to the present invention notifies a mobile station of a beam grouping result.
FIG. 15 is a diagram for explaining a second example of a method in which a base station according to the present invention notifies a mobile station of a beam grouping result.
FIG. 16 is a diagram for explaining a second example of a method in which a base station according to the present invention notifies a mobile station of a beam grouping result.
FIG. 17 is a diagram for explaining a third example of a method in which a base station according to the present invention notifies a mobile station of a beam grouping result.
FIG. 18 is a diagram schematically illustrating an environment in which one base station includes one array antenna.
FIG. 19 is a diagram schematically illustrating an environment in which one base station includes two array antennas.
FIG. 20 is a diagram illustrating an example of a beam selection result by a mobile station.
FIG. 21 is a diagram illustrating a first example of a method of installing the antennas of a base station according to the present invention.
FIG. 22 is a diagram illustrating a second example of a method of installing the antennas of a base station according to the present invention.
FIG. 23 is a diagram illustrating a third example of a method of installing the antennas of a base station according to the present invention.
FIG. 24 is a diagram illustrating a first example of processing circuitry that implements each unit of a base station according to the present invention.
FIG. 25 is a diagram illustrating a second example of processing circuitry that implements each unit of a base station according to the present invention.
FIG. 26 is a sequence diagram illustrating an example of a handover operation in a wireless communication system according to a seventh embodiment.
FIG. 27 is a diagram for explaining a specific example of a handover executed in the wireless communication system according to the seventh embodiment.
FIG. 28 is a diagram for explaining a specific example of a handover executed in the wireless communication system according to the seventh embodiment.
FIG. 29 is a diagram for explaining a specific example of a handover executed in the wireless communication system according to the seventh embodiment.
FIG. 30 is a diagram for explaining a specific example of a handover executed in the wireless communication system according to the seventh embodiment.
FIG. 31 is a flowchart illustrating an example of how a base station operates for a beam switch between array antennas in a wireless communication system according to an eighth embodiment.
FIG. 32 is a diagram for explaining a specific example of a beam switch executed in the wireless communication system according to the eighth embodiment.
FIG. 33 is a diagram for explaining a specific example of a beam switch executed in the wireless communication system according to the eighth embodiment.
FIG. 34 is a diagram for explaining how a mobile station of a wireless communication system according to a ninth embodiment transmits signals.
FIG. 35 is a flowchart illustrating an example of how a base station of the wireless communication system according to the ninth embodiment selects candidates for the transmission beams to be used by a mobile station.
FIG. 36 is a sequence diagram in which a base station and a mobile station exchange information in the wireless communication system according to the ninth embodiment.
FIG. 37 is a flowchart illustrating an example of how a mobile station of the wireless communication system according to the ninth embodiment selects candidates for the transmission beams to be used.
FIG. 38 is a diagram illustrating an exemplary configuration of a slot that is used in the wireless communication system according to the ninth embodiment.
FIG. 39 is a diagram illustrating an exemplary arrangement of SRS symbols in a slot that is used in the wireless communication system according to the ninth embodiment.
FIG. 40 is a diagram illustrating an exemplary arrangement of SRS symbols in a slot that is used in the wireless communication system according to the ninth embodiment.
FIG. 41 is a diagram illustrating an example of a method of arranging SRS symbols in a plurality of slots in the wireless communication system according to the ninth embodiment.
FIG. 42 is a diagram illustrating an example of a method of correlating SRS symbols with beam directions in the wireless communication system according to the ninth embodiment.
FIG. 43 is a diagram illustrating an example of a method of correlating SRS symbols with beam directions in the wireless communication system according to the ninth embodiment.
FIG. 44 is a diagram illustrating an example of a method of correlating SRS symbols with beam directions in the wireless communication system according to the ninth embodiment.
FIG. 45 is a diagram illustrating an example in which SRS symbols are distributed in four slots in the wireless communication system according to the ninth embodiment.
FIG. 46 is a diagram illustrating an example in which SRS symbols are distributed in four slots in the wireless communication system according to the ninth embodiment.
FIG. 47 is a diagram illustrating an exemplary configuration of an SRS symbol arranged in a slot that is used in the wireless communication system according to the ninth embodiment.
FIG. 48 is a diagram illustrating an exemplary configuration of SRS symbols arranged in a slot that is used in the wireless communication system according to the ninth embodiment.
FIG. 49 is a diagram illustrating an exemplary arrangement of reference signals in a slot that is used in the wireless communication system according to the ninth embodiment.
FIG. 50 is a diagram illustrating an exemplary arrangement of reference signals in a slot that is used in the wireless communication system according to the ninth embodiment.
FIG. 51 is a diagram illustrating an example of an uplink transmission operation in the wireless communication system according to the ninth embodiment.
FIG. 52 is a diagram illustrating an example of an uplink transmission operation in the wireless communication system according to the ninth embodiment.

### Description of Embodiments

Hereinafter, a transmitter, a receiver, a wireless communication system, a control circuit, and a storage medium according to embodiments of the present invention will be described in detail based on the drawings. The present invention is not limited to the embodiments.

### First Embodiment.

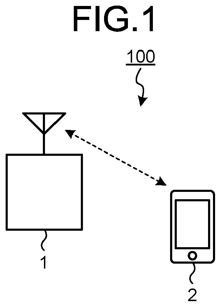

FIG. 1 is a diagram illustrating an exemplary configuration of a wireless communication system according to the present invention. As illustrated in FIG. 1, a wireless communication system 100 according to the present invention includes a base station 1 and a mobile station 2. For the sake of simplicity, FIG. 1 illustrates an example in which one base station 1 and one mobile station 2 constitute the wireless communication system 100. Generally, however, a plurality of base stations 1 constitute the wireless communication system 100, and each of the plurality of base stations 1 communicates with one or more mobile stations 2.

The base station 1 according to the present invention includes a plurality of array antennas each capable of forming a plurality of beams. Each array antenna is capable of forming a beam toward a communication partner, i.e. a mobile station, located in an arbitrary direction. In the present embodiment, the installation positions of the array antennas included in the base station 1 are different from each other. In the wireless communication system 100, when the base station 1 transmits data or the like to the mobile station 2, the base station 1 serves as a transmitter and the mobile station 2 serves as a receiver. Conversely, when the mobile station 2 transmits data to the base station 1, the mobile station 2 serves as a transmitter and the base station 1 serves as a receiver.

The present embodiment describes the operation of the base station 1 constituting the wireless communication system 100. Note that the base stations and mobile stations described in the subsequent embodiments also constitute the wireless communication system 100 illustrated in FIG. 1.

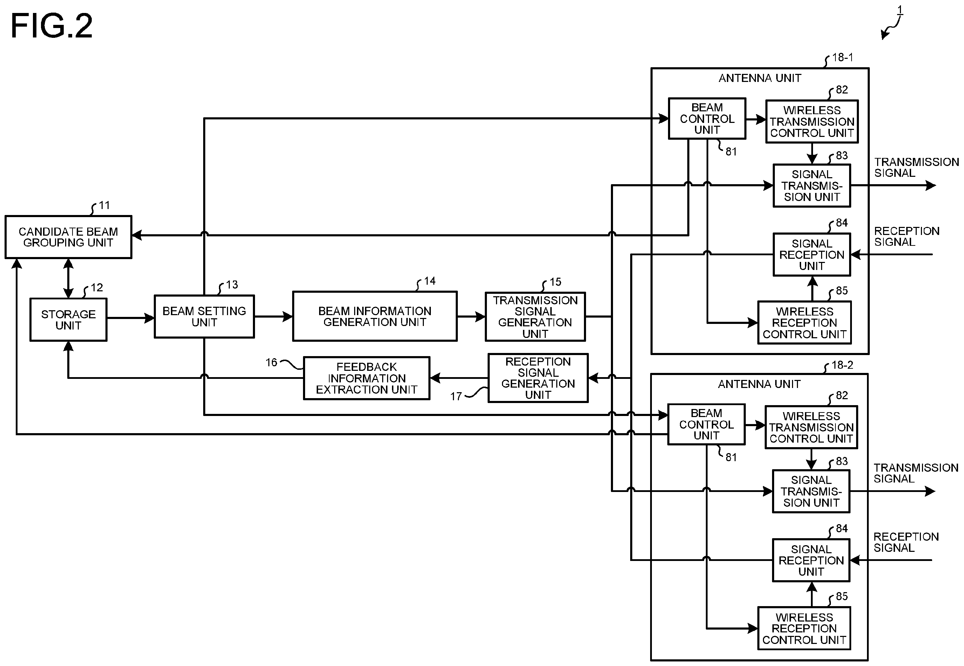

FIG. 2 is a diagram illustrating an exemplary configuration of the base station 1 according to the first embodiment. The base station 1 according to the first embodiment includes a candidate beam grouping unit 11, a storage unit 12, a beam setting unit 13, a beam information generation unit 14, a transmission signal generation unit 15, a feedback information extraction unit 16, a reception signal generation unit 17, an antenna unit 18-1, and an antenna unit 18-2. The antenna unit 18-1 and the antenna unit 18-2 have the same configuration. The antenna unit 18-1 and the antenna unit 18-2 each include a beam control unit 81, a wireless transmission control unit 82, a signal transmission unit 83, a signal reception unit 84, and a wireless reception control unit 85. The signal transmission unit 83 and the signal reception unit 84 included in each of the antenna unit 18-1 and the antenna unit 18-2 are implemented by signal processing circuitry and an array antenna. In the following description, when it is not necessary to distinguish between the antenna unit 18-1 and the antenna unit 18-2, these are referred to as the antenna unit(s) 18.

Although FIG. 2 illustrates a configuration in which the base station 1 includes the two antenna units 18, the number of antenna units 18 may be three or more. The same applies to the number of antenna units included in the base station of each of the subsequent embodiments. Each of the plurality of antenna units 18 includes an array antenna. An array antenna has a structure in which a plurality of antenna elements are provided on a panel. In a general wireless communication system, a plurality of array antennas connected to one base station have the same cell identifier (ID). That is, one cell is covered by each beam formed by each of the plurality of array antennas connected to one base station. The same applies to the base station 1 according to the present embodiment, and the cell ID corresponding to the antenna unit 18-1 and the cell ID corresponding to the antenna unit 18-2 are the same.

The candidate beam grouping unit 11 reads information on candidate beams from the beam control unit 81, groups the candidate beams indicated by the read information, and stores the grouping result in the storage unit 12. A candidate beam is a beam formable by the antenna unit 18 including the beam control unit 81. Grouping may be performed by creating one group for one antenna unit 18 or creating one group for a plurality of antenna units 18. In a case where one group is created for one antenna unit 18, every beam formable by one antenna unit 18 belongs to the same group, which means that the number of groups created is the same as the number of antenna units 18 included in the base station 1. The candidate beam grouping unit 11 may create a group based on information fed back from the mobile station 2 and stored in the storage unit 12 by the feedback information extraction unit 16 described later. A specific example of a beam grouping method for the candidate beam grouping unit 11 will be described later, but in short, the candidate beam grouping unit 11 performs grouping based on the antenna unit 18 that forms each beam, that is, based on which antenna unit 18 forms each beam. The candidate beam grouping unit 11 is a grouping unit that performs grouping of each beam formable by the plurality of antenna units 18 based on the antenna unit 18 that forms each beam.

The beam setting unit 13 selects a transmission beam from among the beams indicated by the information on candidate beams held by the storage unit 12. After selecting a transmission beam, the beam setting unit 13 outputs information indicating the selected beam (hereinafter referred to as "selected beam information") to the beam control unit 81, and outputs group information indicating the group to which the selected beam belongs (hereinafter referred to as "selected beam group information") and the selected beam information to the beam information generation unit 14.

The beam information generation unit 14 generates beam information corresponding to the selected beam group information and selected beam information received from the beam setting unit 13, and outputs the beam information to the transmission signal generation unit 15. The beam information generation unit 14 allocates an ID to each group created by the candidate beam grouping unit 11, for example, and generates beam information including the selected beam information and the group ID of the group to which the selected beam belongs. The beam information generation unit 14 may use time division multiplexing, frequency division multiplexing, code division, spatial division multiplexing, or a combination of two or more thereof to generate transmission mode information corresponding to the resource allocation determined in advance such that the groups of beams can be distinguished by the mobile station 2, and may use the transmission mode information as beam information. That is, the beam information generated by the beam information generation unit 14 is information indicating the selected beam, which is the beam selected by the beam setting unit 13, and the group to which the selected beam belongs.

The transmission signal generation unit 15 generates a baseband transmission signal including the beam information generated by the beam information generation unit 14, and outputs the baseband transmission signal to the signal transmission unit 83 of the antenna unit 18 corresponding to the selected beam indicated by the beam information. The antenna unit 18 corresponding to the selected beam indicated by the beam information is the antenna unit 18 that forms the selected beam.

The beam control unit 81 outputs, to the candidate beam grouping unit 11, information about candidate beams such as the beam ID of a formable beam. In accordance with the selected beam information indicating the beam selected by the beam setting unit 13, the beam control unit 81 also outputs, to the wireless transmission control unit 82 and the wireless reception control unit 85, information indicating the phase and amplitude weight of each element corresponding to the selected beam.

The wireless transmission control unit 82 controls the timing at which the signal transmission unit 83 transmits a signal, the amplitude and phase of the signal that the signal transmission unit 83 transmits, and the like based on the information indicating the phase and amplitude weight input from the beam control unit 81.

The signal transmission unit 83 converts the baseband transmission signal received from the transmission signal generation unit 15 into a wireless signal and transmits the wireless signal. That is, under the control of the wireless transmission control unit 82, the signal transmission unit 83 converts the baseband transmission signal received from the transmission signal generation unit 15 into a high-frequency wireless signal having a predetermined carrier frequency, and transmits the wireless signal. The process of converting a baseband transmission signal into a high-frequency wireless signal is performed by the signal processing circuitry, and the transmission of a wireless signal is performed by the array antenna.

The wireless reception control unit 85 controls reception processing in the signal reception unit 84 based on the information indicating the phase and amplitude weight input from the beam control unit 81.

The signal reception unit 84 receives a wireless signal transmitted by the mobile station 2. That is, the signal reception unit 84 receives a high-frequency wireless signal having a predetermined carrier frequency, converts the high-frequency wireless signal into a baseband reception signal under the control of the wireless reception control unit 85, and outputs the reception signal to the reception signal generation unit 17. The reception of a high-frequency wireless signal is performed by the array antenna, and the process of converting a wireless signal into a baseband reception signal is performed by the signal processing circuitry.

The reception signal generation unit 17 generates a reception signal by performing various processes such as synchronization and Fourier transform on the signal received from the signal reception unit 84, and outputs the reception signal to the feedback information extraction unit 16.

The feedback information extraction unit 16 extracts information fed back from the mobile station 2 from the reception signal received from the reception signal generation unit 17, and outputs the information to the storage unit 12. Feedback information, which is information extracted from the reception signal by the feedback information extraction unit 16, may be information indicating the beam selected by the mobile station 2 or may be the position information of the mobile station 2. Alternatively, feedback information may be information reported in a CSI report defined in 3GPP.

The storage unit 12 holds information on candidate beams, group information created by the candidate beam grouping unit 11, and feedback information extracted by the feedback information extraction unit 16 from reception signals.

Next, the operation of the base station 1 will be described. The following examples refer to transmission of a synchronization signal block (SSB) in a synchronization signal burst set (SS burst set) that is used as a synchronization signal in a wireless communication system conforming to 3GPP, and transmission of a channel state information reference signal (CSI-RS) that is used for selecting a narrow-range high-gain beam after initial synchronization. However, the present invention is not limited to these.

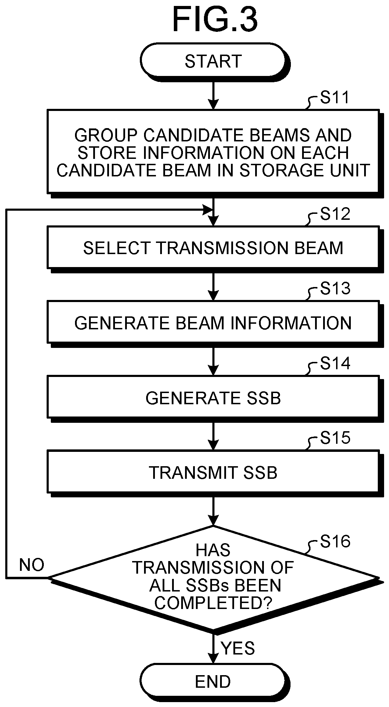

FIG. 3 is a flowchart illustrating an example of how the base station 1 according to the first embodiment transmits an SS burst set. The base station 1 periodically transmits a plurality of SSBs in time division multiplexing by applying different beam formations according to the flowchart illustrated in FIG. 3.

The base station 1 groups candidate beams for SSB transmission, and stores the grouping result in the storage unit 12 (step S11). That is, the base station 1 groups candidate beams for SSB transmission, and then stores information on each candidate beam in the storage unit 12 in association with information on the group to which the candidate beam belongs. Here, for the sake of simplicity and as an example of grouping, suppose that each beam formable by the antenna unit 18-1 belongs to a group G1 and each beam formable by the antenna unit 18-2 belongs to a group G2. The grouping of candidate beams is performed by the candidate beam grouping unit 11.

Next, the base station 1 selects a transmission beam from among the candidate beams (step S12). Next, the base station 1 generates beam information including information indicating the selected beam and information indicating the group to which the selected beam belongs (step S13), and generates an SSB (step S14). Specifically, the base station 1 generates an SSB by adding an SSB index and group information indicating the group to which the transmission beam belongs to a physical broadcast channel (PBCH) in the SSB. Alternatively, the base station 1 generates an SSB in which PBCH includes resource allocation information that enables the mobile station 2 to identify the transmission beam and the group to which the beam belongs. Note that the SSB index is in one-to-one correspondence with the beam to be transmitted by the base station 1. The mobile station 2 is able to identify which beam in which group has been transmitted from the base station 1 by obtaining the group to which the beam belongs and the SSB index.

Next, the base station 1 transmits the SSB generated in step S14 using the beam selected in step S12 (step S15). The base station 1 repeats steps S12 (beam selection) to S15 (SSB transmission) until the transmission of all SSBs is completed such that there is no overlap within the SSB transmission period. Specifically, after transmitting the SSB in step S15, the base station 1 checks whether the transmission of all SSBs has been completed, that is, whether SSBs have been transmitted using all candidate beams (step S16). In response to confirming that the transmission of SSBs with all candidate beams has not been completed (step S16: No), the base station 1 returns to step S12 and continues the procedure. In response to confirming that the transmission of SSBs with all candidate beams has been completed (step S16: Yes), the base station 1 ends the procedure.

Using the procedure illustrated in FIG. 3, the base station 1 transmits SSB to the mobile station 2, that is, the base station 1 transmits a beam to the mobile station 2 together with information on the group to which the beam belongs, whereby the mobile station 2 can select a beam in consideration of grouping. In the above example, the mobile station 2 can select a beam in consideration of which of the two array antennas installed at different positions SSB has been transmitted from.

Generally, in a wireless communication system, a base station first transmits SSB using wide-range low-gain beams, acquires a rough direction of a mobile station based on information fed back from the mobile station, and then performs a CSI-RS-based beam search to determine a high-gain narrow-range beam for data transmission. After transmitting an SSB, the base station can receive feedback information from the mobile station that has received the SSB. In this case, the base station determines that the mobile station exists in the transmission direction of the beam used for transmitting the SSB. Beams with which the base station 1 according to the present embodiment transmits SSB in the procedure represented by the flowchart illustrated in FIG. 3 are also wide-range low-gain beams. Beams with which the base station 1 transmits SSB are first beams.

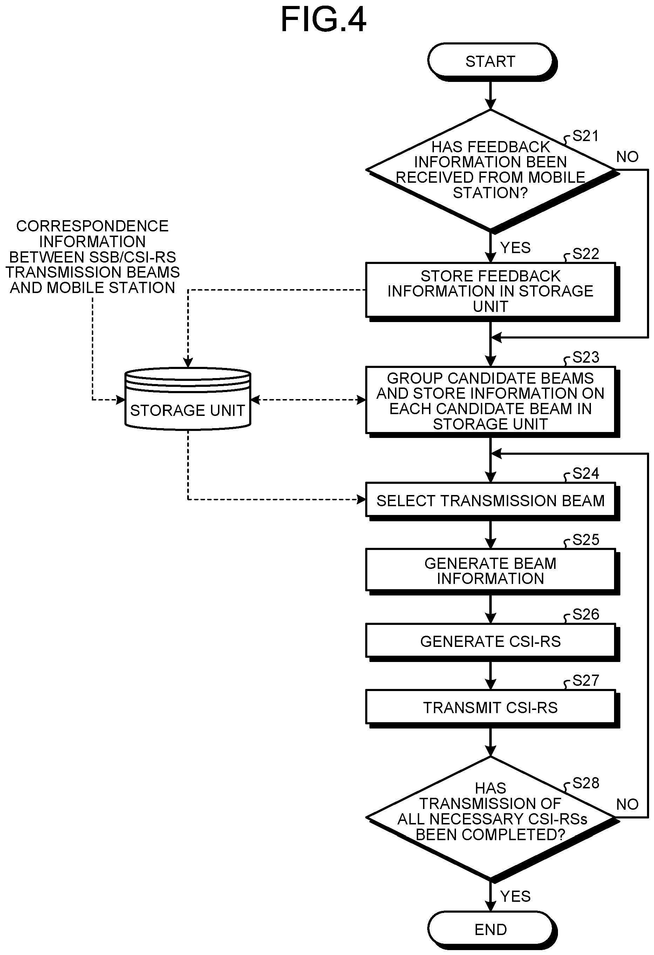

The base station 1 transmits SSB according to the flowchart illustrated in FIG. 3 and, as a result, can detect the mobile station 2, that is, obtain information on a rough direction in which the mobile station 2 exists. In this case, the base station 1 transmits CSI-RS to the detected mobile station 2 by applying beam formations. At this time, the base station 1 periodically or aperiodically arranges CSI-RSs in the resources defined by time and frequency, and transmits the CSI-RSs by applying code division multiplexing and/or spatial division multiplexing. CSI-RS is transmitted for the purpose of supporting the mobility of the mobile station 2, determining a highly accurate beam for data transmission, and the like. FIG. 4 is a flowchart illustrating an example of how the base station 1 according to the first embodiment transmits CSI-RS.

The base station 1 checks whether feedback information indicating a beam measurement result has been received from the mobile station 2 (step S21). A beam measurement result is, for example, identification information of a beam successfully received by the mobile station 2. A beam measurement result may include identification information of a beam successfully received by the mobile station 2 and information on the reception level of each beam. Here, feedback information is a CSI report for notifying the base station 1 of a beam measurement result by the mobile station 2. Note that the base station 1 may instruct the mobile station 2 capable of receiving a plurality of beams simultaneously using a spatial filter or the like to perform group-based beam reporting for providing a beam report for each group at the time of a CSI report.

In response to receiving a CSI report (step S21: Yes), the base station 1 extracts feedback information, that is, a beam measurement result, from the CSI report, and stores the feedback information in the storage unit 12 (step S22). Next, the base station 1 groups candidate beams and stores the grouping result in the storage unit 12 (step S23). That is, the base station 1 groups candidate beams, and then stores information on each candidate beam in the storage unit 12 in association with information on the group to which the candidate beam belongs. Here, candidate beams are candidates for the beams to be used for CSI-RS transmission. The beams to be used for CSI-RS transmission are high-gain narrow-range beams. Beams with which the base station 1 transmits CSI-RS are second beams. Candidates for the beams to be used for CSI-RS transmission are beams corresponding to the feedback information held by the storage unit 12 among all the narrow-range high-gain beams formable by the base station 1. Beams corresponding to the feedback information are, for example, narrow-range high-gain beams that are formed within a certain range including the direction in which the source mobile station 2 of the feedback information exists. A certain range including the direction in which the source mobile station 2 of the feedback information exists may be the range covered by the wide-range low-gain beam used at the time of SSB reception at the mobile station 2. The base station 1 may skip step S23 when grouping of candidate beams is unnecessary. Grouping of candidate beams is unnecessary, for example, if candidate beams have already been grouped and the feedback information received from the mobile station 2 is the same as the feedback information previously received.

On the other hand, in response to not receiving a CSI report (step S21: No), the base station 1 groups the candidate beams indicated by the information stored in the storage unit 12, and stores information on each candidate beam in the storage unit 12 in association with information on the group to which the candidate beam belongs (step S23). At this time, the base station 1 may skip the grouping process when grouping of candidate beams is unnecessary. Grouping of candidate beams is unnecessary, for example, if candidate beams have already been grouped and the elapsed time from the last grouping of candidate beams is less than or equal to a predetermined time.

Next, the base station 1 selects a beam for transmitting CSI-RS based on information stored in the storage unit 12, specifically, information indicating the direction of the beam used for transmitting the SSB or CSI-RS corresponding to the mobile station 2 (step S24). A beam for transmitting CSI-RS (hereinafter referred to as a "beam for CSI-RS transmission") is a narrow-range beam that is narrower than a beam for transmitting SSB. If the base station 1 has not previously transmitted CSI-RS to the destination mobile station of CSI-RS, the base station 1 selects a beam for CSI-RS transmission based on information indicating the direction of the beam used for transmitting SSB, that is, the beam used at the time of SSB reception at the mobile station 2. For example, the base station 1 selects one of the beams that are formed within a certain range including the direction of the beam used at the time of SSB reception at the mobile station 2. There may be a plurality of beams used at the time of SSB reception at the mobile station 2. If the base station 1 has previously transmitted CSI-RS to the destination mobile station of CSI-RS, the base station 1 selects a beam for CSI-RS transmission based on information indicating the direction of the beam used at the time of CSI-RS reception at the mobile station 2. For example, the base station 1 selects one of the beams that are formed within a certain range including the direction of the beam used at the time of the previous CSI-RS reception at the mobile station 2. There may be a plurality of beams used at the time of CSI-RS reception at the mobile station 2. Note that the base station 1 is notified through feedback information from the mobile station 2 of the beam used at the time of SSB reception at the mobile station 2 and the beam used at the time of CSI-RS reception at the mobile station 2.

Next, the base station 1 generates beam information indicating the selected beam, which is the beam selected in step S24, and the group to which the selected beam belongs (step S25), and generates a CSI-RS (step S26). Specifically, the base station 1 generates a CSI-RS including information on the group to which the selected beam belongs and a CSI-RS resource indicator (CRI), which associates the CSI-RS one-to-one with the selected beam. Alternatively, the base station 1 generates a CSI-RS including the group to which the selected beam belongs and resource allocation information that enables the mobile station 2 to identify the CRI that associates the CSI-RS one-to-one with the selected beam. Note that the base station 1 may notify the mobile station 2 in advance of information on the group to which the selected beam belongs and the CRI or the resource allocation result described above using downlink control information (DCI) that is used in 3GPP, and generate a CSI-RS that does not include these items of information.

Next, the base station 1 transmits the CSI-RS generated in step S26 using the selected beam (step S27). The base station 1 repeats steps S24 (beam selection) to S27 (CSI-RS transmission) until the transmission of all CSI-RSs that need to be transmitted is completed. Specifically, after transmitting the CSI-RS in step S27, the base station 1 checks whether the transmission of all necessary CSI-RSs has been completed (step S28). The transmission of all necessary CSI-RSs is the transmission of CSI-RSs with every beam selectable in step S24 above. For example, in a case where the base station 1 is designed in step S24 to select one of the beams that are formed within a certain range including the direction of the beam used at the time of SSB reception at the mobile station 2, the base station 1 checks in step S28 whether CSI-RSs have been transmitted using all the beams that are formed within the certain range.

In response to confirming that the transmission of all necessary CSI-RSs has not been completed, that is, in response to confirming that at least one of the beams selectable in step S24 has not been used to transmit a CSI-RS (step S28: No), the base station 1 returns to step S24 and continues the procedure. In response to confirming that the transmission of all necessary CSI-RSs has been completed (step S28: Yes), the base station 1 ends the procedure.

By following the flowchart illustrated in FIG. 4, the base station 1 transmits CSI-RS, whereby the mobile station 2 can perform CSI-RS-based beam selection in consideration of the grouping of candidate beams. Therefore, the base station 1 can acquire, for each group, a narrow-range high-gain candidate beam for data transmission corresponding to each mobile station 2.

Details of the operation of the mobile station 2 will be described in another embodiment, but in short, the mobile station 2 receives an SSB and holds information on the group to which the beam of the received SSB belongs. After the base station 1 performs the procedure represented by the flowchart illustrated in FIG. 3 and completes the transmission of SSBs with all of the candidate beams, the mobile station 2 selects the beams to be fed back to the base station 1 from among the beams of successfully received SSBs. At this time, the mobile station 2 selects one or more beams that belong to different groups. For example, suppose that the mobile station 2 receives SSBs in beams b11 to b14 and beams b23 to b25, where the beams b11 to b14 belong to a first group and the beams b23 to b25 belong to a second group. In this case, the mobile station 2 selects one of the beams b11 to b14 and one of the beams b23 to b25. Then, the mobile station 2 feeds back information on the selected two beams to the base station 1. In this case, the base station 1 can obtain the directions of the mobile station 2 from the antenna units 18 that form the two fed back beams.

As described above, the base station 1 according to the present embodiment includes the plurality of antenna units 18, and groups each beam formable by the antenna units 18. The base station 1 transmits SSB and CSI-RS together with information on the group to which the beam to be used belongs. Consequently, the mobile station 2 can select a beam in consideration of the group to which the beam belongs. Therefore, for example, the base station 1 performs beam grouping by classifying the beams formed by the same antenna unit 18 into the same group, and causes the mobile station 2 to feed back, using a CSI report or the like immediately after a cell search, information on a receivable beam selected from each group, whereby the base station 1 can obtain rough directions of the mobile station 2 from two or more antenna units 18. As a result, in order to determine the narrow-range high-gain beams to be used for data transmission, the base station 1 only needs to form narrow-range high-gain beam candidates toward each of the rough directions of the mobile station 2 from the two or more antenna units 18, and thus can reduce the processing load for selecting a narrow-range high-gain beam. The base station 1 can also reduce the time required from the start of the process for selecting a narrow-range high-gain beam to the completion of the process. Alternatively, in order to determine the narrow-range high-gain beams to be used for data transmission, the base station 1 may form, for each of the rough directions of the mobile station 2 from the two or more antenna units 18, narrow-range high-gain beam candidates within a certain range including the rough direction of the mobile station 2.

### Second Embodiment.

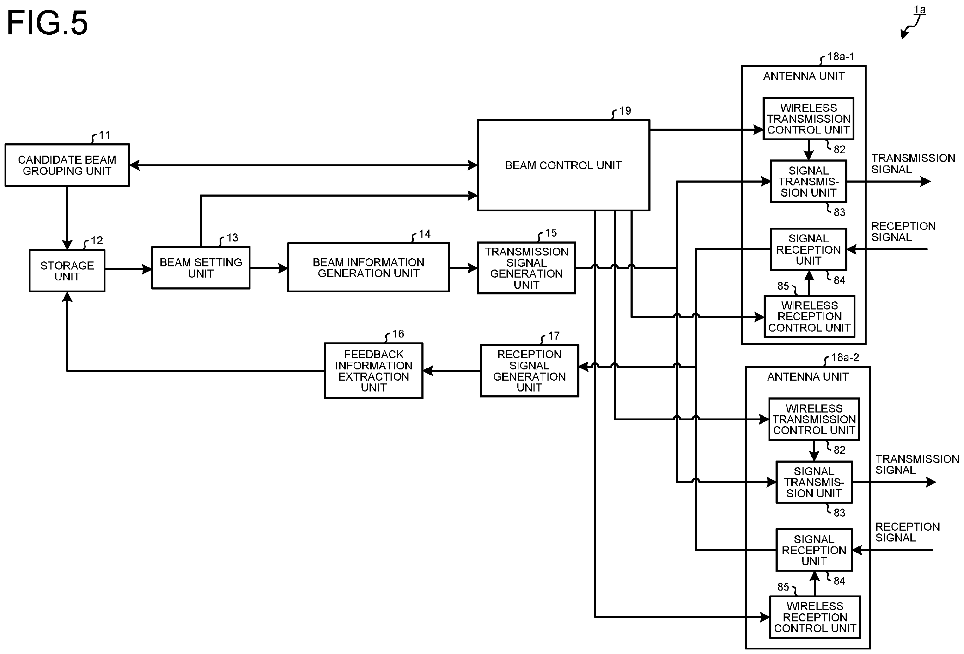

FIG. 5 is a diagram illustrating an exemplary configuration of a base station according to a second embodiment. A base station 1a according to the second embodiment is configured by replacing the antenna units 18-1 and 18-2 of the base station 1 according to the first embodiment with antenna units 18a-1 and 18a-2, and adding a beam control unit 19. Because each component of the base station 1a except the antenna units 18a-1 and 18a-2 and the beam control unit 19 is the same as the component of the base station 1 denoted by the same reference sign, the description thereof will be omitted.

The antenna unit 18a-1 and the antenna unit 18a-2 have the same configuration. In the following description, when it is not necessary to distinguish between the antenna unit 18a-1 and the antenna unit 18a-2, these are referred to as the antenna unit(s) 18a.

Each antenna unit 18a includes the wireless transmission control unit 82, the signal transmission unit 83, the signal reception unit 84, and the wireless reception control unit 85. These units are the same as the wireless transmission control unit 82, the signal transmission unit 83, the signal reception unit 84, and the wireless reception control unit 85 of the antenna unit 18 included in the base station 1 according to the first embodiment. That is, the antenna unit 18a is configured by deleting the beam control unit 81 from the antenna unit 18.

The beam control unit 19 collectively controls the beam forming operation of every antenna unit 18a. Specifically, the beam control unit 19 outputs, to the candidate beam grouping unit 11, information about candidate beams such as the beam ID of a beam formable by each antenna unit 18a. In accordance with the selected beam information indicating the beam selected by the beam setting unit 13, the beam control unit 19 also outputs, to the wireless transmission control unit 82 and the wireless reception control unit 85 of each antenna unit 18a, information indicating the phase and amplitude weight of each element corresponding to the selected beam.

The operation of the base station 1a is similar to that of the base station 1 according to the first embodiment. Therefore, the description of the operation of the base station 1a will be omitted.

As described above, the base station 1a according to the present embodiment has a device configuration in which beam control of the plurality of antenna units 18a is collectively performed from outside the antenna units 18a. The configuration in which the single beam control unit 19 performs collective beam control of every antenna unit 18a makes it possible to provide an integrated interface from the beam control unit 19 to the candidate beam grouping unit 11 and the beam setting unit 13. Therefore, the circuit scale can be reduced: as the number of antenna units 18a increases, the circuit scale can be reduced more effectively.

### Third Embodiment.

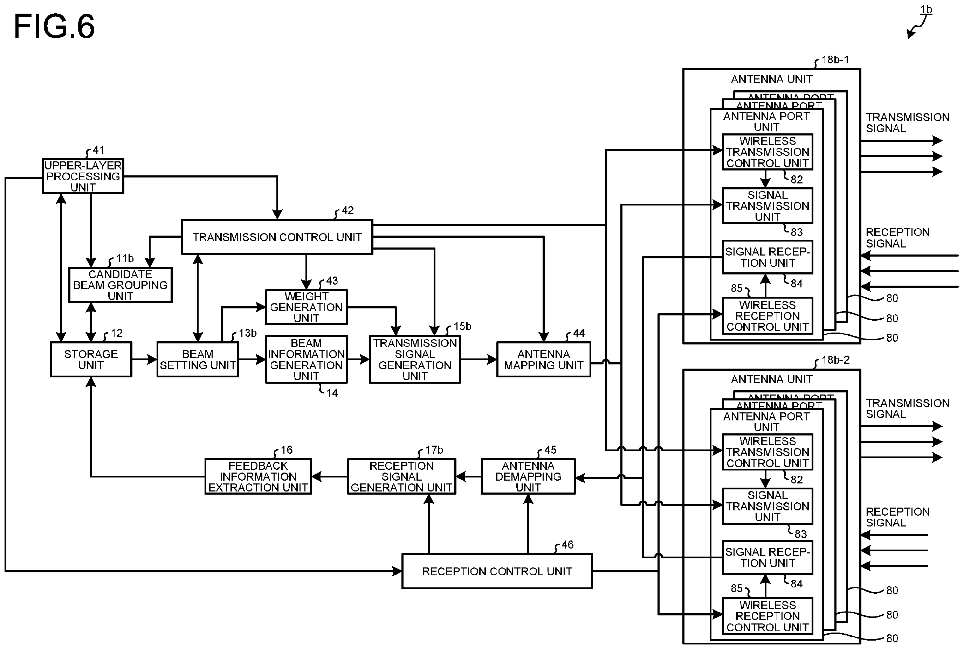

FIG. 6 is a diagram illustrating an exemplary configuration of a base station according to a third embodiment. FIG. 6 depicts the configuration of the base station including a processing unit in an upper layer. The base station described in the present embodiment assumes a change in the configuration of antenna units. Note that the configuration including a processing unit in an upper layer is not limited to the present embodiment, and can be applied to the base stations described in the first and second embodiments.

A base station 1b according to the third embodiment includes a candidate beam grouping unit 11b, the storage unit 12, a beam setting unit 13b, the beam information generation unit 14, a transmission signal generation unit 15b, the feedback information extraction unit 16, a reception signal generation unit 17b, antenna units 18b-1 and 18b-2, an upper-layer processing unit 41, a transmission control unit 42, a weight generation unit 43, an antenna mapping unit 44, an antenna demapping unit 45, and a reception control unit 46. The storage unit 12, the beam information generation unit 14, and the feedback information extraction unit 16 of the base station 1b are the same as the storage unit 12, the beam information generation unit 14, and the feedback information extraction unit 16 of the base station 1 according to the first embodiment. However, data held by the storage unit 12 of the base station 1b are partially different from data held by the storage unit 12 of the base station 1. The description of the beam information generation unit 14 and the feedback information extraction unit 16 of the base station 1b will be omitted.

The antenna unit 18b-1 and the antenna unit 18b-2 have the same configuration. In the following description, when it is not necessary to distinguish between the antenna unit 18b-1 and the antenna unit 18b-2, these are referred to as the antenna unit(s) 18b.

Each antenna unit 18b includes a plurality of antenna port units 80. Each antenna port unit 80 includes a wireless transmission control unit 82b, the signal transmission unit 83, the signal reception unit 84, and a wireless reception control unit 85b. The signal transmission unit 83 and the signal reception unit 84 are the same as the signal transmission unit 83 and the signal reception unit 84 of the antenna unit 18 included in the base station 1 according to the first embodiment.

The upper-layer processing unit 41 performs upper-layer processing such as radio resource control (RRC), and controls the transmission control unit 42, the reception control unit 46, and the candidate beam grouping unit 11 based on the upper-layer processing result. The upper-layer processing unit 41 may reflect the feedback information of the mobile station 2 stored in the storage unit 12 in radio resource control, and store the reflection result in the storage unit 12. As an example, the upper-layer processing unit 41 generates candidates for the beams to be used for CSI-RS transmission to the mobile station 2 using information indicating the correspondence between SSB and the mobile station 2 or information indicating the correspondence between CSI-RS and the mobile station 2 held by the storage unit 12, and stores the generated candidate information in the storage unit 12.

The transmission control unit 42 controls the candidate beam grouping unit 11b, the beam setting unit 13, the weight generation unit 43, the transmission signal generation unit 15, the antenna mapping unit 44, and the wireless transmission control unit 82 included in each antenna port unit 80 of the antenna unit 18b based on downlink scheduling information and control information input from the upper-layer processing unit 41 and selected beam information obtained from the beam setting unit 13.

The candidate beam grouping unit 11b groups the candidate beams indicated by the information held by the storage unit 12 based on input signals from the upper-layer processing unit 41 and the transmission control unit 42, and stores the grouping result in the storage unit 12. As an example, the candidate beam grouping unit 11b groups candidate beams using one or more of information indicating whether grouping is necessary input from the upper-layer processing unit 41, information on the installation positions of the plurality of antenna units 18b, and information indicating whether each antenna unit 18b is on or off. Alternatively, the candidate beam grouping unit 11b may group candidate beams based on information on the destination mobile station 2 input from the transmission control unit 42.

The beam setting unit 13b selects a transmission beam from among the beams indicated by the information on candidate beams held by the storage unit 12 based on an input signal from the transmission control unit 42, and outputs the selection result to the transmission control unit 42, the weight generation unit 43, and the beam information generation unit 14. The beam setting unit 13b may select a transmission beam based on information on the destination mobile station 2, information on an available antenna unit, or the like input from the transmission control unit 42.

The weight generation unit 43 generates the weight to be used by the transmission signal generation unit 15b to generate a transmission signal. Specifically, the weight generation unit 43 generates a weight corresponding to the selected beam, which is the beam selected by the beam setting unit 13b, based on an input signal from the transmission control unit 42, and outputs the weight to the transmission signal generation unit 15b.

The transmission signal generation unit 15b generates a baseband transmission signal including the beam information generated by the beam information generation unit 14 based on an input signal from the transmission control unit 42, applies the weight input from the weight generation unit 43 to the generated baseband transmission signal, and then outputs the baseband transmission signal to the antenna mapping unit 44.

The antenna mapping unit 44 outputs the input signal from the transmission signal generation unit 15b to the signal transmission unit 83 of the antenna port unit 80 indicated by an input signal from the transmission control unit 42.

The wireless transmission control unit 82b of each antenna port unit 80, for example, controls the timing at which the signal transmission unit 83 transmits a signal based on an input signal from the transmission control unit 42.

The signal transmission unit 83 converts the baseband transmission signal received from the antenna mapping unit 44 into a high-frequency wireless signal having a predetermined carrier frequency based on an input signal from the wireless transmission control unit 82b, and transmits the wireless signal.

The reception control unit 46 controls the wireless reception control unit 85 included in each antenna port unit 80 of the antenna unit 18b, the antenna demapping unit 45, and the reception signal generation unit 17b based on uplink scheduling information and control information input from the upper-layer processing unit 41.

The wireless reception control unit 85b of each antenna port unit 80 controls reception processing in the signal reception unit 84 based on an input signal from the reception control unit 46.

The signal reception unit 84 receives a high-frequency wireless signal having a predetermined carrier frequency, converts the high-frequency reception signal into a baseband reception signal based on an input signal from the wireless reception control unit 85b, and outputs the reception signal to the antenna demapping unit 45.

The antenna demapping unit 45 selects the antenna port unit 80 indicated by an input signal from the reception control unit 46, and outputs the signal input from the selected signal reception unit 84 to the reception signal generation unit 17b.

The reception signal generation unit 17b generates a reception signal by performing various processes such as synchronization and Fourier transform on the baseband signal received from the antenna demapping unit 45 based on an input signal from the reception control unit 46, and outputs the reception signal to the feedback information extraction unit 16.

The storage unit 12 holds information on the plurality of antenna units 18b and information on candidate beams input from the upper-layer processing unit 41, group information created by the candidate beam grouping unit 11b, and feedback information extracted by the feedback information extraction unit 16 from reception signals.

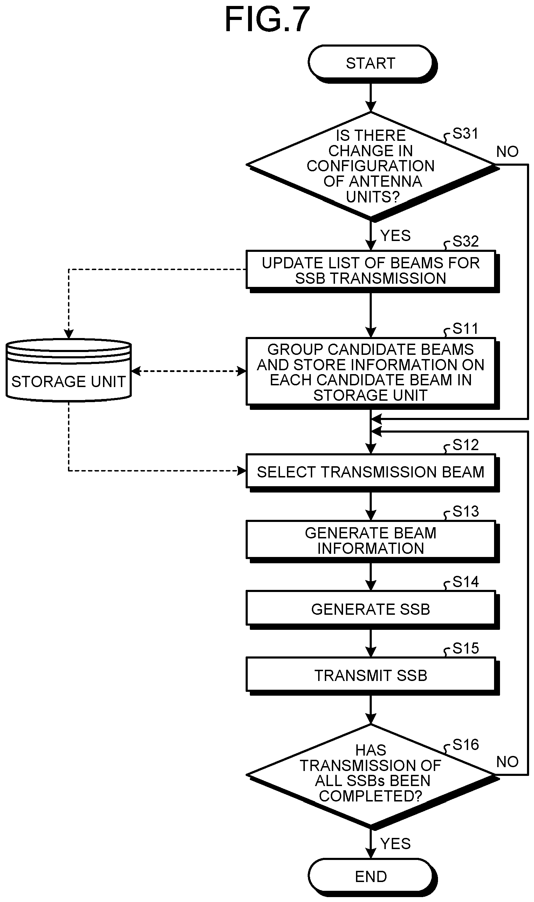

Next, the operation of the base station 1b will be described. FIG. 7 is a flowchart illustrating an example of how the base station 1b according to the third embodiment transmits an SS burst set. The base station 1b periodically transmits a plurality of SSBs in time division multiplexing by applying different beam formations according to the flowchart illustrated in FIG. 7. Note that steps S11 to S16 of the flowchart illustrated in FIG. 7 are similar to steps S11 to S16 of the flowchart illustrated in FIG. 3.

The base station 1b checks whether there is a change in the configuration of the antenna units 18b (step S31). In this step S31, the upper-layer processing unit 41 observes a change in the configuration of the antenna units 18b, specifically, whether one or more of the antenna units 18b have been removed, whether another antenna unit 18b has been added, and whether the installation position of any of the array antennas constituting the antenna units 18b has been changed, for example. When one or more of these changes occur, the upper-layer processing unit 41 determines that the configuration of the antenna unit 18b has been changed.

In response to confirming that there is a change in the configuration of the antenna units 18b (step S31: Yes), the base station 1b updates a list of beams for SSB transmission (step S32). The update of a list of beams for SSB transmission, or a first list, is performed by the upper-layer processing unit 41. For example, when some antenna unit 18b becomes unavailable due to removal or the like, the upper-layer processing unit 41 deletes, from the first list, the beams for SSB transmission corresponding to the unavailable antenna unit 18b, that is, the beams formable by the unavailable antenna unit 18b. When another available antenna unit 18b is added, the upper-layer processing unit 41 adds the beams formable by the added antenna unit 18b to the first list. Note that the first list is held by the storage unit 12. The beams registered in the first list are candidates for beams for SSB transmission. In the first list, all the beams available for SSB transmission are registered.

In response to executing step S32 to update the list of beams for SSB transmission, the base station 1b groups candidates for beams for SSB transmission, that is, candidate beams, and stores the grouping result in the storage unit 12 (step S11). The grouping of candidate beams is performed by the candidate beam grouping unit 11b. The candidate beam grouping unit 11b receives, for example, the arrangement information of the antenna units 18b from the upper-layer processing unit 41, and performs grouping based on the received information. In the case of grouping that is based on the arrangement information of the antenna units 18b, for example, the candidate beam grouping unit 11b classifies the beams formed by the antenna units 18b located at close positions into the same group. Steps S12 to S16 following step S11 are similar to steps S12 to S16 in the flowchart illustrated in FIG. 3.

In response to confirming that there is no change in the configuration of the antenna units 18b (step S31: No), the base station 1b executes step S12 and subsequent steps.

In step S12, the beam setting unit 13b selects a transmission beam, that is, a beam for SSB transmission, from among the candidate beams.

In step S13, the beam information generation unit 14 generates beam information including information indicating the beam selected by the beam setting unit 13b in step S12 and information on the group to which the beam belongs.

In step S14, the transmission signal generation unit 15b generates an SSB including the beam information generated by the beam information generation unit 14 in step S13. After generating the SSB, the transmission signal generation unit 15b generates a transmission signal including the SSB, multiplies the generated transmission signal by the weight input from the weight generation unit 43, and outputs the transmission signal to the antenna mapping unit 44. The antenna mapping unit 44 outputs the transmission signal input from the transmission signal generation unit 15b to the antenna port unit 80 specified by the transmission control unit 42.

In step S15, the signal transmission unit 83 of the antenna port unit 80 that has received the signal output from the antenna mapping unit 44 transmits the SSB by transmitting the received signal.

By performing the procedure represented by the flowchart illustrated in FIG. 7, the base station 1b can change the grouping of beams to be used for SSB transmission in the event of a change in the configuration of the antenna units 18b.

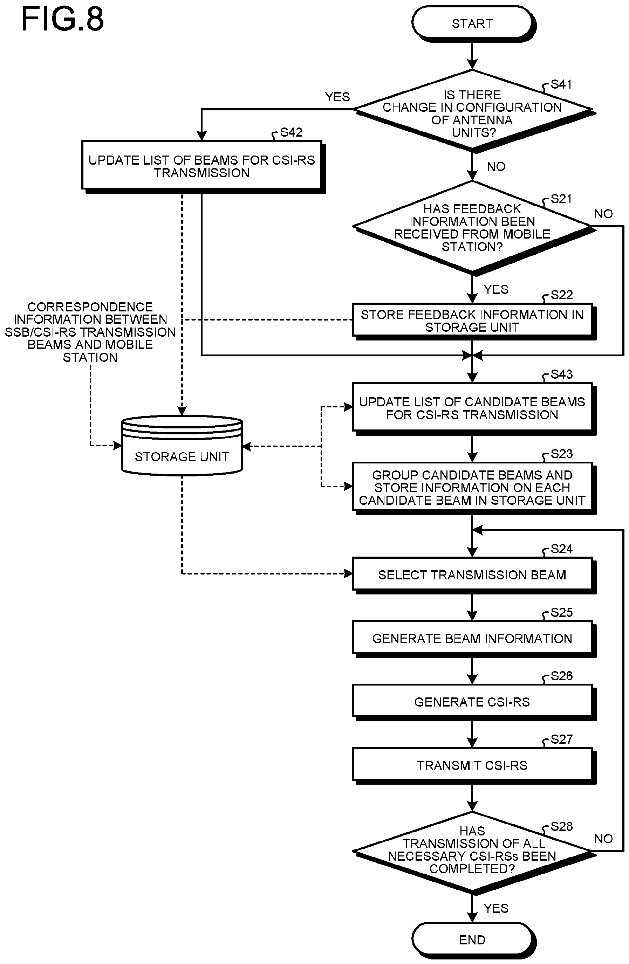

FIG. 8 is a flowchart illustrating an example of how the base station 1b according to the third embodiment transmits CSI-RS. Note that steps S21 to S28 of the flowchart illustrated in FIG. 8 are similar to steps S21 to S28 of the flowchart illustrated in FIG. 4.

The base station 1b checks whether there is a change in the configuration of the antenna units 18b (step S41). In this step S41, the upper-layer processing unit 41 determines whether there is a change using a method similar to the method in step S31 described above. In response to confirming that there is a change in the configuration of the antenna units 18b (step S41: Yes), the base station 1b updates a list of beams for CSI-RS transmission (step S42). The update of a list of beams for CSI-RS transmission, or a second list, is performed by the upper-layer processing unit 41. For example, when some antenna unit 18b becomes unavailable, the upper-layer processing unit 41 deletes, from the second list, the beams for CSI-RS transmission corresponding to the unavailable antenna unit 18b, that is, the beams for CSI-RS transmission formable by the unavailable antenna unit 18b. When another available antenna unit 18b is added, the upper-layer processing unit 41 adds the beams for CSI-RS transmission formable by the added antenna unit 18b to the second list. The second list is held by the storage unit 12 in a similar manner to the first list described above. The beams registered in the second list are beams available for CSI-RS transmission. In the second list, all the beams available for CSI-RS transmission are registered.

In response to confirming that there is no change in the configuration of the antenna units 18b (step S41: No), the base station 1b checks whether feedback information indicating a beam measurement result has been received from the mobile station 2 (step S21). In response to confirming that feedback information has been received (step S21: Yes), the feedback information extraction unit 16 of the base station 1b extracts, from the reception signal received from the reception signal generation unit 17b, the feedback information included in the reception signal, and stores the feedback information in the storage unit 12 (step S22).

After executing step S22 or step S42, or in response to confirming that feedback information has not been received from the mobile station 2 (step S21: No), the upper-layer processing unit 41 of the base station 1b updates a list of candidate beams for CSI-RS transmission based on the feedback information, downlink scheduling information, and the like stored in the storage unit 12 (step S43). A list of candidate beams for CSI-RS transmission, or a third list, is held by the storage unit 12. For example, the upper-layer processing unit 41 identifies the direction in which the destination mobile station 2 of data exists based on feedback information and scheduling information, selects, from among the beams registered in the second list, narrow-range high-gain beams that are formed within a certain range including the identified direction, and updates the third list by adding the selected beams thereto.

Steps S23 to S28 following step S43 are similar to steps S23 to S28 in the flowchart illustrated in FIG. 4.

In step S23, the candidate beam grouping unit 11b groups the candidate beams for CSI-RS transmission based on an input signal from the upper-layer processing unit, and stores the grouping result in the storage unit 12. The candidate beam grouping unit 11b receives, for example, the arrangement information of the antenna units 18b, the position information of the mobile station 2, or the like from the upper-layer processing unit 41, and performs grouping based on the received information. The candidate beam grouping unit 11b performs grouping on the narrow-range high-gain beams registered in the third list. That is, in step S23, the candidate beam grouping unit 11b groups the narrow-range high-gain beams registered in the third list. The candidate beam grouping unit 11b may skip step S23 when grouping of candidate beams is unnecessary.

In step S24, the beam setting unit 13b selects a beam for CSI-RS transmission based on information stored in the storage unit 12, specifically, information indicating the direction of the beam used for transmitting the SSB or CSI-RS corresponding to the mobile station 2. If the base station 1b has not previously transmitted CSI-RS to the destination mobile station of CSI-RS, the base station 1b selects a beam for CSI-RS transmission based on information indicating the direction of the beam used for transmitting SSB, that is, the beam used at the time of SSB reception at the mobile station 2. For example, the base station 1b selects one of the beams that are formed within a certain range including the direction of the beam used at the time of SSB reception at the mobile station 2. If the base station 1b has previously transmitted CSI-RS to the destination mobile station of CSI-RS, the base station 1b selects a beam for CSI-RS transmission based on information indicating the direction of the beam used at the time of CSI-RS reception at the mobile station 2. For example, the base station 1b selects one of the beams that are formed within a certain range including the direction of the beam used at the time of the previous CSI-RS reception at the mobile station 2. The beam setting unit 13b may select a beam for CSI-RS transmission based on the direction of the beam used at the time of the previous SSB or CSI-RS transmission to the mobile station 2, the position information of the mobile station 2, or the like.

In step S26, the transmission signal generation unit 15b generates a CSI-RS including the beam information generated by the beam information generation unit 14 in step S25. After generating the CSI-RS, the transmission signal generation unit 15b generates a transmission signal including the CSI-RS, multiplies the generated transmission signal by the weight input from the weight generation unit 43, and outputs the transmission signal to the antenna mapping unit 44. The antenna mapping unit 44 outputs the transmission signal input from the transmission signal generation unit 15b to the antenna port unit 80 specified by the transmission control unit 42.

In step S27, the signal transmission unit 83 of the antenna port unit 80 that has received the signal output from the antenna mapping unit 44 transmits the CSI-RS by transmitting the received signal.

In step S28, the beam setting unit 13 checks whether the transmission of all CSI-RSs that need to be transmitted has been completed, and in response to confirming that the transmission has not been completed, executes steps S24 to S27 again. In response to the beam setting unit 13 determining that the transmission of all CSI-RSs that need to be transmitted has been completed, the base station 1 ends the procedure. When the transmission of CSI-RSs with every beam selectable in step S24 above is completed, the beam setting unit 13 determines that the transmission of all CSI-RSs that need to be transmitted has been completed.

As described above, the base station 1b according to the present embodiment monitors whether the configuration of the antenna units 18b has been changed, and in response to detecting a change in the configuration, that is, a change in the configuration of formable beams, performs beam grouping again. Therefore, even after the configuration of the antenna units 18b is changed, the mobile station 2 can select narrow-range high-gain beams for data transmission in consideration of grouping, and the base station 1 can acquire, for each group, candidate beams for data transmission corresponding to each mobile station 2.

### Fourth Embodiment.

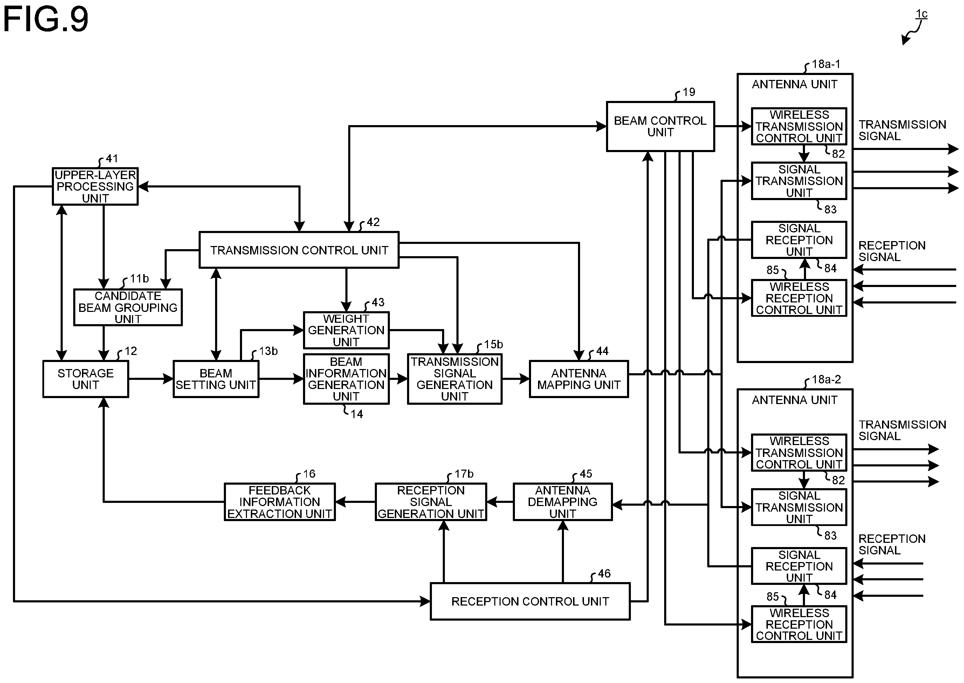

FIG. 9 is a diagram illustrating an exemplary configuration of a base station according to a fourth embodiment. A base station 1c according to the fourth embodiment is configured by replacing the antenna units 18b-1 and 18b-2 of the base station 1b according to the third embodiment with the antenna units 18a-1 and 18a-2 included in the base station 1a according to the second embodiment, and adding the beam control unit 19. The beam control unit 19 illustrated in FIG. 9 is the same as the beam control unit 19 included in the base station 1a according to the second embodiment.

In the base station 1c, as in the base station 1a according to the second embodiment, the single beam control unit 19 collectively controls the plurality of antenna units 18a. The overall operation of the base station 1c, for example, beam grouping operation, is similar to that of the base station 1b according to the third embodiment. The base station 1c is different from the base station 1b according to the third embodiment in the operations related to the beam control unit 19 and the antenna unit 18a described below.

The difference between the base station 1b according to the third embodiment and the base station 1c is similar to the difference between the base station 1 according to the first embodiment and the base station 1a according to the second embodiment: the single beam control unit 19 collectively controls the plurality of antenna units 18a. In the base station 1c, the beam control unit 19 outputs, to the transmission control unit 42, information about candidate beams such as the beam ID of a beam formable by each antenna unit 18a. The beam control unit 19 also receives, from the transmission control unit 42, selected beam information indicating the beam selected by the beam setting unit 13b, and performs beam control based on the received selected beam information. That is, in accordance with the selected beam information received from the transmission control unit 42, the beam control unit 19 outputs, to the wireless transmission control unit 82 and the wireless reception control unit 85 of each antenna unit 18a, information indicating the phase and amplitude weight of each element corresponding to the selected beam. The wireless transmission control unit 82 of each antenna unit 18a controls the timing at which the signal transmission unit 83 transmits a signal, the amplitude and phase of the signal that the signal transmission unit 83 transmits, and the like based on the above information input from the beam control unit 91. The wireless reception control unit 85 of each antenna unit 18a controls reception processing in the signal reception unit 84 based on the above information input from the beam control unit 19. Because other operations of the base station 1c are similar to those of the base station 1b according to the third embodiment, the description thereof will be omitted.

As described above, the base station 1c according to the present embodiment has a device configuration in which analog beam control of each of the plurality of antenna units 18a is collectively performed from outside the antenna units 18a, and can obtain a similar effect to the base station 1a according to the second embodiment, in which a similar device configuration is adopted. The base station 1c can also obtain a similar effect to the base station 1b according to the third embodiment.

### Fifth Embodiment.

Next, an example of the mobile station 2 constituting the wireless communication system 100 illustrated in FIG. 1 will be described. Although the following examples refer to communication with any of the base stations according to the first to fourth embodiments described above, the base stations capable of communicating with the mobile station 2 according to the present embodiment are not limited to the base stations according to the first to fourth embodiments.

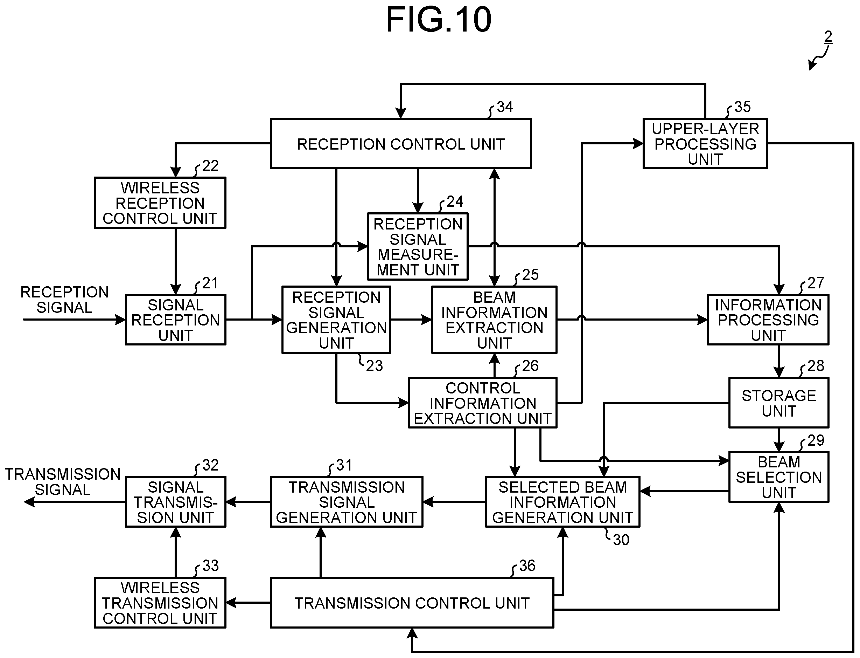

FIG. 10 is a diagram illustrating an exemplary configuration of the mobile station 2 according to a fifth embodiment. The mobile station 2 includes a signal reception unit 21, a wireless reception control unit 22, a reception signal generation unit 23, a reception signal measurement unit 24, a beam information extraction unit 25, a control information extraction unit 26, an information processing unit 27, a storage unit 28, a beam selection unit 29, a selected beam information generation unit 30, a transmission signal generation unit 31, a signal transmission unit 32, a wireless transmission control unit 33, a reception control unit 34, an upper-layer processing unit 35, and a transmission control unit 36. For the sake of simplicity, the exemplary configuration in FIG. 10 is based on the assumption that the number of antennas (not illustrated) included in the mobile station 2 is one. However, the number of antennas included in the mobile station 2 is not limited to one. The mobile station 2 may include a plurality of antennas or a plurality of array antennas. The mobile station 2 may include a spatial filter to receive signals coming from different directions with a plurality of beams simultaneously. The number of antennas included in the mobile station 2 does not affect the operation of a communication partner, i.e. a base station, that is, grouping of beams, beam selection in which feedback information from the mobile station 2 is considered, and the like.

The following description is based on the assumption that the communication partner of the mobile station 2 is the base station 1 according to the first embodiment.

The upper-layer processing unit 35 performs upper-layer processing such as RRC, and controls the reception control unit 34 and the transmission control unit 36. The upper-layer processing unit 35 also performs upper-layer processing, reception control, and transmission control using control information from the base station 1 extracted from reception signals by the control information extraction unit 26. An example of control information extracted by the control information extraction unit 26 is DCI transmitted through a physical downlink control channel (PDCCH). DCI includes uplink scheduling information, downlink scheduling information, and the like. According to these items of information, the upper-layer processing unit 35 controls the reception control unit 34 and the transmission control unit 36. Note that control information extracted by the control information extraction unit 26 is not limited to DCI.

The reception control unit 34 controls the wireless reception control unit 22, the reception signal generation unit 23, the reception signal measurement unit 24, and the beam information extraction unit 25 based on an input signal from the upper-layer processing unit 35.

The wireless reception control unit 22 controls reception processing in the signal reception unit 21 based on an input signal from the reception control unit 34.

The signal reception unit 21 is implemented by signal processing circuitry and an antenna, and receives a signal transmitted from a base station. That is, the antenna constituting the signal reception unit 21 receives a high-frequency wireless signal having a predetermined carrier frequency transmitted from the base station. Under the control of the wireless reception control unit 22, the signal processing circuitry constituting the signal reception unit 21 converts the wireless signal received by the antenna into a baseband reception signal, and outputs the reception signal to the reception signal measurement unit 24 and the reception signal generation unit 23.

The reception signal measurement unit 24 measures the quality of the reception signal received from the signal reception unit 21 based on an input signal from the reception control unit 34, and outputs the measurement result to the information processing unit 27. The reception signal measurement unit 24 may measure the received power of the reception signal, or may measure channel information using a known signal included in the reception signal. Examples of channel information include channel quality indicator (CQI), channel matrix rank indicator (RI), precoding matrix indicator (PMI), and the like.

Based on an input signal from the reception control unit 34, the reception signal generation unit 23 generates a reception signal by performing various processes such as Fourier transform on the signal received from the signal reception unit 21, and outputs the reception signal to the beam information extraction unit 25 and the control information extraction unit 26.

The control information extraction unit 26 extracts control information from the reception signal received from the reception signal generation unit 23, and outputs the control information to the upper-layer processing unit 35, the beam information extraction unit 25, the selected beam information generation unit 30, and the beam selection unit 29.

The beam information extraction unit 25 extracts beam information from the reception signal received from the reception signal generation unit 23, and outputs the beam information to the information processing unit 27. The beam information includes first information indicating the beam used for transmitting the signal received by the mobile station 2 and second information indicating the group to which the beam used for transmitting the signal received by the mobile station 2 belongs. Therefore, the beam information is information indicating the beam used for transmitting the signal received by the mobile station 2 and the group to which the beam belongs. The first information included in the beam information is the selected beam information described in the first embodiment, and the second information is the selected beam group information described in the first embodiment.

In a case where the received reception signal includes an SSB, the beam information extraction unit 25 demodulates the PBCH of the SSB to extract an SSB index. The beam information extraction unit 25 also acquires group information indicating the group to which the beam indicated by the extracted SSB index belongs. For example, in a case where the beam information generation unit 14 of the base station 1 has added a group ID to the PBCH as the group information, the beam information extraction unit 25 demodulates the PBCH to acquire the group ID. In a case where the beam information generation unit 14 of the base station 1 has transmitted, as the group information, transmission mode information related to the resource allocation corresponding to the group to which the beam belongs, the beam information extraction unit 25 outputs the acquired transmission mode information to the reception control unit 34, identifies the group based on the resource allocation result, and outputs the SSB index and group identification to the information processing unit 27. In this case, the reception control unit 34 analyzes the transmission mode information to obtain the resource allocation result, and outputs the resource allocation result to the beam information extraction unit 25.

In a case where the received reception signal includes a CSI-RS, the beam information extraction unit 25 extracts a CRI from the CSI-RS. The beam information extraction unit 25 also acquires group information indicating the group to which the beam indicated by the extracted CRI belongs. For example, in a case where the beam information generation unit 14 of the base station 1 has added group information to the CSI-RS, the beam information extraction unit 25 demodulates the CSI-RS to acquire the group information. In a case where the beam information generation unit 14 of the base station 1 has transmitted control information including the resource allocation result corresponding to the group to which the beam belongs, the beam information extraction unit 25 acquires, from the control information extraction unit 26, the resource allocation result corresponding to the group, and outputs the CRI and information on the group to which the beam indicated by the CRI belongs to the information processing unit 27.

The information processing unit 27 associates the information received from the reception signal measurement unit 24 and the information received from the beam information extraction unit 25, that is, associates the beam information received from the beam information extraction unit 25 and the measurement result received from the reception signal measurement unit 24, and stores the associated information in the storage unit 28.

The transmission control unit 36 controls the beam selection unit 29, the selected beam information generation unit 30, the transmission signal generation unit 31, and the wireless transmission control unit 33 based on an input signal from the upper-layer processing unit 35.

Under the control of the transmission control unit 36, the beam selection unit 29 refers to the beam information and measurement results held by the storage unit 28, and selects a beam from among the beams indicated by the beam information. The beam selection unit 29 selects, for example, the beam with the best measurement result from each group of beams. The beam selection unit 29 outputs the selection result to the selected beam information generation unit 30. The beam selection unit 29 may receive, from the control information extraction unit 26, the control information extracted from the reception signal by the control information extraction unit 26, and select a beam based on the received control information.

The selected beam information generation unit 30 generates feedback information and channel information according to the control information from the base station 1 acquired by the control information extraction unit 26, and outputs the feedback information and channel information to the transmission signal generation unit 31. The feedback information is an SSB/PBCH block resource indicator (SSBRI) or a CRI including the SSB index corresponding to the selected beam, which is the beam selected by the beam selection unit 29. The channel information indicates the reception quality of the signal transmitted by the base station 1 using the selected beam.

Under the control of the transmission control unit 36, the transmission signal generation unit 31 generates a baseband transmission signal including the information generated by the selected beam information generation unit 30, and outputs the baseband transmission signal to the signal transmission unit 32. The information generated by the selected beam information generation unit 30 is the SSBRI or CRI corresponding to the selected beam and the channel information described above.

The wireless transmission control unit 33 controls the timing at which the signal transmission unit 32 transmits a signal, the amplitude and phase of the signal that the signal transmission unit 32 transmits, and the like under the control of the transmission control unit 36.

In a similar manner to the signal reception unit 21, the signal transmission unit 32 is implemented by signal processing circuitry and an antenna, converts the baseband transmission signal received from the transmission signal generation unit 31 into a wireless signal, and transmits the wireless signal to the base station. That is, under the control of the wireless transmission control unit 33, the signal processing circuitry constituting the signal transmission unit 32 converts the baseband transmission signal received from the transmission signal generation unit 31 into a high-frequency wireless signal having a predetermined carrier frequency. The antenna constituting the signal transmission unit 32 transmits the wireless signal generated by the signal processing circuitry to the base station.

The storage unit 28 holds the beam information received from the information processing unit 27 and the measurement result associated with the beam information.

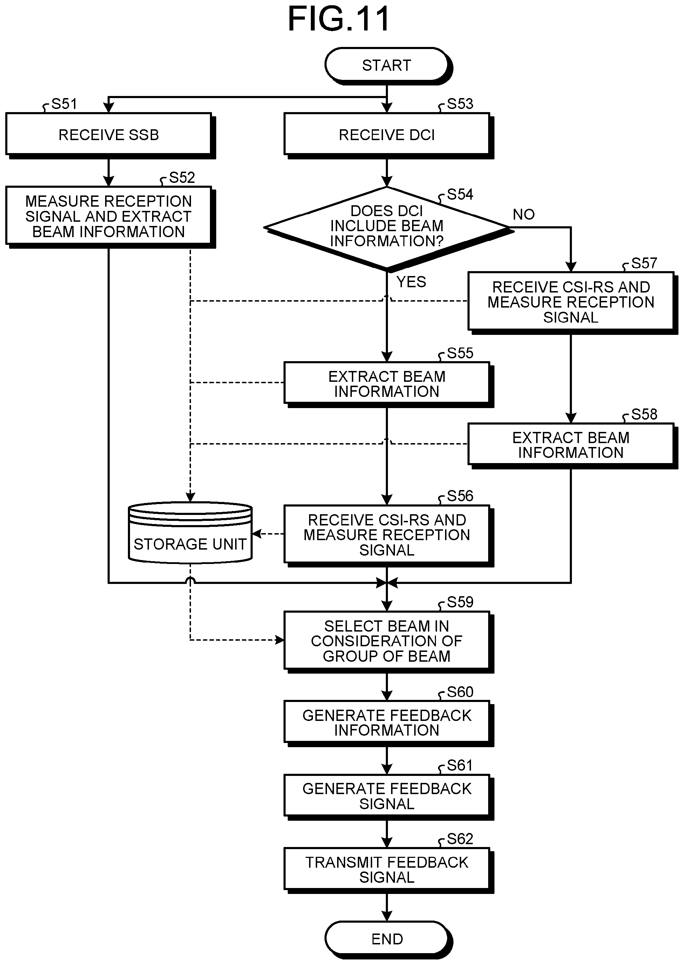

Next, the operation of the mobile station 2 according to the fifth embodiment will be described. FIG. 11 is a flowchart illustrating an example of how the mobile station 2 according to the fifth embodiment operates. The flowchart in FIG. 11 illustrates an example of how the mobile station 2 receives SSB or CSI-RS from the base station 1 after a cell search is completed, and transmits feedback information to the base station 1 accordingly.

As described in the first embodiment, the base station 1 periodically transmits SSBs. In addition, the base station 1 transmits downlink scheduling information through DCI to the mobile station 2 after a cell search is completed, and then periodically or aperiodically transmits CSI-RSs. Therefore, the mobile station 2 needs to receive SSBs periodically and also receive CSI-RSs periodically or aperiodically according to an instruction from the base station 1.

In the case of SSB transmission from the base station 1, the mobile station 2 receives SSB (step S51). Next, the mobile station 2 measures the reception signal and extracts beam information (step S52). The measurement of a reception signal is performed by the reception signal measurement unit 24. The reception signal measurement unit 24 measures, for example, reference signal received power (RSRP), which is the received power of the reference signal included in the reception signal. The extraction of beam information is performed by the beam information extraction unit 25. The measurement result of the reception signal by the reception signal measurement unit 24 and the beam information extracted by the beam information extraction unit 25 are stored in the storage unit 28 via the information processing unit 27.

In the case of CSI-RS transmission from the base station 1, the mobile station 2 receives DCI from the base station 1 (step S53). In the DCI reception process, the control information extraction unit 26 extracts control information such as scheduling information indicating downlink and uplink scheduling results. The beam information extraction unit 25 of the mobile station 2 then checks whether the received DCI includes beam information (step S54), and in response to confirming that the DCI includes beam information (step S54: Yes), extracts the beam information from the DCI (step S55). After executing step S55, the mobile station 2 receives CSI-RS according to the downlink scheduling indicated by the scheduling information extracted by the control information extraction unit 26, and measures the reception signal (step S56). The measurement of a reception signal is performed by the reception signal measurement unit 24. The reception signal measurement unit 24 measures RSRP, for example. The beam information extracted in step S55 and the measurement result of the reception signal in step S56 are input to the information processing unit 27, and the information processing unit 27 stores the input beam information and measurement result in the storage unit 28 in association with each other.

In response to confirming that the DCI received in step S53 does not include beam information (step S54: No), the mobile station 2 receives CSI-RS according to the downlink scheduling indicated by the scheduling information extracted by the control information extraction unit 26, and measures the reception signal (step S57). The measurement of a reception signal is performed by the reception signal measurement unit 24 in a similar manner to step S56 above, and the reception signal measurement unit 24 measures RSRP, for example. The mobile station 2 then extracts beam information from the CSI-RS (step S58). The extraction of beam information is performed by the beam information extraction unit 25. The measurement result of the reception signal in step S57 and the beam information extracted in step S58 are input to the information processing unit 27, and the information processing unit 27 stores the input beam information and measurement result in the storage unit 28 in association with each other.

After executing step S52, S56, or S58, the mobile station 2 selects a transmission beam in consideration of the group of the beam (step S59). The selection of a transmission beam is performed by the beam selection unit 29. Based on the beam information and the measurement result of the reception signal held by the storage unit 28, the beam selection unit 29 selects a beam in consideration of the group to which each beam indicated by the beam information belongs. Note that the mobile station 2 selects one beam from each of two different groups of beams, upon receiving a group-based beam reporting instruction from the base station 1.

Next, the mobile station 2 generates feedback information for the base station 1 (step S60). Feedback information is information indicating the selection result in step S59. The generation of feedback information is performed by the selected beam information generation unit 30. Feedback information may be any information from which the base station 1 can obtain the beam selected in step S59. Examples of feedback information include CRI, SSBRI, RI, PMI, RSRP, differential RSRP relative to the previous feedback information, and the like. Note that using control information from the base station 1 to the mobile station 2, the base station 1 may inform the mobile station 2 of the type of feedback information, that is, which of the various types of information including the above-mentioned exemplary items of feedback information is to be used to provide notification of the selection result. The mobile station 2 generates selected beam information including both of the two selected beams, upon receiving a group-based beam reporting instruction from the base station 1.

Next, the mobile station 2 generates a feedback signal, i.e. a transmission signal including the feedback information generated in step S60 (step S61), and transmits the feedback signal according to the uplink scheduling indicated by the scheduling information received from the base station 1 (step S62). The generation of a feedback signal in step S61 is performed by the transmission signal generation unit 31. The transmission signal generation unit 31 is a feedback signal generation unit that generates a signal for feeding back a selection result by the beam selection unit 29 to the base station 1. In step S62, the signal transmission unit 32 transmits the feedback signal.

As described above, the mobile station 2 according to the fifth embodiment receives beam information including information indicating the beam used for signal transmission and information on the group to which the beam used for signal transmission belongs. Then, based on the reception quality of the signal and the beam information, the mobile station 2 selects the beams to be used for communication in consideration of the group to which each beam used for transmitting the received signal belongs. Consequently, the mobile station 2 can select the beams to be used in consideration of grouping from among the beams grouped by the base station 1 in consideration of the installation position or the like of the array antenna constituting each of the plurality of antenna units. Therefore, the base station 1 and the mobile station 2 can reliably perform beam selection advantageous to transmission diversity.

### Sixth Embodiment.

Next, beam management in the wireless communication system 100 illustrated in FIG. 1 will be described, which is performed by the base station and the mobile station after a cell search is completed. The present embodiment describes a case where the base station 1 according to the first embodiment and the mobile station 2 according to the fifth embodiment constitute the wireless communication system 100, but the present embodiment can also apply to cases where the base stations according to the second to fourth embodiments constitute the wireless communication system 100.

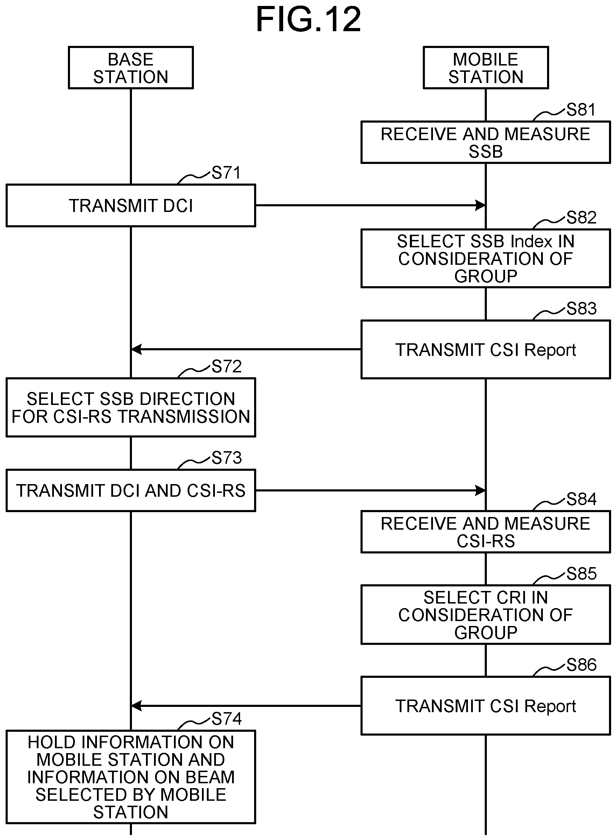

FIG. 12 is a sequence diagram illustrating an example of a beam management operation in the wireless communication system according to the sixth embodiment. FIG. 12 illustrates an example of how the base station 1 and the mobile station 2 operate after a cell search is completed. Note that the base station 1 is configured to transmit SSB and CSI-RS to the mobile station 2 in a manner that enables the mobile station 2 to distinguish between the groups to which beams belong. The base station 1 is also configured to perform grouping for each of a plurality of array antennas installed at different transmission/reception points, that is, perform grouping such that the beams formed by the same array antenna are classified into the same group. However, the method of grouping is not limited to this. Grouping may be performed using any other method.

At the time of the cell search, the mobile station 2 selects one SSB to perform random access, and completes the cell search. Therefore, immediately after the cell search, the base station 1 can only acquire the positional relationship in the transmission direction of the SSB used in the random access by the mobile station 2. That is, even when the base station 1 includes a plurality of array antennas installed at different positions, the base station 1 can only acquire the beam direction from one of the array antennas to the mobile station 2. Therefore, in order to benefit from transmission/reception diversity between the base station 1 and the mobile station 2 using a plurality of array antennas, the base station 1 needs to acquire the beam direction of the mobile station 2 from another array antenna (array antenna other than the array antenna that has transmitted the SSB selected during the random access). Below is an outline of the operation sequence for efficiently acquiring these beam directions for applying transmission diversity.

At the time of the cell search or after the cell search is completed, the mobile station 2 receives an SS burst set from the base station 1, and receives and measures SSB (step S81). The measurement of SSB means the measurement of the reception quality of a signal including SSB.

The base station 1 transmits DCI to the mobile station 2 through PDCCH (step S71), and notifies the mobile station 2 of uplink and downlink scheduling information for a CSI report. At this time, the base station 1 may give an instruction to feed back the measurement result of the SSB used in the random access together with an SSB index in a group different from that of the SSB used in the random access and the measurement result of the SSB. The base station 1 may also limit the number of groups to be fed back according to the mobile station that the base station 1 accommodates. For example, in a case where beams are divided into four groups, the base station 1 instructs the mobile station 2 to set the number of groups to be fed back to two. In this case, the mobile station 2 selects a beam from each of two target groups of the four groups, and feeds back the SSB indexes indicating the selected beams and the measurement results of the SSBs together with the measurement result of the SSB used in the random access. If there is no clear instruction from the base station 1, the mobile station 2 only needs to feed back at least information indicating the selected beams, that is, the SSB indexes, and may not necessarily feed back the measurement results of the SSBs.

In consideration of the group to which the beams used in the SSB transmission belong, the mobile station 2 selects SSB indexes, that is, SSBs corresponding to beams (step S82). At this time, the mobile station 2 receives and measures SSBs based on the control information received through the DCI and according to an instruction from the base station 1, if such exists. Then, the mobile station 2 selects the SSB indexes to be fed back in a CSI report. Unless instructed by the base station 1, the mobile station 2 selects, according to the communication request that is used by the application, the SSB used in the random access and SSBs corresponding to a plurality of groups different from that of the SSB used in the random access, and selects the SSB index corresponding to each of the selected SSBs.

After that, the mobile station 2 transmits, to the base station 1, a CSI report containing SSBRI including the SSB indexes of the SSBs selected in step S82 and the measurement results of the reception signals of the SSBs selected in step S82 according to the uplink scheduling specified by the DCI (step S83).

In response to receiving the CSI report from the mobile station 2, the base station 1 selects directions for CSI-RS transmission based on the SSBs indicated by the SSB indexes specified by the CSI report (step S72). Because SSBs are transmitted with wide-range low-gain beams, after the mobile station 2 feeds back the SSB indexes indicating the SSBs of different groups, the base station 1 discovers rough directions of the mobile station 2 from the array antennas set at a plurality of different positions. Based on these rough directions, the base station 1 selects narrow-range high-gain beams for CSI-RS transmission. For example, for each of the plurality of rough directions of the mobile station 2, the base station 1 selects a beam from among the narrow-range high-gain beams that are formed within a certain range including the rough direction.

After that, the base station 1 transmits DCI and CSI-RS to the mobile station 2 (step S73). Specifically, the base station 1 first transmits DCI to notify the mobile station 2 of downlink scheduling for CSI-RS transmission and uplink scheduling for transmitting feedback information on the CSI-RS transmission. At this time, the base station 1 may add, to the DCI, information on the measurement items to be fed back by the mobile station 2. Then, the base station 1 applies the narrow-range high-gain beams selected in step S72 to transmit CSI-RS according to the downlink scheduling provided to the mobile station 2 through the DCI.

The mobile station 2 receives the DCI and acquires scheduling information indicating the downlink scheduling related to CSI-RS transmission and the uplink scheduling related to CSI report transmission. The mobile station 2 receives and measures CSI-RS according to the downlink schedule indicated by the acquired scheduling information (step S84). The measurement of CSI-RS means the measurement of the reception quality of a signal including CSI-RS. Then, the mobile station 2 selects a CRI in consideration of the groups to which the narrow-range high-gain beams used in the CSI-RS transmission belong (step S85).

Next, the mobile station 2 transmits a CSI report including the CRI selected in step S85 to the base station 1 according to the uplink scheduling indicated by the acquired scheduling information (step S86). In a case where measurement items have been specified by the base station 1 through the DCI, the mobile station 2 adds the measurement results of the specified measurement items to the CSI report for feedback together with the CRI.

In response to receiving the CSI report from the mobile station 2, the base station 1 holds the information on the source mobile station 2 of the CSI report and the CRI included in the CSI report, that is, the information on the narrow-range high-gain beam selected by the mobile station 2 in step S85 (step S74). Consequently, the base station 1 can accurately detect the directions of the mobile station 2 from the array antennas installed at a plurality of different positions. Therefore, the base station 1 can apply transmission diversity in communication with the source mobile station 2 of the CSI report.

Although the operation sequence described with reference to FIG. 12 is supposed to occur immediately after a cell search, the operation sequence can also be applied to a case where the base station 1 only has the correspondence between one SSB and the mobile station 2 due to the movement of the mobile station 2, whereby it is possible to accurately detect the direction of the mobile station 2 from each of the array antennas installed at a plurality of different transmission/reception points.

The above operation sequence, which involves the grouping of candidate beams, enables the base station 1 to determine the directions of narrow-range high-gain beams for data transmission to the mobile station 2 from the array antennas installed at a plurality of different transmission/reception points, without performing a CSI-RS-based omnidirectional beam search from all the array antennas except the array antenna corresponding to the SSB used in the random access. Therefore, it is possible to reduce the processing load for selecting a beam for data transmission and radio resources required for selecting a beam for data transmission.

Next, a method in which a base station according to the present invention notifies a mobile station of beam groups, that is, a method in which a base station notifies a mobile station of a beam grouping result, will be described with reference to drawings. In the following description, no reference signs are allocated to the base stations and mobile stations.

### (First example of notification method)

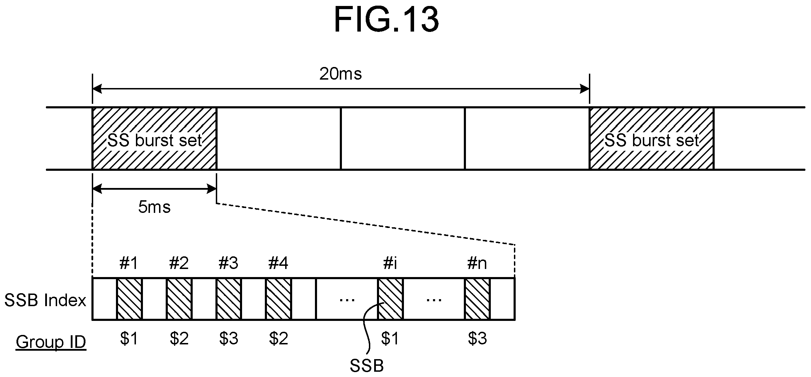

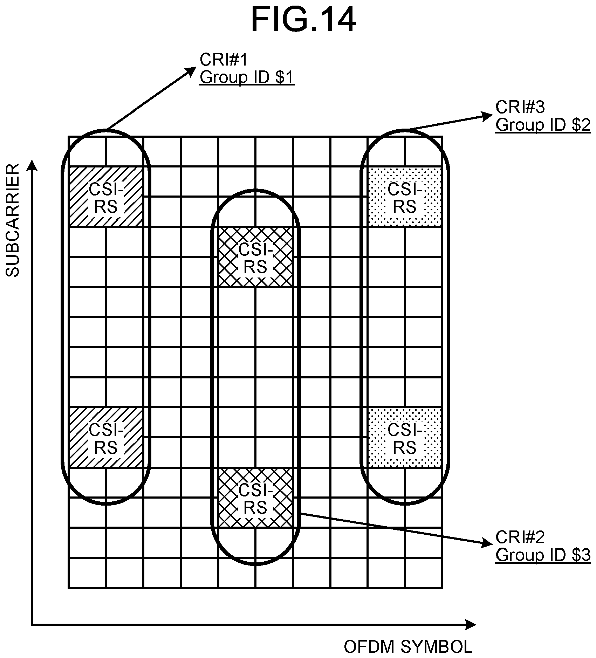

FIGS. 13 and 14 are diagrams for explaining a first example of a method in which a base station according to the present invention notifies a mobile station of a beam grouping result. FIGS. 13 and 14 each depict an example in which group IDs are added to reference signals for transmission.

In a wireless communication system conforming to 3GPP Release 15 (Rel. 15), a base station adds indexes to SSBs and CSI-RSs for transmission to a mobile station. For example, as illustrated in FIG. 13, the base station adds SSB indexes to SSBs for transmission. As illustrated in FIG. 14, the base station adds CRIs to CSI-RSs for transmission. This enables the mobile station to distinguish between the SSBs and CSI-RSs transmitted on beams formed with different weights. Note that the maximum number of CSI-RSs transmitted to one mobile station may be 64 or more.

The base station groups candidate beams, creates a group ID for each group of candidate beams, and transmits transmission signals including group IDs (corresponding to the "Group ID" illustrated in FIGS. 13 and 14), whereby the mobile station 2 can distinguish between the group IDs. For example, the base station may transmit an SSB in which PBCH includes a group ID, and the base station may transmit a CSI-RS in which CRI includes a group ID.

The group IDs created and transmitted in this manner can be demodulated by the mobile station using a conventional SSB index or CRI demodulation process.

### (Second example of notification method)

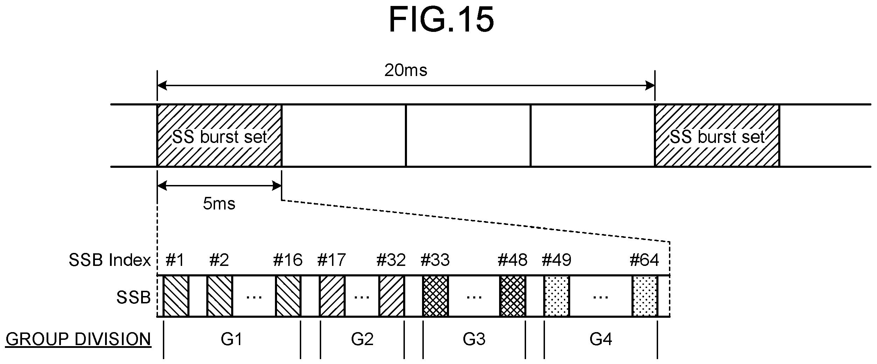

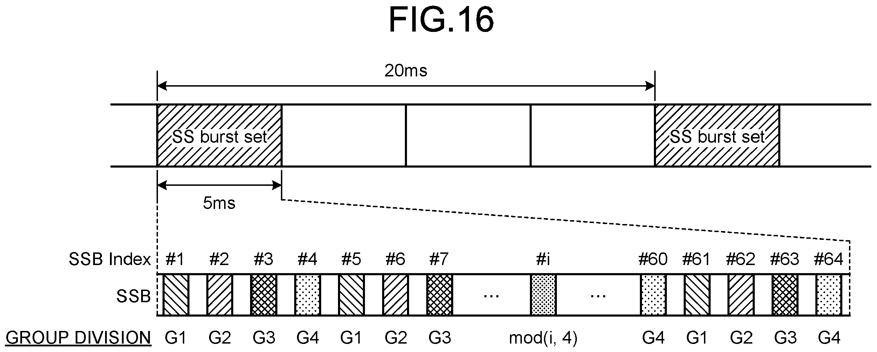

FIGS. 15 and 16 are diagrams for explaining a second example of a method in which a base station according to the present invention notifies a mobile station of a beam grouping result. FIGS. 15 and 16 each depict an example in which the base station provides notification of a candidate beam grouping result using SSB indexes.

FIGS. 15 and 16 represent exemplary cases where the base station divides 64 SSBs into four groups and notifies the mobile station of the group corresponding to each SSB using an SSB index. Note that the number of SSBs and the number of groups are not limited to these.

FIG. 15 illustrates an example in which SSB indexes #1 to #64 are divided into four, each containing 16 consecutive indexes. That is, the base station transmits SSBs by classifying the SSB indexes #1 to #16 as the group G1, the SSB indexes #17 to #32 as the group G2, the SSB indexes #33 to #48 as the group G3, and the SSB indexes #49 to #64 as the group G4. The base station notifies the mobile station in advance of control information indicating the SSB dividing method through DCI or the like, whereby the mobile station can discover, based on SSB indexes, which groups the SSBs belong to.

FIG. 16 illustrates an example in which the SSB indexes #1 to #64 are divided into four groups containing discontinuously distributed SSB indexes. In the case of the example illustrated in FIG. 16, the base station divides the SSB indexes #i into four groups by allocating the SSB indexes #i to groups indicated by mod (i, 4) using the mod function for remainder calculation. This enables distributed group allocation of SSBs within one SS burst set. In this case, similarly, the base station notifies the mobile station in advance of control information indicating the SSB dividing method through DCI or the like, whereby the mobile station can discover, based on SSB indexes, which groups the SSBs belong to.

The above-described methods of grouping SSBs and associating the grouping result with SSB indexes for transmission can be implemented simply by adding a mechanism that enables notification of the transmission mode and the number of groups using DCI to the standard 3GPP Rel. 15, and does not require changes to SSBs, which are synchronization signals with severe restrictions on the amount of information to be transmitted. In addition, the reception period of SSBs is similar to that in the standard 3GPP Rel. 15, and there is no deterioration in the followability to channel fluctuations in SSB-based beam selection.

### (Third example of notification method)

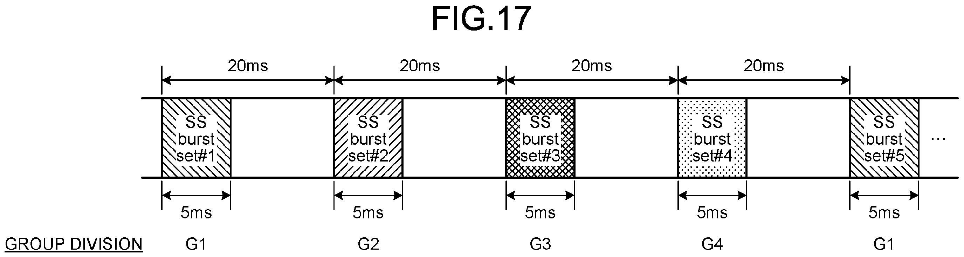

FIG. 17 is a diagram for explaining a third example of a method in which a base station according to the present invention notifies a mobile station of a beam grouping result. FIG. 17 depicts an example in which the base station provides notification of a candidate beam grouping result using SSB burst sets.

FIG. 17 represents an exemplary case where the base station divides candidate beams into four groups and notifies the mobile station of the group to which each SSB belongs using an SSB burst set. Note that the number of groups is not limited to this.

FIG. 17 illustrates an example in which the base station allocates the four groups of candidate beams one-to-one to consecutive SS burst sets #1 to #4 for transmission. That is, the base station repeatedly allocates the groups G1 to G4 to SS burst sets by classifying the SS burst set #1 as the group G1, the SS burst set #2 as the group G2, the SS burst set #3 as the group G3, the SS burst set #4 as the group G4, the SS burst set #5 as the group G1, and so on.

The base station notifies the mobile station in advance of control information indicating the method of allocating groups to SS burst sets through DCI or the like, whereby the mobile station can discover which groups the SS burst sets correspond to.

This notification method, in a similar manner to the above-mentioned methods of associating the grouping result with SSB indexes for transmission, can be implemented simply by adding a mechanism that enables notification of the transmission mode and the number of groups using DCI to the standard 3GPP Rel. 15, and does not require changes to SSBs. In addition, because all SSBs transmittable in a single SS burst set can be allocated to one group, the coverage of one group is equivalent to that defined by 3GPP Rel. 15, in which one base station includes one array antenna.

Next, the purposes, methods, and effects of beam grouping by a base station according to the present invention will be described with reference to drawings.

3GPP Rel. 15 and earlier releases mainly developed a configuration in which one base station includes one array antenna. 3GPP Rel. 16 has developed a configuration (referred to also as Multi-TRP/Panel) in which one base station includes one or more array antennas (see array antennas of 3GPP TR38.901 7.3 Antenna modeling) located at a plurality of transmission/reception points. The influence of this change on beam management for narrow-range high-gain beam selection for data transmission will be described from the viewpoint of transmission/reception diversity by Multi-TRP/Panel.

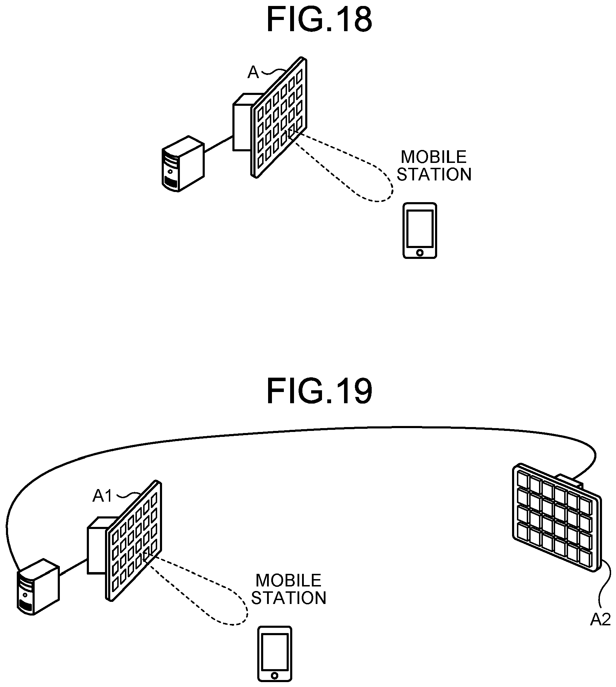

FIG. 18 is a diagram schematically illustrating an environment in which one base station includes one array antenna. FIG. 19 is a diagram schematically illustrating an environment in which one base station includes two array antennas. In the example illustrated in FIG. 18, only one array antenna A is connected to one base station. In the example illustrated in FIG. 19, two array antennas A1 and A2 are connected to one base station, and the array antennas A1 and A2 are installed in different places.

The base station periodically transmits SSBs by applying wide-range low-gain beams in time division. In order to perform a cell search, the mobile station receives such SSBs, selects one SSB, and starts random access. Therefore, after the cell search is completed, the base station finds that the mobile station is located in a rough direction (beam directions indicated by broken lines in FIGS. 18 and 19) associated with the wide-range low-gain beam applied to the SSB used in the random access.

In the case of the configuration illustrated in FIG. 18, after the cell search is completed, a rough direction of the mobile station from the one array antenna A can be acquired. By transmitting CSI-RSs in this direction using narrow-range high-gain beams, beam selection for efficient data transmission can be achieved.

On the other hand, in the case of the configuration illustrated in FIG. 19, a rough direction of the mobile station from one array antenna (array antenna A1 in FIG. 19) can be acquired after the cell search, but the direction of the mobile station from the other array antenna (array antenna A2 in FIG. 19) is unknown. Therefore, in order to reliably select a narrow-range high-gain beam for data transmission from the array antenna A2 other than the array antenna A1 that transmits the SSB selected by the mobile station in the random access, it is necessary to perform a CSI-RS-based omnidirectional beam search from the array antenna A2, which increases the processing load for selecting a beam for data transmission and increases the time required to complete the selection.

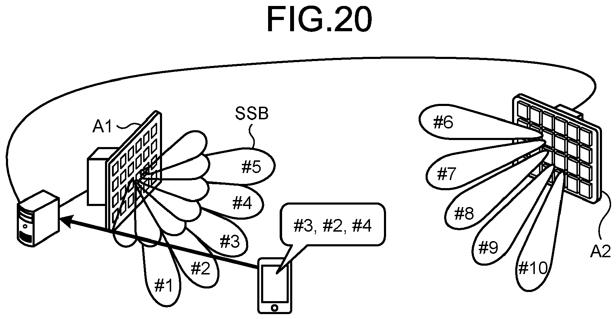

It is conceivable that the mobile station may feed back an SSB index in a CSI report immediately after the cell search. However, there is no guarantee that the mobile station reliably feeds back an SSB index indicating an SSB transmitted by an array antenna (array antenna A2 in the example of FIG. 19) different from the array antenna that transmits the SSB selected by the mobile station in the random access. As an example, suppose that, as illustrated in FIG. 20, the mobile station is located in the vicinity of the array antenna A1, and the array antenna A1 transmits five SSBs corresponding to the SSB indexes #1 to #5. In this case, the RSRP of SSB received by the mobile station through side lobes of a wide-range low-gain beam transmitted from the array antenna A1 may be higher than the RSRP of SSB received by the mobile station through a wide-range low-gain beam transmitted from the array antenna A2, which can cause the mobile station to select only the SSB transmitted from the array antenna A1 for SSB index feedback.

In order to overcome this uncertainty, it is effective to enable the mobile station to distinguish between the array antennas that transmit SSBs. That is, it is effective to construct a wireless communication system by combining the base station described in any of the first to fourth embodiments and the mobile station described in the fifth embodiment so that the base station and the mobile station operate according to the sequence described in the sixth embodiment (see FIG. 12). This enables the mobile station to distinguish between the array antennas that transmit SSBs, and as a result, to reliably feed back an SSB transmitted by an array antenna other than the array antenna that transmits the SSB used in the random access.

Then, in the rough directions of the mobile station fed back in this manner, the base station transmits CSI-RSs using narrow-range high-gain beams from the corresponding array antennas, which eliminates the need for an omnidirectional beam search. That is, the base station can transmit, to the mobile station, CSI-RSs sufficient for selecting a narrow-range high-gain beam for data transmission without performing an omnidirectional beam search using each array antenna other than the array antenna that transmits the SSB used in the random access. As a result, the processing load for selecting a beam for data transmission and the time required to complete the beam selection can be reduced.

However, in the process of receiving CSI-RSs and selecting narrow-range high-gain beams for data transmission, the mobile station may select CSI-RSs transmitted from the same array antenna, which results in communication with one array antenna and spoils the effect of transmission diversity. Therefore, in the case of CSI-RS transmission, the base station groups beam candidates for CSI-RS transmission and notifies the mobile station so that the mobile station can distinguish between the antenna units, as in the case of SSB transmission. This enables data transmission with transmission diversity by utilization of Multi-TRP/Panel.

As described above, the base station groups beam candidates for SSB transmission and transmits SSBs together with beam information including group information, and the mobile station feeds back SSBRI corresponding to SSBs of different groups, whereby the processing load and required time for beam selection can be reduced. In addition, the base station groups beam candidates for CSI-RS transmission and transmits CSI-RSs together with beam information including group information, and the mobile station feeds back CRI corresponding to CSI-RSs of different groups, whereby transmission diversity can be reliably utilized.

The above description has shown, based on the premise that two array antennas of the base station are installed at different transmission/reception points, that the above effects can be obtained by allocating different items of group information to the two array antennas as an appropriate way of grouping.

However, there are various use cases of Multi-TRP/Panel in 3GPP Rel. 16, including the above-mentioned distributed arrangement. Appropriate ways of grouping of candidate beams vary depending on the arrangement of transmission/reception points of a plurality of array antennas. Therefore, examples of grouping for typical arrangements will be described below with reference to drawings. For the sake of simplicity, the centralized arrangement described below includes two array antennas, but the number of antennas is not limited to two.

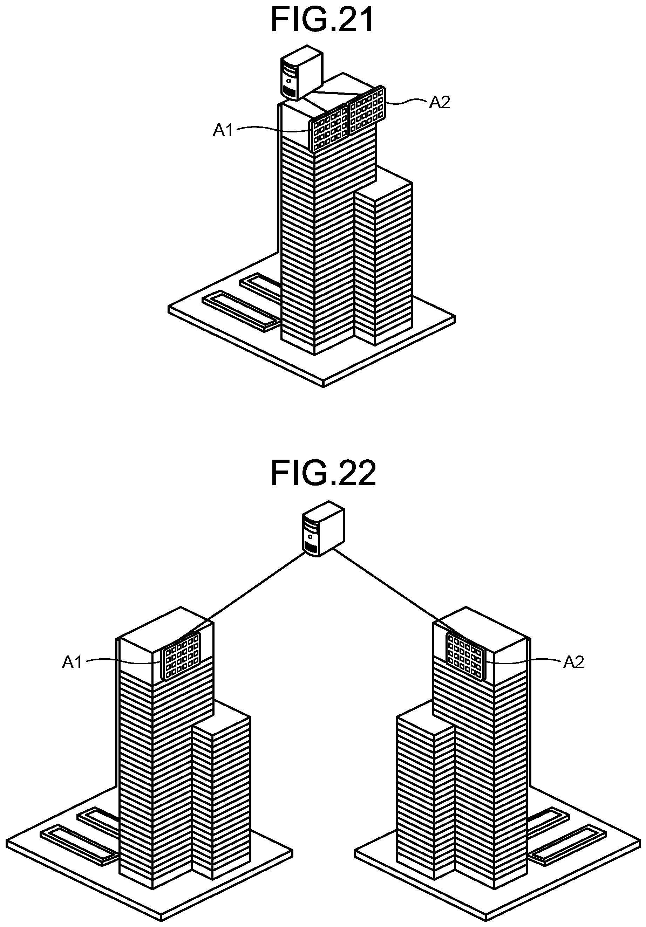

FIG. 21 is a diagram illustrating a first example of a method of installing the antennas of a base station according to the present invention. FIG. 21 illustrates an example in which the two array antennas A1 and A2 are centrally arranged side by side. In this typical centralized arrangement, a mobile station exists in the same direction from the two array antennas A1 and A2, and a propagation path #1 between the array antenna A1 and the antenna of the mobile station and a propagation path #2 between the array antenna A2 and the antenna of the mobile station have the same statistical properties (quasi co-location (QCL)). Parameters indicating the statistical properties of propagation paths include Doppler shift, Doppler spread, average delay, delay spread, and the like. In the case of multiple-input multiple-output (MIMO) transmission on these propagation paths #1 and #2, the channel correlation is high, the eigenvalue distribution of the channel matrix tends to degenerate, and only a limited diversity effect is obtained.

That is, in the centralized arrangement, the process of applying different groups to the QCL array antennas A1 and A2, allocating beam selection resources to the two groups, and selecting an appropriate beam does not lead to an expected diversity effect, but rather results in a waste of resources for beam selection. Therefore, in order to reduce the processing load for beam selection and not to try in vain to obtain a diversity effect, it is appropriate to allocate the same group information to the centralized array antennas A1 and A2. For example, when the difference between the direction of the array antenna A1 from the mobile station and the direction of the array antenna A2 from the mobile station is less than or equal to a predetermined value, the base station classifies the beams formed by the array antennas A1 and A2 into the same group. The base station may classify the beams formed by the array antennas A1 and A2 into the same group when the distance between the installation position of the array antenna A1 and the installation position of the array antenna A2 is less than or equal to a predetermined value.

However, QCL does not hold in a centralized arrangement if array antennas have different tilt angles, in which case the beams formed by these array antennas can be classified by array antenna into different groups.

FIG. 22 is a diagram illustrating a second example of a method of installing the antennas of a base station according to the present invention. FIG. 22 illustrates an example in which the two array antennas A1 and A2 are distributed in different places. In the distributed arrangement, because the array antennas are arranged in different places, QCL does not hold between the array antennas A1 and A2 for any service area. Therefore, by allocating different items of group information to the array antennas, acquiring a wide-range low-gain beam direction using SSB in each group, and then acquiring a narrow-range high-gain beam direction using CSI-RS in each group, the processing load for beam selection can be reduced and a diversity effect can be obtained. For example, the base station classifies the beams formed by the array antennas A1 and A2 into different groups when the distance between the installation position of the array antenna A1 and the installation position of the array antenna A2 is greater than a predetermined value.

In a typical existing system, the distance between a base station antenna and a mobile station antenna in the service area is large. Therefore, in the two cases illustrated in FIGS. 21 and 22, the grouping of array antennas is uniformly applied to the service area. However, the fifth generation mobile communication system (5G) is designed to utilize the millimeter wave band of about 24 GHz to 52 GHz (equivalent to FR2 defined in 3GPP), and the distance between the array antennas included in a base station and the antenna included in a mobile station in the service area can be short. In such a case, by appropriately setting the group allocation of array antennas according to the service area, grouping can be optimized from the viewpoint of reducing the processing load for beam selection and acquiring a diversity effect.

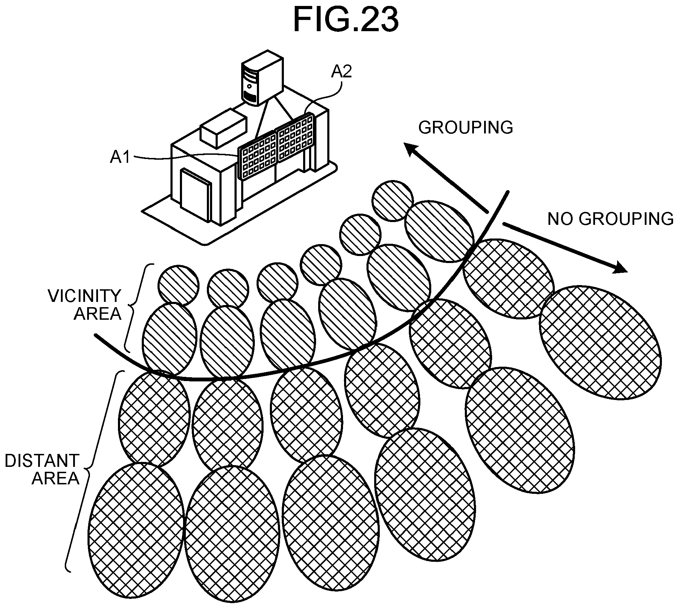

FIG. 23 is a diagram illustrating a third example of a method of installing the antennas of a base station according to the present invention. FIG. 23 illustrates an environment in which the two array antennas A1 and A2 are centrally arranged side by side and the array antennas are relatively close to the service area.

When viewed from a mobile station that exists in the vicinity area illustrated in FIG. 23, the directions of the array antennas A1 and A2 can be distinguished, and QCL does not hold between the array antennas. Allocating different items of group information to the array antennas A1 and A2 for this area is advantageous in achieving transmission with transmission diversity. On the other hand, when viewed from a mobile station that exists in the distant area illustrated in FIG. 23, the directions of the array antennas A1 and A2 are substantially the same, and QCL holds between the array antennas. Allocating the same group information to the array antennas A1 and A2 for this area is advantageous in preventing the application of MIMO transmission to highly correlated channels, as in the case of the first example illustrated in FIG. 21.

Whether the array antennas A1 and A2 should be classified into separate groups to obtain a diversity effect or the array antennas A1 and A2 should be classified into the same group to disable diversity may be determined in the base station by acquiring a parameter indicating the status between the array antenna A1 and the mobile station and a parameter indicating the status between the array antenna A2 and the mobile station, and setting a threshold for the difference between these parameters. For example, the base station communicates with the mobile station using each array antenna to acquire channel characteristics between each array antenna and the mobile station, and performs comparisons using each of a plurality of parameters indicating statistical properties to make a determination. The base station may use CQI, RI, PMI, and the like, which can be acquired in a CSI report, as the above parameters. Alternatively, the base station may acquire the position information of the mobile station and make a determination according to the distance from the array antennas of the base station. In this case, the base station defines an area where the distance from the array antennas is less than or equal to a predetermined threshold as a vicinity area, and an area where the distance from the array antennas is greater than the predetermined threshold as a distant area. Then, the base station allocates different group IDs to the array antenna A1 and the array antenna A2 for the beams formed toward the vicinity area, and allocates the same group ID to the array antenna A1 and the array antenna A2 for the beams formed toward the distant area.

Note that the mobile station may include a plurality of panels, that is, a plurality of array antennas, in which case the methods described in the present embodiment can also be used for uplink. For example, whether to group the array antennas may be determined at the time of transmitting a sounding reference signal (SRS) and a physical uplink shared channel (PUSCH). Information for determining whether to perform grouping at the mobile station is the position information of the base station and the mobile station, QCL information, and the like, and may be provided by the base station through an upper layer, MAC-CE, or DCI. Alternatively, the position information of the base station and the mobile station, QCL information, and the like provided through a physical downlink shared channel (PDSCH), which is downlink data, may be used for determination. Uplink grouping of array antennas is advantageous in improving the efficiency of frequency utilization in an environment that benefits from diversity. In an environment that does not benefit from diversity, uplink grouping is not performed, whereby the transmission power can be reduced or the amount of computation required for the mobile station to transmit signals can be reduced. Note that the base station may be informed of whether to perform grouping at the mobile station using uplink control information (UCI) or PUSCH. This is implemented, for example, using a flag that indicates the application of grouping with a flag value of "1" and indicates the non-application of grouping with a flag value of "0". Because the transmission of PUSCH includes a demodulation reference signal (DMRS), the grouping process may be applied to an uplink DMRS. The mobile station may not notify the base station; instead, the base station may perform blind decoding with reference to an uplink DMRS to determine whether the array antennas have been grouped at the mobile station.

By combining the three ways of grouping illustrated in FIGS. 21 to 23, grouping can be flexibly applied to various arrangements of Multi-TRP/Panel in 3GPP Rel. 16, whereby the cost for beam selection such as the processing load for beam selection and the required time for beam selection can be optimized.

Next, the hardware configurations of the base station and the mobile station described in each of the above embodiments will be described.

Among the components of the base station 1 according to the first embodiment, the candidate beam grouping unit 11, the storage unit 12, the beam setting unit 13, the beam information generation unit 14, the transmission signal generation unit 15, the feedback information extraction unit 16, the reception signal generation unit 17, the beam control unit 81, the wireless transmission control unit 82, and the wireless reception control unit 85 are implemented by processing circuitry.

The processing circuitry may be a control circuit including a processor, or may be dedicated hardware.

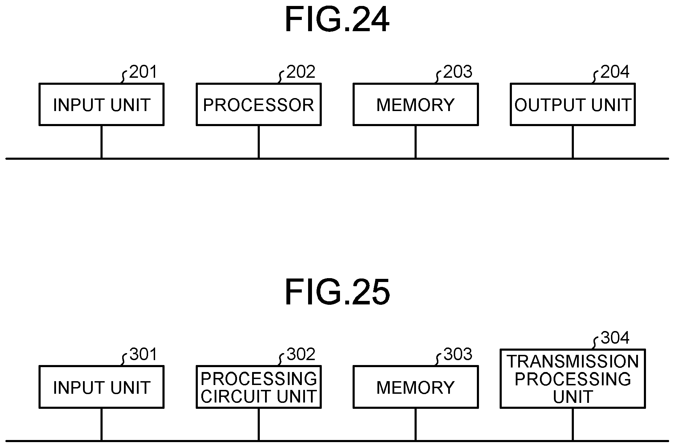

FIG. 24 is a diagram illustrating a first example of processing circuitry that implements each unit of a base station according to the present invention. FIG. 24 illustrates an exemplary configuration in which the processing circuitry is implemented by a control circuit including a processor. The processing circuitry illustrated in FIG. 24 includes an input unit 201 as a reception unit that receives data input from the outside, a processor 202, a memory 203, and an output unit 204 as a transmission unit that transmits data to the outside. The input unit 201 is an interface circuit that receives data input from the outside of the control circuit and provides data to the processor. The output unit 204 is an interface circuit that transmits data from the processor 202 or the memory 203 to the outside of the control circuit.

Among the components of the base station 1, the candidate beam grouping unit 11, the beam setting unit 13, the beam information generation unit 14, the transmission signal generation unit 15, the feedback information extraction unit 16, the reception signal generation unit 17, the beam control unit 81, the wireless transmission control unit 82, the signal transmission unit 83, the signal reception unit 84, and the wireless reception control unit 85 are implemented by the processor 202 reading and executing a program stored in the memory 203 for implementing each of these components. The storage unit 12 of the base station 1 is implemented by the memory 203. The memory 203 is also used as a temporary memory for each process executed by the processor 202. Among the components of the base station 1, the signal transmission unit 83 and the signal reception unit 84 are implemented by an array antenna and signal processing circuitry as described in the first embodiment.

The processor 202 is a central processing unit (CPU, also referred to as a central processing device, a processing device, a computation device, a microprocessor, a microcomputer, a processor, or a digital signal processor (DSP)). Examples of the memory 203 include a non-volatile or volatile semiconductor memory, a magnetic disk, a flexible disk, an optical disc, a compact disc, a mini disc, a digital versatile disk (DVD), and the like. Examples of the non-volatile or volatile semiconductor memory include a random access memory (RAM), a read only memory (ROM), a flash memory, an erasable programmable read only memory (EPROM), an electrically erasable programmable read only memory (EEPROM, registered trademark), and the like.

FIG. 25 is a diagram illustrating a second example of processing circuitry that implements each unit of a base station according to the present invention. FIG. 25 illustrates an exemplary configuration in which the processing circuitry is implemented by dedicated hardware. The processing circuitry illustrated in FIG. 25 includes an input unit 301, a processing circuit unit 302, a memory 303, and a transmission processing unit 304. The input unit 301 is a circuit similar to the input unit 201 illustrated in FIG. 24, and receives data input from the outside. The processing circuit unit 302 is a single circuit, a composite circuit, a programmed processor, a parallel programmed processor, an application specific integrated circuit (ASIC), a field programmable gate array (FPGA), or a combination thereof. The memory 303 is a memory similar to the memory 203 illustrated in FIG. 24. The transmission processing unit 304 is a transmission unit that transmits data to the outside.

In a case where the base station 1 is implemented by the processing circuitry illustrated in FIG. 25, the candidate beam grouping unit 11, the beam setting unit 13, the beam information generation unit 14, the transmission signal generation unit 15, the feedback information extraction unit 16, the reception signal generation unit 17, the beam control unit 81, the wireless transmission control unit 82, the signal transmission unit 83, the signal reception unit 84, and the wireless reception control unit 85 of the base station 1 are implemented by the processing circuit unit 302. The storage unit 12 of the base station 1 is implemented by the memory 303.

Note that some of the components of the base station 1 may be implemented by the processing circuitry illustrated in FIG. 24, and the remaining components may be implemented by the processing circuitry illustrated in FIG. 25.

The base stations according to the other embodiments may be implemented by the hardware similar to the above-described hardware for implementing the base station 1 according to the first embodiment. That is, among the components of the base station according to each of the second to fourth embodiments, the remaining components excluding the signal transmission unit 83 and the signal reception unit 84 can be implemented by the processing circuitry having the configuration illustrated in FIG. 24 or the processing circuitry having the configuration illustrated in FIG. 25. The signal transmission unit 83 and the signal reception unit 84 of the base station according to each of the second to fourth embodiments are implemented by an array antenna and signal processing circuitry.

The mobile station 2 according to the fifth embodiment can also be implemented by the processing circuitry having the configuration illustrated in FIG. 24 or the processing circuitry having the configuration illustrated in FIG. 25. That is, among the components of the mobile station 2, the wireless reception control unit 22, the reception signal generation unit 23, the reception signal measurement unit 24, the beam information extraction unit 25, the control information extraction unit 26, the information processing unit 27, the storage unit 28, the beam selection unit 29, the selected beam information generation unit 30, the transmission signal generation unit 31, the wireless transmission control unit 33, the reception control unit 34, the upper-layer processing unit 35, and the transmission control unit 36 can be implemented by the processing circuitry having the configuration illustrated in FIG. 24 or the processing circuitry having the configuration illustrated in FIG. 25. The signal reception unit 21 and the signal transmission unit 32 of the mobile station 2 are implemented by an antenna and signal processing circuitry.

### Seventh Embodiment.

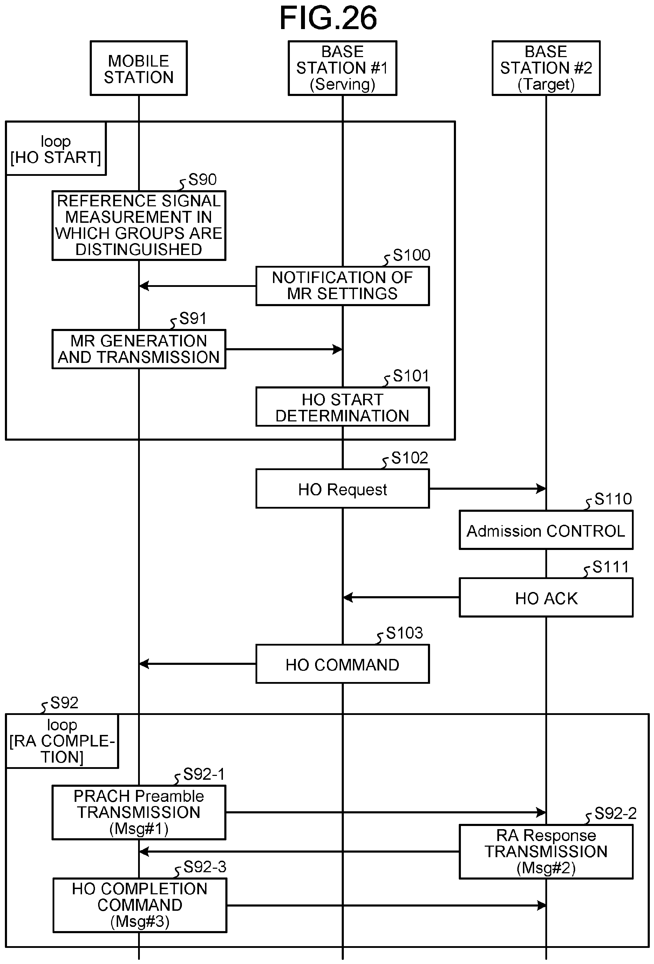

Next, a wireless communication system that performs a handover, which is a beam switch between array antennas of different base stations using group IDs, will be described. FIG. 26 is a sequence diagram illustrating an example of a handover operation in the wireless communication system according to a seventh embodiment. The present embodiment is based on the assumption that the wireless communication system includes a base station #1 and a base station #2, which are any of the base stations described in the first to fourth embodiments, and the mobile station described in the fifth embodiment. The following description refers to an exemplary case where the mobile station in this wireless communication system performs a handover from the currently connected base station #1 (serving cell) to the handover destination base station #2 (target cell). The base station #1 and the base station #2 are configured to transmit the identifiers of reference signals such as SSBs and CSI-RSs such that the mobile station can distinguish therebetween. The base station #1 is a first base station, and the base station #2 is a second base station. Note that the base stations may have the functions of gNodeB, eNodeB, or NodeB in 3GPP. As another example, in a car or train radio system, the base stations may function as servers that manage and process information.

Note that the identifier of a reference signal may be assigned a name that specifies the source panel, or may be assigned another name. That is, the base station #1 and the base station #2 may assign the identifiers of reference signals different names according to the groups to which beams for transmitting reference signals belong. Using identification (ID) as an example, the identifier of a reference signal may be assigned a panel ID or a group ID as its name. In the case of assigning a group ID, each group of beams may correspond to a panel. Alternatively, the identifier of a reference signal may be assigned a set ID or a resource set ID as its name. Note that a resource set is a set of multiple resources and is, for example, used for setting parameters of all the resources included in the resource set. For example, in a communication system, parameters related to a transmission source may be defined in a resource set, and information from the transmission source may be defined in a resource.

For example, when a resource set corresponds to a base station, a resource corresponds to a beam transmitted from the base station. In this case, for example, because each base station preferably has its own unified transmission period of beams or the like, a parameter related to the resource period is defined in the resource set. Parameters that are preferably set on a transmission-source basis can include the transmission period of beams, transmission power, generation information of a sequence for use in a reference signal, and the like. Generation information can be, for example, a parameter related to the initial value of the shift register that is used for sequence generation. In the resource set, it is also possible to define usage such as for sounding or for beam management. A typical resource parameter defines where to place a resource in the time or frequency domain. For example, the positions of the resources of a plurality of CSI-RSs are defined in different places, and the mobile station can obtain the position of each resource to receive the corresponding CSI-RS. In this way, by defining parameters shared by beams in a resource set and defining parameters that differ between beams in resources, the number of parameters can be reduced and the amount of control information can be minimized. Associating a resource set with a transmission source is advantageous in an environment including a plurality of base stations or transmission reception points (TRPs) because parameters related to beam transmission from each base station or TRP can be set for each base station or TRP. As another example, a panel installed on a base station or TRP can be regarded as a transmission source, and a resource set may be correlated with a panel. Note that information about parameters of a resource set may be provided from the base station to the mobile station using an upper layer such as RRC or a lower layer such as DCI or MAC-CE. Similarly, information about resource parameters may be provided from the base station to the mobile station using an upper layer such as RRC or using DCI, MAC-CE, or the like. In a case where resource parameters change dynamically, it is preferable to transmit information to the mobile station using lower-layer parameters. In this case, a set or a resource set corresponds to a panel. IDs are assigned numbers, and beam IDs, i.e. identification information of beams, can be simply combined with panel-related identifiers such that the mobile station can identify the source panels of reference signals. In this manner, beam IDs included in the SSBs and CSI-RSs transmitted from the base station #1 enable the mobile station to identify the received beams. Note that a beam ID is exemplified by the identifier of a resource described above. The identifier of a reference signal does not have to be correlated with a panel, and the identifier of a reference signal may be correlated with the group ID of a group to which a plurality of beams belong. Here, the term "correlated" means that the identifier of a reference signal is associated with a group ID. The present embodiment describes a method for enabling the mobile station to distinguish between the source panels of SSBs and CSI-RSs using a plurality of panels, which is only an example. It is also possible to replace the panels with the groups to which beams belong so as to enable the mobile station to distinguish between the groups of the transmission beams of SSBs and CSI-RSs. The following description is based on the premise that the SSBs and CSI-RSs transmitted from the same panel belong to the same group. Note that a group ID is exemplified by the identifier of a resource set described above. As an example, one base station or one TRP is associated with one group.

In addition, the base station #1 and the base station #2 are synchronously deployed, that is, synchronized, and transmit SS burst sets within the same time section. The mobile station can distinguish between the SSBs received from the base station #1 and the SSBs received from the base station #2 by demodulating the SSBs. As an example, by combining a primary synchronization signal (PSS) and a secondary synchronization signal (SSS), the physical cell ID of each base station can be identified.

Hereinafter, the handover operation illustrated in FIG. 26 will be described. The mobile station currently connected to the base station #1 performs reference signal measurement in which groups are distinguished (step S90). Specifically, in response to receiving a reference signal, the mobile station identifies the group to which the reference signal belongs, and measures the reception quality of the reference signal. The measurement of reception quality may or may not be performed each time a reference signal is received. The mobile station performs the measurement of reception quality periodically or aperiodically, and holds measurement results. Here, reference signals such as SSBs and CSI-RSs are known sequences that are transmitted by the base station #1 and the base station #2, and the mobile station is notified of the resource allocation thereof in advance through PDCCH, PDSCH, PBCH, or the like. Alternatively, the mobile station may be notified of the resource allocation of reference signals through a physical sidelink control channel (PSCCH), a physical sidelink shared channel (PSSCH), or the like that is used for communication between terminals. A terminal corresponds to a mobile station.

Next, the base station #1 notifies the mobile station of measurement report (MR) settings (step S100). Note that the base station #1 may notify the mobile station of MR settings using RRC configuration parameters which are upper-layer parameters. The base station #1 can change one or more MR settings to cause the mobile station to set specific measurement information in a specified MR. For example, the base station #1 can notify the mobile station of MR settings specifying that MR should contain information on the reception status of signals from one or more adjacent cells for handover start determination. The base station #1 may also specify the number of groups to which the measurement results to be included in MR belong, the method of averaging measurement results, and the like. Here, reception status information is one or more of the indexes corresponding to channel status information such as RSRP, RSRQ, SSB index, physical cell ID, LI, RI, PMI, CQI, CRI, and SSBRI.

In step S100, the base station #1 may refer to MRs previously reported by the mobile station, and in response to determining that the reception status of each of the reference signals corresponding to one or more group IDs has fallen below a threshold "a" or exceeded a threshold "b", the base station #1 may notify the mobile station of MR settings specifying that MR should contain information on the reception status of one or more adjacent cells. That is, upon detecting that the quality of communication with the mobile station has deteriorated, the base station #1 instructs the mobile station to report the communication quality of one or more adjacent cells. Consequently, the base station #1 evaluates the communication quality of adjacent cells with MR for reference signals belonging to a specific group and MR for reference signals belonging to a plurality of other groups, instead of evaluating the communication quality of cells only with MR for reference signals belonging to a specific group. Therefore, the handover destination cell can be selected in consideration of more accurate cell communication quality. The base station #1 may notify the mobile station of MR settings specifying that MR should contain information on the reception status of one or more adjacent cells periodically.

Based on the MR settings provided by the base station #1 in step S100, the mobile station generates an MR in which measurement results in step S90 are set, and transmits the MR to the base station #1 (step S91). Generally, the mobile station sets, in MR, the time-domain average of measurement results in step S90, but may individually compute the ensemble mean of measurement results with the same group ID and set each ensemble mean in MR. Consequently, the average reception status of reference signals of each group can be transmitted to the base station #1. Note that the mobile station may use the averaging method specified by the base station #1.

In response to being notified in step S100 of MR settings specifying that MR should contain information on the reception status of an adjacent cell, the mobile station sets, in MR in step S91, measurement results of reference signals from a base station other than the base station #1 from among the measurement results in step S90. At this time, the mobile station selects the measurement results to be set in MR by distinguishing between the groups to which the reference signals belong. Note that the mobile station may select one or more base stations (non-serving cells), other than the base station #1, having a good measurement result of reference signals, and set the measurement results of reference signals from the selected base station in MR. In addition, the mobile station may perform comparison by dividing the measurement results of reference signals from each base station by group, select one or more good measurement results from among the measurement results belonging to the top n groups with better measurement results, and set the selected measurement result in MR. The mobile station may be notified of the number of base stations as non-serving cells using an RRC configuration parameter, in which case the mobile station sets, in MR, measurement results the number of which is in accordance with the specified value. For example, in a case where the value specified by the RRC configuration parameter is "two", the mobile station sets measurement results of reference signals from two base stations other than the base station #1 in MR. In addition, the mobile station selects measurement results belonging to at least m different groups and sets the selected measurement results in MR. In the case of this operation, in which the mobile station sets measurement results of reference signals from the base station #1 and base stations other than the base station #1 in MR, the base stations other than the base station #1 are included in the candidates for the handover destination.

Here, the number of groups "n" and "m" may be provided by the base station #1 to the mobile station, or may be determined by the mobile station based on measurement results in step S90. An exemplary method for the mobile station to determine the number of groups "n" and "m" can include comparing the best measurement results of different groups to rank the groups, and counting the number of groups in which a relative value to the measurement result of the best group is less than or equal to a predetermined threshold.

On the other hand, in response to being notified in step S100 of MR settings specifying that MR should only contain information on the reception status of the base station #1, the mobile station sets, in MR in step S91, measurement results of reference signals from the base station #1 from among the measurement results in step S90. At this time, the mobile station selects one or more measurement results to be set in MR by distinguishing between the groups to which the reference signals belong. Here, the number of groups "m" of the measurement results to be set in MR may be provided by the base station #1, or may be determined by the mobile station based on measurement results in step S90. For example, in the case of m=2, the mobile station sets measurement results of reference signals belonging to the first group and measurement results of reference signals belonging to the second group different from the first group in MR for transmission. In this case, only the measurement results related to the base station #1 are included in the MR. An exemplary method for the mobile station to determine the number of groups "m" is similar to the method described in the previous paragraph, that is, the method for the mobile station to determine the number of groups "m" after being notified in step S100 of MR settings specifying that MR should contain information on the reception status of an adjacent cell.

In response to receiving the MR transmitted from the mobile station in step S91, the base station #1 makes a handover start determination based on the measurement results set in the MR (step S101). Note that handover start determination may be performed with reference to the measurement results acquired through previously received MRs. Handover start determination can be exemplified as follows.
(Example 1) When the reception status of reference signals of one or more groups transmitted by the base station #1 becomes worse than a certain threshold, the base station #1 determines to start a handover.
(Example 2) When the reception status of reference signals of one or more groups transmitted by the base station #1 becomes better than a certain threshold, the base station #1 determines to start a handover.
(Example 3) When the reception status of reference signals of one or more groups transmitted in an adjacent cell becomes worse than the reception status of reference signals of one or more groups transmitted by the base station #1, the base station #1 determines to start a handover.
(Example 4) When the reception status of reference signals of one or more groups transmitted by the base station #1 becomes worse than a first threshold, and the reception status of reference signals of one or more groups transmitted in an adjacent cell becomes better than a second threshold, the base station #1 determines to start a handover.

Note that the number of groups to be used for handover start determination may be determined based on the redundancy required for handover.

In step S101, whether to make a handover start determination based on the reception status of reference signals of one group or on the reception status of reference signals of a plurality of groups may be determined using rank information of transmission lines to a base station as a candidate for the handover destination, or may be determined based on temporal fluctuations in the reception status reported by MR. That is, when the reception status of reference signals is fluctuating moderately, the base station #1 may determine that changes in transmission lines are relatively slow, and make a handover start determination using only the reception status of reference signals of one group that is the best reception status. In this case, communication resources required for handover can be reduced. On the other hand, when the reception status of reference signals is fluctuating significantly, the base station #1 may determine that changes in transmission lines are relatively fast, and make a handover start determination using the reception status of reference signals of a plurality of groups with better reception status. In this case, the diversity of a plurality of branches can be applied to the handover, and the success rate of the handover can be improved by the diversity effect.

An example of a method in which the base station #1 selects the handover destination base station after determining to start a handover will be described. For example, the base station #1 selects the top L groups with better measurement results of reference signals from other base stations as candidates for the handover destination, compares the measurement results of the L groups, and selects the base station with the best reception status. The number of groups "L" may be determined based on temporal fluctuations in measurement results, or by counting, as selection candidates, the number of groups in which a relative value to the best reception status is less than or equal to a predetermined threshold. Further, the number of groups "L" may be determined based on the array antenna arrangement and the number of array antennas in adjacent cells.

Note that the base station #1 and the mobile station repeat steps S90 and S91 and steps S100 and S101 until the base station #1 determines to start a handover in step S101, that is, until the base station #1 confirms the necessity of a handover. The repetition period of each step can be set freely.

The following description is based on the assumption that the base station #1 determines to start a handover and selects the base station #2 as the handover destination base station in step S101.

In response to determining to start a handover in step S101, the base station #1 transmits a handover request (HO request) to the base station #2, which is the handover destination selected in step S101 (step S102). Note that the handover destination base station may be referred to as the target cell. In step S102, based on the measurement results of reference signals from the handover destination base station #2 among the measurement results acquired from the mobile station, the base station #1 may notify the base station #2 of information on the group to which the beam on which a reference signal is received by the mobile station from the base station #2 belongs, using one or more of SSB index, SSBRI, and CRI. Consequently, the redundancy of the directions of beams belonging to a plurality of different groups can be ensured for the initial access of the mobile station to the base station #2 during the handover, and the success rate of the initial access can be improved.

In response to receiving the handover request from the base station #1, the base station #2 performs admission control for handover (step S110), and transmits a handover ACK (HO ACK) to the base station #1 (step S111). Through the transmission of the handover ACK from the base station #2, a radio resource control (RRC) configuration is provided to the base station #1. The base station #2 may acquire information on the group to which a beam belongs through the handover request received in step S102, in which case, based on the acquired information, the base station #2 may provide the RRC configuration and notification of the resource allocation and preamble ID for the random access to be performed in step S92 described later. The base station #2 may acquire information on a plurality of groups to which beams belong, in which case the base station #2 may assign one or more preamble IDs to the plurality of groups.

In response to receiving the handover ACK in step Sill, the base station #1 transmits a handover command (HO command) to the mobile station (step S103) to provide the RRC configuration and information necessary for access to the base station #2. Note that the handover command may contain, as information necessary for access, information on one or more beams to be used by the mobile station for random access, which is initial access to the base station #2. Information on a beam is, for example, a beam ID. Information on one or more beams to be used for random access may be provided by any type of signaling other than the handover command. The base station #1 uses, for example, PBCH, PDSCH, PDCCH, PSSCH, PSCCH, or the like to notify the mobile station of information on the beam to be used for random access to the base station #2.

In response to receiving the handover command, the mobile station performs random access (RA) to the base station #2 using the RRC configuration and information necessary for access to the base station #2 provided through the handover command, and completes the handover (step S92). Specifically, the mobile station first transmits a physical random access channel (PRACH) preamble (Msg #1) (step S92-1). In response to receiving the Msg #1, the base station #2 transmits an RA response (Msg #2) to the mobile station (step S92-2). In response to receiving the Msg #2, the mobile station transmits a handover (HO) completion command (Msg #3) to end the handover (step S92-3) .

The procedure in which the mobile station accesses the base station #2 during a handover, that is, the procedure in steps S92-1 and S92-2 described above, is equivalent to the procedure for random access during a cell search. However, if the handover command received from the base station #1 contains non-contention-based random access (RA) information and the corresponding information on one or more beams, the mobile station uses the resources and preamble sequences specified by these items of information to perform random access to the base station #2. That is, the mobile station uses the specified resources to transmit the specified preamble sequences in step S92-1. The mobile station may acquire information on one or more beams to be used for random access through any type of signaling other than the handover command, in which case the mobile station may perform random access based on the acquired information. The mobile station may acquire information on a plurality of beams to be used for random access, in which case the mobile station may sequentially attempt random access for each of the plurality of beams indicated by the acquired information. If the handover command does not contain information about a beam, the mobile station may use information about the base station #2 acquired through the execution of step S90 above, specifically, information on the beams on which reference signals are received from the base station #2, information on the groups to which beams belong, the reception status of reference signals from the base station #2, and the like, to sequentially perform random access for each of a plurality of beams. Alternatively, the mobile station may execute a process similar to step S90 again to acquire necessary information, and perform random access.

Through the above sequence, the mobile station completes the handover from the base station #1 to the base station #2. If the random access fails, the mobile station attempts random access again within a predetermined limit. For example, after the random access fails, the mobile station repeatedly attempts random access until a predetermined period of time elapses from the reception of the handover command. The mobile station may repeatedly attempt random access as long as the received power (RSRP) of reference signals transmitted on the random access beam is higher than or equal to a specified threshold.

In steps S102 to S92-3 described above, the base station #1 signals information on a plurality of beams at a time to notify the mobile station, and the mobile station performs random access according to the received information. Alternatively, in steps S102 to S92-3, the base station #1 and the mobile station may repeat, until random access success, a series of operations in which the base station #1 signals information on a fixed number of beams at a time to notify the mobile station and the mobile station attempts random access according to the received information. In this case, the base station #1 signals information on at least one beam at a time.

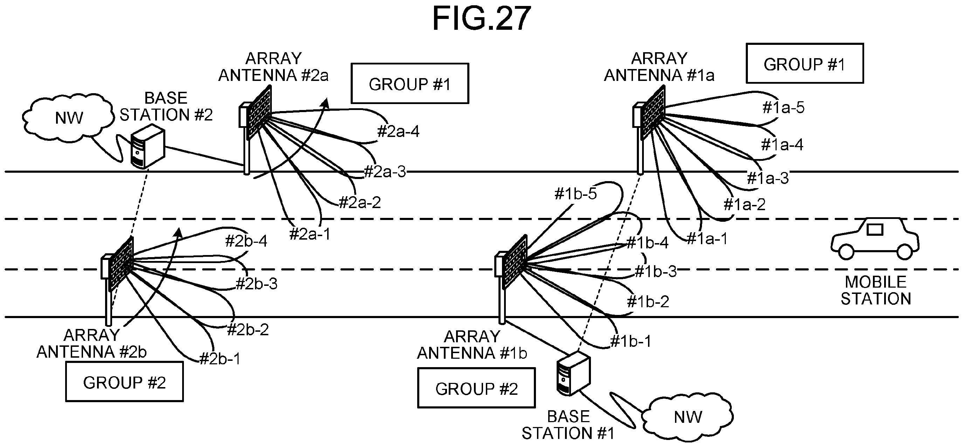

FIG. 27 is a diagram for explaining a specific example of a handover executed in the wireless communication system according to the seventh embodiment. FIG. 27 illustrates a specific example of a handover in an expressway environment. Handover and its effects will be described with reference to FIG. 27. In the example represented in FIG. 27, a handover is performed by a car serving as a mobile station in an environment in which the array antennas of the base station #1 are arranged on opposite sides of a road, and so are the array antennas of the base station #2. However, the number and arrangement of array antennas of base stations and the type of mobile station are not limited to these.

The base station #1 includes an array antenna #1a and an array antenna #1b distributed on opposite sides of the road. A group #1 is allocated to the array antenna #1a and a group #2 is allocated to the array antenna #1b. Similarly, the base station #2 includes an array antenna #2a and an array antenna #2b distributed on opposite sides of the road. The group #1 is allocated to the array antenna #2a and the group #2 is allocated to the array antenna #2b. The base station #1 and the base station #2 are synchronously deployed, and transmit SSBs in time division with wide-range beams in different directions within the same SS burst set time section. That is, within the SS burst set time section, the base station #1 transmits all of SSBs #1a-1 to #1a-5 in time division from the array antenna #1a, and transmits all of SSBs #lb-1 to #1b-5 in time division from the array antenna #1b. Within the same time section, the base station #2 transmits all of SSBs #2a-1 to #2a-4 in time division from the array antenna #2a, and transmits all of SSBs #2b-1 to #2b-4 in time division from the array antenna #2b. The mobile station can distinguish between the base station #1 and the base station #2 using the physical cell IDs obtained by demodulating the SSBs. The mobile station can also distinguish between the array antennas of the same base station using the group IDs of the SSBs.

The mobile station is currently connected to the base station #1, traveling on the road, and performing a handover to the base station #2. In a real environment, there are other adjacent cells different from the adjacent cell implemented by the base station #2, but for the sake of simplicity, the following description focuses on the processing for the base station #2. The base station #1 notifies the mobile station of reference signal scheduling information indicating when the base station #2 transmits reference signals, PRACH preamble resource allocation information required for random access to the base station #2, information on beams, and the like. Notification of these items of information (hereinafter may be referred to as random-access-related information) is provided using the PBCH, PDCCH, or PDSCH of the serving cell. Alternatively, notification may be provided using PSCCH or PSSCH for a peripheral mobile station. In order to reduce overhead, the base station #1 may provide notification of the above random-access-related information such as reference signal scheduling information only with the transmission beam of the serving cell corresponding to the overlap between the service areas of the serving cell and the target cell.

The mobile station measures the reception status of each reference signal transmitted by the base station #2, sets some or all of the measurement results in MR, and transmits the MR to the base station #1. At this time, the mobile station distinguishes between the groups of the received reference signals, that is, the source array antennas of the reference signals, and sets at least one measurement result of a reference signal transmitted from each array antenna in the MR. In the case of the example illustrated in FIG. 27, the mobile station sets, in the MR, at least one of the measurement results of the reference signals transmitted from the array antenna #2a and at least one of the measurement results of the reference signals transmitted from the array antenna #2b. For example, the mobile station sets, in the MR, the measurement result of the reference signal corresponding to the SSB #2a-3 and the measurement result of the reference signal corresponding to the SSB #2b-3 for reporting to the base station #1. In this case, when starting a handover, the base station #1 determines that the mobile station and the base station #2 can perform initial access using the array antenna #2a correlated with the SSB #2a-3 (group #1) and the array antenna #2b correlated with the SSB #2b-3 (group #2), and performs handover processing. That is, the base station #2 notifies the mobile station of non-contention-based RA resource scheduling results and preamble IDs for the SSB #2a-3 and the SSB #2b-3. Upon receiving this notification, the mobile station transmits the PRACH preambles generated with the provided preamble IDs in the directions corresponding to the SSB #2a-3 and the SSB #2b-3 to attempt random access. Note that the "non-contention-based RA resource scheduling results" correspond to the above "PRACH preamble resource allocation information required for random access".

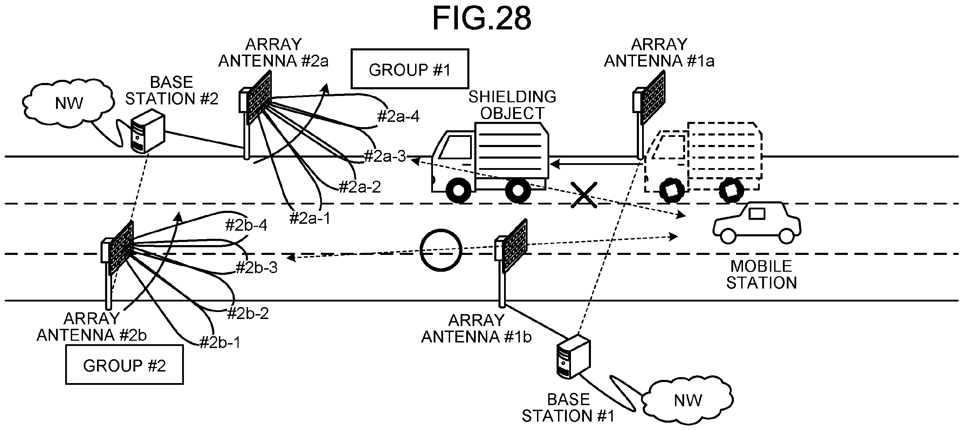

Consequently, in the event that the line of sight of one beam (transmission beam of SSB #2a-3) is shielded by a shielding object as illustrated in FIG. 28, for example, between step S91 (MR creation and transmission) and step S92-1 (PRACH preamble transmission) above, random access can be performed using a beam correlated with another array antenna #2b (transmission beam of SSB #2b-3). Therefore, redundancy can be ensured during the handover, and the success rate of the handover can be improved, or the communication interruption time associated with the failure of the first random access can be reduced.

Note that increased redundancy can increase overhead. Therefore, the base station #1 may determine the redundancy according to the fluctuation rate of reception status indicated by measurement results reported by MR. Specifically, in an environment with a relatively small fluctuation rate of transmission lines, such as in the city center, large redundancy is not necessarily effective, so the base station #1 may instruct the mobile station to perform random access using a smaller number of groups than the number of groups reported by MR.

After the random access is completed, the mobile station and the base station #2 perform steps S73 to S74 of FIG. 12 described in the sixth embodiment for the plurality of rough directions corresponding to the SSBs used for ensuring the redundancy of the random access, whereby radio resources required for beam selection for post-handover data transmission between the base station #2 and the mobile station can be reduced.

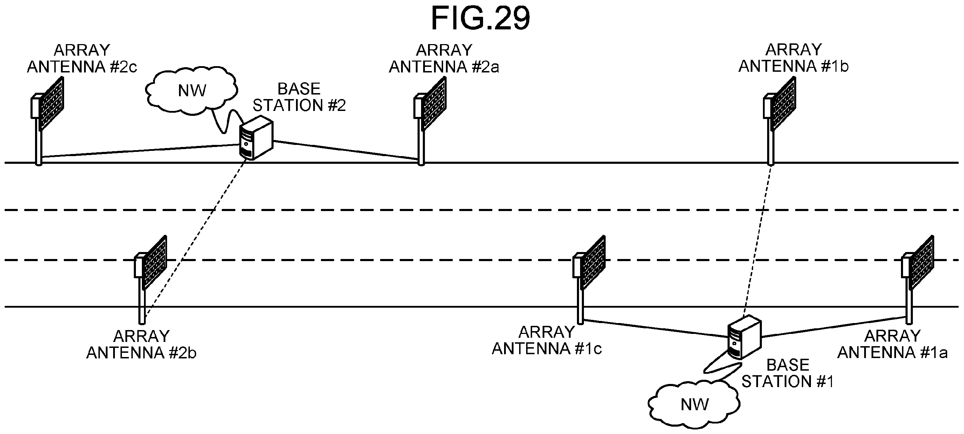

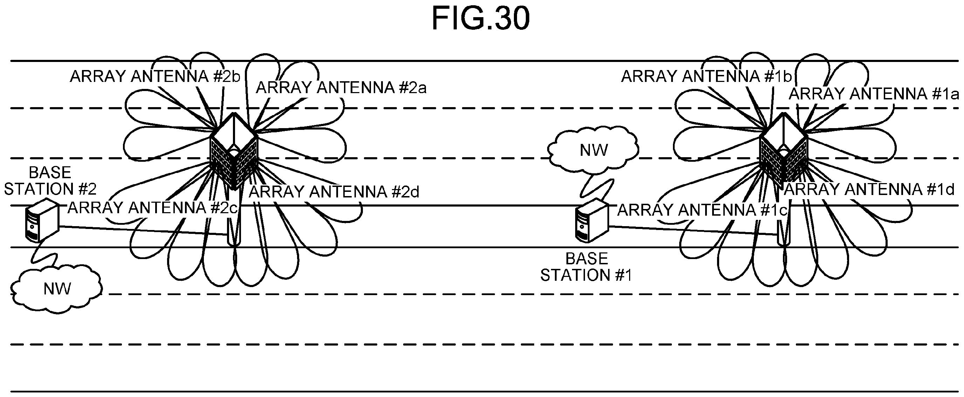

The array antenna arrangement of the wireless communication system according to the seventh embodiment will be described. The example illustrated in FIG. 27 depicts an array antenna arrangement in which one base station includes two array antennas arranged side by side on opposite sides of the road. In this arrangement, the overlap between the serving areas of the array antennas is relatively large, and a high diversity effect is obtained by each of the distributed array antennas. Another possible configuration is represented by the example illustrated in FIG. 29, in which one base station (base stations #1 and #2) includes three array antennas alternately arranged on opposite sides of the road (array antennas #1a to #1c and array antennas #2a to #2c). In this arrangement, the overlap between the serving areas of the array antennas can be adjusted based on the installation interval between the array antennas, and a diversity effect that depends on the overlap can be obtained as in the example of FIG. 27. The example illustrated in FIG. 30 depicts a configuration in which the base station #1 includes array antennas #1a to #1d and the base station #2 includes array antennas #2a to #2d. In this configuration, the array antennas are centrally arranged between the inbound and outbound lanes so that the serving areas cover all directions. In the exemplary configuration illustrated in FIG. 30, one base station includes four array antennas, but the number of array antennas is not limited to four. In the exemplary configuration illustrated in FIG. 30, the overlap between the serving areas of the array antennas is relatively small, and wide service areas can be formed with a small number of array antennas. In the present embodiment, an expressway environment has been described as an example of an environment with a large fluctuation rate of transmission lines, but it is clear that the present embodiment can also be applied to a similar environment such as a railroad to achieve a similar effect. The above-mentioned examples can also expect an uplink diversity effect.

3GPP Rel. 12 supports simultaneous connection (dual connectivity (DC)) between the serving cell and the target cell, enabling simultaneous communication with a plurality of base stations. Rel. 16 has developed DC-based HO in order to reduce handover-derived communication interruption time and improve data reliability and robustness. The major difference between DC-based HO and normal handover is that the serving cell is not disconnected before random access to the target cell is started, and after the random access is completed, both the serving cell and the target cell are simultaneously connected.

Therefore, by using the sequence illustrated in FIG. 26, the redundancy of initial access to the target cell for starting DC can be similarly ensured. As a result, the seventh embodiment can also improve the success rate of handover in the case of DC-based HO.

3GPP Rel. 14 supports RACH-less HO in order to reduce handover-derived interruption time. Therefore, in the random access procedure illustrated in FIG. 26, the transmission of the Msg #1 (step S92-1) and the transmission of the Msg #2 (step S92-2) can be skipped so that the transmission of Msg #3 (step S92-3) can be executed after the mobile station receives the HO command. Note that the UL grant of the Msg #3 is allocated in advance, and the base station #1 notifies the mobile station through an RRC reconfiguration message, or UL resources are dynamically scheduled using the PDCCH of the target cell.

Therefore, by providing RACH-less HO notification in steps S111 and S103 of the sequence illustrated in FIG. 26 and skipping steps S92-1 and S92-2, the redundancy of handover to the target cell can be ensured for RACH-less HO, and the success rate of RACH-less HO can be improved.

The beam to be used for transmitting and receiving the Msg #3 in step S92-3 may be determined as follows. In the case of transmitting and receiving the Msg #3 with a wide-range low-gain beam, the target cell determined in step S101 uses the beam weight used at the time of SSB transmission to the mobile station, and the array antenna of the target cell receives the Msg #3. The beam weight used at the time of SSB transmission to the mobile station is the beam weight used at the time of SSB reception at the mobile station. The mobile station transmits the Msg #3 using the beam weight used at the time of SSB reception from the target cell. In the case of transmitting and receiving the Msg #3 with a narrow-range high-gain beam, the target cell determined in step S101 performs a beam search in the direction of the wide-range low-gain beam formed at the time of SSB transmission to the mobile station, and determines the narrow-range high-gain beam to be used. The direction of the wide-range low-gain beam formed at the time of SSB transmission to the mobile station is the direction of the wide-range low-gain beam formed at the time of SSB reception at the mobile station. The mobile station performs a beam search in the direction of the wide-range low-gain beam formed at the time of SSB reception from the target cell, and determines the narrow-range high-gain beam to be used.

Note that the SSB index determined by the base station #1 from the measurement results provided by MR, UL grant of the Msg #3, scheduling information for narrow-range high-gain beam search, and the like may be provided to the base station #2 and the mobile station through the HO request transmitted in step S102, the HO ACK transmitted in step S111, the HO command transmitted in step S103, or other types of signaling. The above is the description of a beam switch between array antennas of different base stations using group IDs.

### Eighth Embodiment.

Next, a wireless communication system that performs a beam switch between array antennas in the same cell using group IDs will be described. Like the seventh embodiment, the present embodiment is based on the assumption that the wireless communication system includes any of the base stations described in the first to fourth embodiments and the mobile station described in the fifth embodiment.

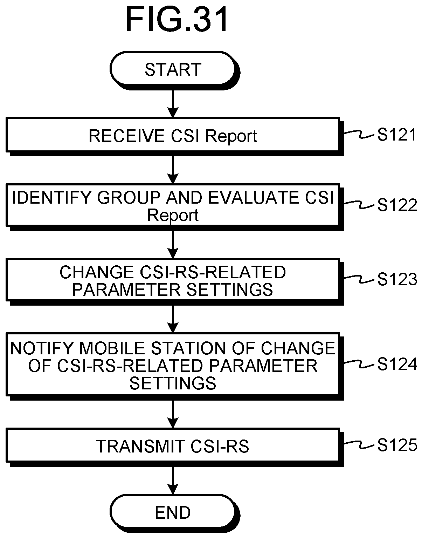

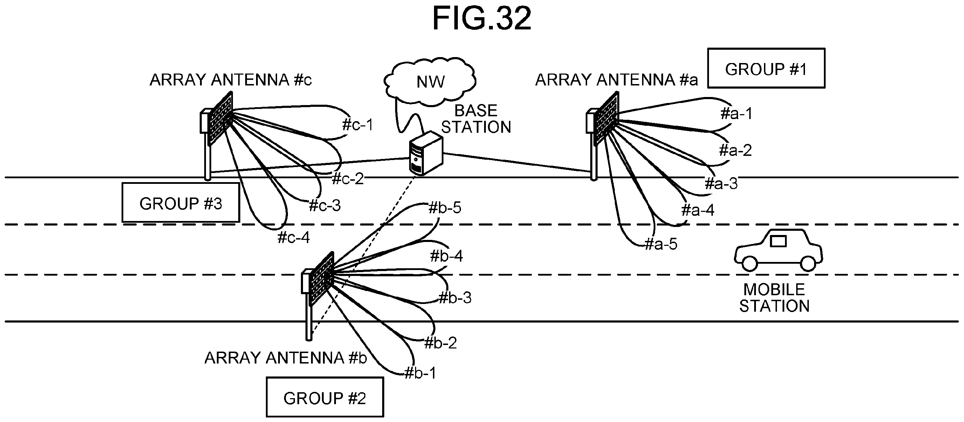

FIG. 31 is a flowchart illustrating an example of how the base station operates for a beam switch between array antennas in the wireless communication system according to an eighth embodiment. The flowchart of FIG. 31 represents the procedure for beam management by the base station. The base station according to the present embodiment repeatedly performs the procedure represented by the flowchart of FIG. 31 to continuously hold beam candidates for data transmission responsively to the movement of the mobile station. Note that the procedure represented by the flowchart of FIG. 31 may be performed on a single-shot basis to deal with fluctuations in transmission lines. The present embodiment describes a beam switch based on the assumption that the directional relationship between one or more array antennas and the mobile station has been obtained in the manner described in the sixth embodiment in the configuration and environment illustrated in FIG. 32. FIG. 32 is a diagram for explaining a specific example of a beam switch executed in the wireless communication system according to the eighth embodiment.

As illustrated in FIG. 32, the present embodiment is based on the assumption that one base station includes three distributed array antennas #a, #b, and #c, which are allocated different group IDs #1, #2, and #3. Below is a description of a beam switch between the array antennas of the base station, which is performed when a car serving as the mobile station passes through the wireless communication service area of the base station. Note that the arrangement and number of array antennas, the group allocation method, and the type of mobile station are not limited to those illustrated in FIG. 32.

For the sake of explanation, suppose that the mobile station has performed the operation described in the sixth embodiment and finished selecting the narrow-range high-gain beams to be used for communication with the base station. Then, suppose that the base station has performed beam management according to the selection result by the mobile station by repeatedly transmitting CSI-RSs using a beam #a-3 of the group #1 correlated with the array antenna #a and a beam #b-3 of the group #2 correlated with the array antenna #b.

The mobile station may be explicitly notified of the groups to which SSBs and CSI-RSs received from the base station belong, in which case the mobile station performs beam measurement in which groups are distinguished and creates a CSI report. Alternatively, the mobile station may not be explicitly notified of groups, in which case the mobile station performs beam measurement without being aware of group, creates a CSI report, and feeds back the CSI report to the base station. Note that the mobile station performs the above processing according to the CSI-RS-related setting parameters provided by the base station.

In response to receiving the CSI report from the mobile station (step S121), the base station identifies the group and evaluates the CSI report (step S122). In the evaluation in step S122, the base station may use an evaluation index specific to a particular communication application, or may use a plurality of indexes. For example, for a communication application that requires large-capacity transmission, the base station may perform evaluation of RI between a plurality of beams belonging to different groups, and hold multiple items of beam pair information that are better than a certain threshold, so as to improve spatial multiplexing and achieve a large capacity. In contrast, for a communication application that requires high reliability, the base station can perform evaluation of RI and RSRQ between a plurality of beams belonging to the same group, and hold multiple items of beam pair information that are better in terms of reliability than a certain threshold. In addition, the base station evaluates RSRP, RSRQ, and the like individually for a plurality of beams belonging to different groups, and holds information on a plurality of beams that are better than a certain threshold. If no beam is better than a threshold, the base station selects one or more beams from each of at least two different groups, and holds information on the selected beams. Note that the thresholds for determining whether to hold beam information may vary between groups. The thresholds may be changed dynamically. As an example, the group-specific thresholds may be determined each time the maximum RSRPs of different groups are compared, or multiple combinations of thresholds may be held in advance so that an appropriate combination of thresholds can be used according to the evaluation result.

Note that a communication application that requires large-capacity transmission can be exemplified by software installed in a computer or mobile phone that enables viewing of high-quality moving images while downloading them from the Internet. A communication application that requires high reliability can be exemplified by a communication application that exchanges information related to train security operation or the like, such as train positions, speeds, and operation status of other operation sections, which is implemented as software installed in control centers, drivers' mobile phones or mobile computers, and devices provided on trains. Another example can be a communication application that exchanges, between vehicles and between traffic control centers and vehicles, information for safely and autonomously controlling passenger cars, buses, and the like between automatically driven vehicles, such as the positions, speeds, and destinations of peripheral vehicles, which is implemented as software installed in occupants' mobile phones, devices provided on vehicles, and computers and traffic control devices in traffic control centers. Still another example can be software that is used by unmanned forklifts or the like operating in a factory to transmit the vehicle operating status to a control center in the factory, the software being installed in processing devices in forklifts.

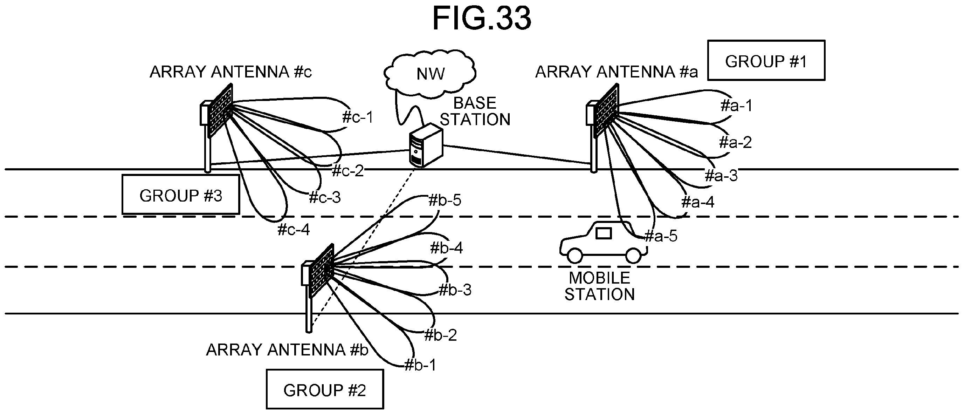

Next, the base station changes CSI-RS-related parameter settings (step S123). That is, the base station determines the parameters related to the next CSI-RS based on the evaluation result of the CSI report received in step S121. CSI-RS-related parameters include parameters required for a CSI-RS-based beam search such as CSI-RS resource settings and CSI report settings. If the evaluation result of the CSI report is not different from the evaluation result of the previous CSI report, the parameter settings may be maintained. In response to determining that the number of groups to which beams better than the above threshold belong is less than or equal to "x", the base station sets CSI-RS parameters so as to request a report that contains measurement results of SSB belonging to another group. Here, the number of groups "x" may be determined based on the arrangement of array antennas and/or the required communication quality, or determined based on the fluctuation rate of transmission lines and/or the movement speed of the mobile station. Note that as the number of groups "x" increases, the robustness against channel fluctuations improves. In addition, in response to determining that the RSRP corresponding to a beam #a-5 at the edge of the area of beams formable by the array antenna #a, as illustrated in FIG. 33, is less than or equal to a threshold, the base station may similarly set CSI-RS-related parameters so as to request a report that contains measurement results of SSB belonging to another group. In addition, the base station may set CSI-RS-related parameters so as to regularly request a report that contains group-based measurement results of SSB. In addition, in response to determining that the measurement result of SSB reported in the CSI report is greater than or equal to a threshold, the base station sets the CSI-RS resource corresponding to this direction and searches for a candidate beam for data transmission.

After adjusting the CSI-RS-related parameter settings, the base station notifies the mobile station of the change of the CSI-RS-related parameter settings (step S124), and then transmits CSI-RS to the mobile station according to the provided parameter settings (step S125).

Note that the base station may manage the groups of data transmission beams by ranking. For example, the groups may be ranked by RSRP in the configuration illustrated in FIG. 32, in which case the group #1 and the group #2 may be designated as first data transmission beams and second data transmission beams, respectively, for management. One or more of RSRP, RSRQ, RI, CQI, and the like included in a CSI report may be used as a ranking criterion. For example, the groups may be ranked by comparing the CSI-RS resources with the highest RSRP among the CSI-RS resources belonging to different groups. This enables a switch from a data transmission beam belonging to the first-best group to a data transmission beam belonging to the second-best group in response to an instantaneous deterioration in the measurement result of SSB belonging to the first-best group. Note that the reference signal to be used for RSRP measurement may be SSB. In addition, the ranks of transmission lines may be evaluated between the groups based on RI, and the combinations of groups may be ranked. This corresponds to ranking the efficiency of frequency utilization in transmission diversity that simultaneously uses a plurality of data transmission beams, and improves the robustness of spatial multiplex transmission against channel fluctuations. In addition, the base station may notify the mobile station of all or some of the group ranking results periodically or aperiodically. In the event of a data transmission failure due to an instantaneous deterioration in the transmission line, the mobile station may switch the transmission/reception beam of the mobile station according to the group ranks provided by the base station. If there is no notification of group ranking results, the mobile station may switch the transmission/reception beam to a group with a successful data transmission record different from the group that has caused the data transmission failure. In the example illustrated in FIG. 32, the top two of the groups for the three array antennas are ranked, but the number of groups to be ranked may be changed according to the number and arrangement of array antennas, for example.

In this way, the base station selects a plurality of beams belonging to different groups as candidate beams for data transmission, and holds information on the selected beams. Consequently, in the event of a data transmission failure with a beam of one group, a beam of another group indicated by the held information can be used through switching. That is, in the event of a data transmission failure, the base station can restart data transmission without any additional beam search, and can improve the stability of communication. For example, the line of sight with the array antenna of the base station to which the beam being used for data transmission belongs can be blocked, and accordingly all the beams belonging to this array antenna (beams of the first group) may become unavailable for data transmission, in which case it is possible to switch to data transmission with a beam belonging to another array antenna (beam of the second group) in a short time.

The present embodiment has described downlink communication, but the technique of the present embodiment is also applicable to uplink communication. For example, a mobile station including a plurality of panels may transmit data from these panels to a base station using beams, which possibly involves the following processes. The base station can receive a plurality of beams from the mobile station, but if the transmission line between one of the panels of the mobile station and the base station is blocked by an obstacle or the like, data transmission can be performed using another panel in a good transmission line condition. The panels in this example can be replaced with a plurality of beam groups formed using a single panel on the mobile station side. In this case, data are transmitted from each group. If the communication path between one or more groups on the mobile station side and the base station is blocked, data transmission can be performed using a group with no communication path blocked. In the case of using the panel or group example, the base station can obtain the status of uplink transmission lines simply with SRS symbols transmitted from each panel or group. The base station can receive, from the mobile station, SRS symbols associated with the panels or groups of the mobile station, and can obtain the state of the

transmission lines between the panels and the base station. In order to obtain the status of transmission lines, the base station measures the power of the received SRS symbols, for example. The base station then compares the power with that of other SRS symbols, and in response to determining that the power of the SRS transmitted from one or more panels on the base station side has significantly deteriorated, detects a deterioration in the communication environment, such as blockage of the transmission line between the one or more panels and the base station by an obstacle. Note that checking the state of uplink transmission lines using SRS or the like is advantageous in selecting appropriate beams for uplink communication in handover processing and beam management required for switching to a different cell.

### Ninth embodiment.

The seventh embodiment has described how the mobile station identifies the source panels of reference signals transmitted from the base station to the mobile station. Conversely, in a case where the mobile station is equipped with a plurality of panels, the base station can recognize the source panels of reference signals transmitted from the mobile station to the base station.

For example, the mobile station may use beams to transmit SRS for use by the base station to obtain information on uplink transmission lines. In this case, SRS may be transmitted from each of a plurality of panels installed in the mobile station. In this case, each panel is assigned an identifier. For transmitting an SRS using a beam, the mobile station adds the identifier of the panel that forms the beam to the SRS, so that the base station can recognize the source panel of the SRS.

Note that the identifier of a reference signal may be assigned a name that specifies the source panel, or may be assigned another name. That is, the base station may assign the identifiers of reference signals that are transmitted from the mobile station different names according to the groups to which beams for transmitting reference signals belong. Using ID as an example, the identifier of a reference signal may be assigned a panel ID or a group ID as its name. In the case of assigning a group ID, each group of beams may correspond to a panel. Alternatively, the identifier of a reference signal may be assigned a set ID or a resource set ID as its name. In this case, a set or a resource set corresponds to a panel. IDs are assigned numbers, and beam IDs can be simply combined with panel-related identifiers such that the base station can identify the source panels of reference signals. In this manner, beam IDs included in the setting parameters of SRSs transmitted from the mobile station enable the base station to identify the received beams. The identifier of a reference signal does not have to be correlated with a panel, and the identifier of a reference signal may be correlated with the group ID of a group to which a plurality of beams belong. The present embodiment describes a method in which the mobile station uses a plurality of panels so as to enable the base station to distinguish between the source panels of SRSs, which is only an example. It is also possible to replace the panels with the groups to which beams belong so as to enable the mobile station to distinguish between the groups of the transmission beams of SRSs. The following description is based on the premise that the SRSs transmitted from the same panel belong to the same group.

Note that the present embodiment is based on the assumption that the base station is capable of configuring the communication settings of the mobile station and has a function such as gNB.

The mobile station may use the above-mentioned identifiers when generating SRS sequences. For example, the parameters of the function that generates a Zadoff Chu sequence for use in an SRS sequence include sequence number, and different sequence numbers produce different Zadoff Chu sequences. The mobile station may use the above identifiers as the sequence numbers of the function that generates a Zadoff Chu sequence. If a pseudorandom noise (PN) sequence is used in an SRS sequence and a random number generator such as a pseudo-noise generator is used for generating a PN sequence, the above identifiers may be used as the initial values set in the shift register of the random number generator. Because SRS sequences are defined by the above group identifiers, the sequences can also be identified on the base station side using the group identifiers.

Whether to use all of the SRSs with identifiers set by the base station may be determined based on the status of transmission lines between the mobile station and the base station. For example, suppose that the mobile station includes two panels. The base station instructs the mobile station to transmit SRS from both panels, and determines whether to cause the mobile station to transmit SRS with a plurality of panels based on the reception status of SRS from each panel. At this time, the base station determines the reception status from, for example, RSRP indicating the received power of SRS.

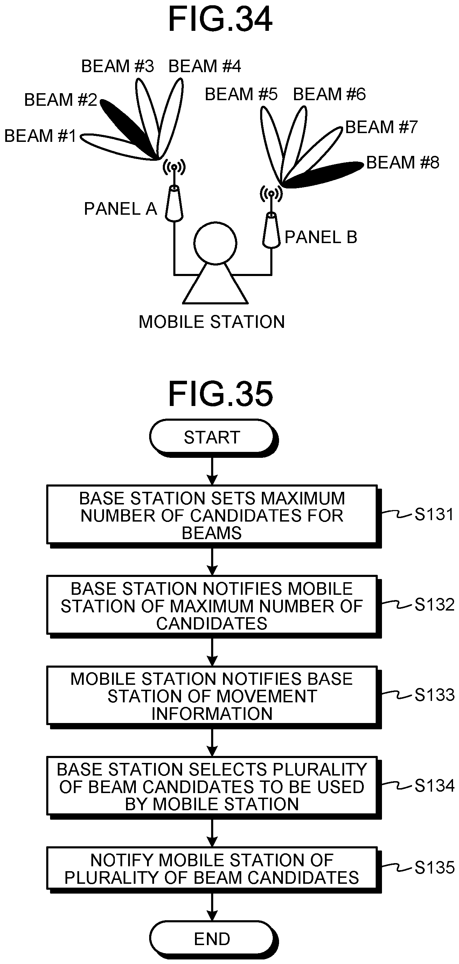

FIG. 34 is a diagram for explaining how the mobile station of the wireless communication system according to a ninth embodiment transmits signals. The signal transmission operation of the mobile station will be described with reference to FIG. 34.

In the example illustrated in FIG. 34, the mobile station transmits uplink signals from two panels, panel A and panel B. Each panel uses four beams as candidates. In FIG. 34, the destination base station of SRS from the mobile station is not illustrated.

For example, when the received power of SRS transmitted from the panel A is weak, an instruction from the base station that causes the mobile station to perform transmission using the two panels results in wasted power in the mobile station. Therefore, the base station instructs the mobile station to perform transmission using only the panel that achieves strong received power. This can produce the effect of reducing the power consumption of the mobile station. On the other hand, when the received power of each SRS transmitted from the plurality of panels is higher than a prescribed threshold, an instruction from the base station that causes the mobile station to perform transmission using the plurality of panels can lead to an increase in received power and contribute to improving reception characteristics.

When the mobile station moves from the current cell, which is the currently connected cell, to an adjacent cell, the base station needs to perform handover processing using reference signals transmitted on uplink. Because the identification information of the groups to which beams belong is added to SRSs, and a plurality of SRSs are assigned different identifiers, the base station on the reception side can identify the groups to which the transmission beams of SRSs belong. The base station may not be able to receive some SRSs, but the base station can perform handover processing by receiving at least one SRS. For example, in a case where the mobile station that transmits SRS using two panels performs a handover, the base station may not be able to receive SRS from one of the panels but still can receive SRS from the other panel to complete the handover.

When the mobile station moves to an adjacent cell, the mobile station needs to perform beam sweeping on the adjacent cell. In this case, the mobile station uses one panel for beam sweeping and the other panel to maintain connectivity with the current cell. In addition to beam sweeping on the adjacent cell, one panel may be used to transmit SRS for timing advance or the like for adjusting the time of transmission from the mobile station. Referring to the example illustrated in FIG. 34, the mobile station uses the panel A for beam sweeping on an adjacent cell. That is, in order for the base station to set reception beams for the signals transmitted from the panel A, the mobile station transmits SRS using each of the candidate beams. The panel B is used to maintain communication with the current cell, and the mobile station transmits, for example, SRS for beam management. Beam management is a process for adjusting transmission or reception beams. In this manner, one or more panels are used for handover processing for or connection to an adjacent cell, and the other panels are used to maintain communication in the current cell, whereby the handover can be performed without disconnection of communication in the current cell.

The above is the description of an example in which the base station selects the panel to be used for a particular purpose from among the plurality of panels of the mobile station. Note that as the mobile station moves, it is necessary to change the direction of transmission beams toward the base station. In such a case, it takes such a long time to configure beam settings between the base station and the mobile station that the mobile station is no longer able to transmit appropriate directional beams after the beam direction settings are completed, resulting in a deterioration in the accuracy of reception at the base station. A solution to this problem is that the base station selects candidates for the beams with which the mobile station transmits SRS. A specific example of this solution will be described below with reference to FIG. 35.

FIG. 35 is a flowchart illustrating an example of how the base station of the wireless communication system according to the ninth embodiment selects candidates for the transmission beams to be used by the mobile station.

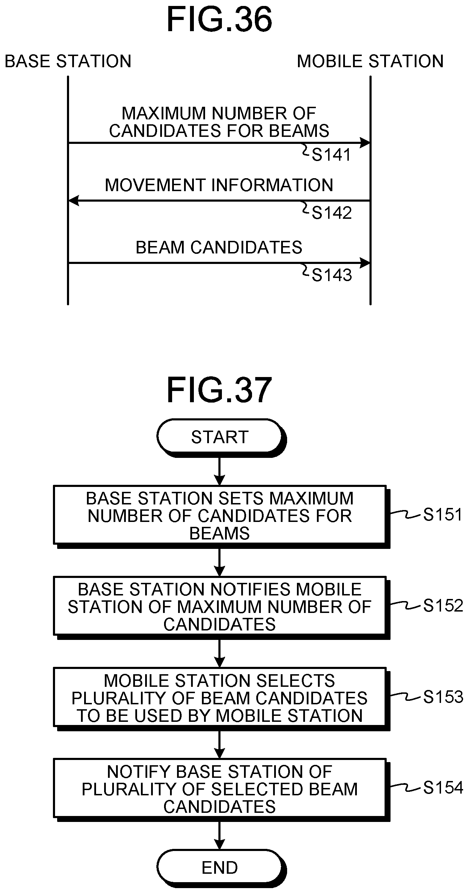

First, the base station sets the maximum number of candidates for the beams to be used (step S131), and notifies the mobile station of the maximum number of candidates (step S132). Next, the mobile station notifies the base station of movement information (step S133). Movement information is information about the movement of the mobile station, e.g. information about Doppler spread, information about Doppler shift, information about the direction and hourly speed of movement and the position of the mobile station or the base station, and the like. The base station selects a plurality of beam candidates to be used by the mobile station based on the received movement information (step S134), and notifies the mobile station of the plurality of selected beam candidates (step S135). An example of how information is exchanged between the base station and the mobile station in the procedure represented by the flowchart of FIG. 35 is illustrated in FIG. 36. FIG. 36 is a sequence diagram in which the base station and the mobile station exchange information in the wireless communication system according to the ninth embodiment. First, the base station transmits information on the maximum number of candidates for beams to the mobile station (step S141), and the mobile station transmits movement information to the base station (step S142). Next, the base station transmits information on beam candidates to the mobile station (step S143).

Note that the base station may not necessarily refer to movement information for selecting candidates for the transmission beams to be used by the mobile station. Candidates for the beams to be used may be selected by the mobile station. The mobile station selects candidates using the procedure represented by the flowchart illustrated in FIG. 37. FIG. 37 is a flowchart illustrating an example of how the mobile station of the wireless communication system according to the ninth embodiment selects candidates for the transmission beams to be used. In order for the mobile station to select candidates, as illustrated in FIG. 37, the base station first sets the maximum number of candidates for the beams to be used (step S151), and notifies the mobile station of the maximum number of candidates (step S152). Next, the mobile station selects a plurality of beam candidates to be used (step S153), and notifies the base station of the plurality of selected beam candidates (step S154).

Presented below is a description of this procedure with a numerical example. For example, let the number of beams with which the mobile station can transmit SRS be 64. The base station selects eight out of the sixty-four beams, for example, and notifies the mobile station. The mobile station selects the beams to be used from among the specified eight beams, and transmits SRS. Because the base station knows the eight candidate beams, the base station configures settings to enable reception of these eight beams. If sufficient setting time is available, the mobile station may wait for a beam setting instruction from the base station, and transmit SRS using the beams specified by the instruction. A set of beams is selected in this manner, that is, the mobile station selects the beams to be used for SRS transmission from the set of beams selected by the base station, whereby the use of transmission beams can be modified as appropriate according to the movement of the mobile station. Note that different sets of beams may be selected for different identifiers. The panels oriented in the same direction may be assigned the same set of beams. The selected set of beams may be used not only for SRS transmission but also for transmission of PUSCH containing data or PUCCH containing control information. Note that beams can be selected simply based on SRS resource IDs or the like. The definition of a resource will be explained later.

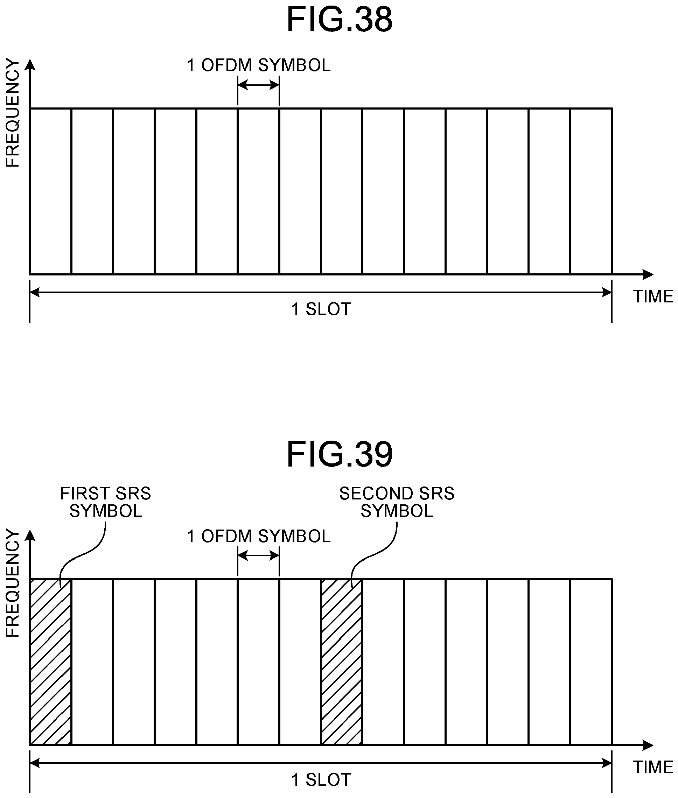

In order to implement the procedure illustrated in FIG. 35, it is essential that reference signals be designed for a moving mobile station. In some cases, handover may not be performed, but a base station may perform sounding for a moving mobile station, for which it is desirable that reference signals be uniformly arranged in a slot in the time domain. The standard Rel. 15 specifies that SRSs are arranged only in the last six symbols in a slot. If reference signals such as SRSs are gathered, they are difficult to measure by the base station during sounding. Therefore, it is necessary to design SRSs containing the above-mentioned identifiers for a mobile station. Here, one slot is defined by way of example as a unit consisting of 14 OFDM symbols. FIG. 38 illustrates an example of the relationship between a slot and OFDM symbols. Note that the unit handled in the present embodiment is not limited to a slot, and SRSs may be arranged in a unit longer or shorter than a slot. For example, one unit may be seven OFDM symbols or twenty-eight OFDM symbols.

The following description uses SRS for sounding as an example of an uplink reference signal. In the case of sounding by the mobile station, it is preferable that SRS symbols be distributed in a slot. An SRS symbol is an OFDM symbol with an SRS placed therein. Hereinafter, the arrangement of SRS symbols in the time domain will be described. FIG. 39 illustrates an exemplary arrangement of SRS symbols in the time domain. In the example illustrated in FIG. 39, two SRS symbols, a first SRS symbol and a second SRS symbol, are arranged in one slot. Specifically, the first SRS symbol is placed in the first symbol of the slot, and the second SRS symbol is placed in the eighth symbol of the slot. Note that the position of symbols may be determined by using upper-layer control such as RRC.

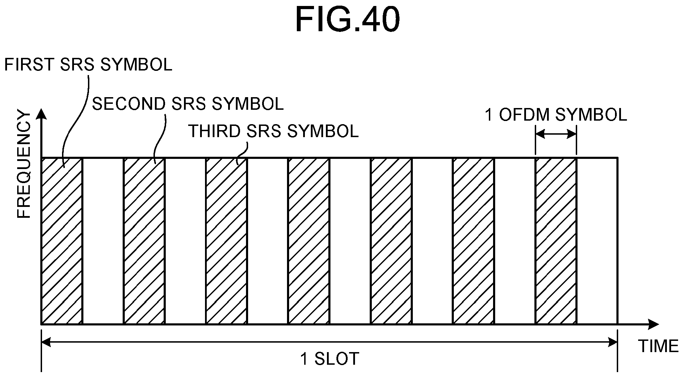

Upper-layer control information such as RRC is transmitted from the base station to the mobile station. The control information indicates, for example, the position of the first SRS symbol, the number of SRS symbols arranged thereafter or the number of SRS symbols in the slot, and the distance between adjacent SRS symbols. For example, in the example illustrated in FIG. 39, the position of the first SRS symbol is "first", the number of SRS symbols in the slot is "two", and the distance between adjacent SRS symbols is "six". Another example is illustrated in FIG. 40. In the simplified example illustrated in FIG. 40, the first to seventh SRS symbols are included in the slot. Specifically, SRS symbols are arranged every other symbol in the time domain. In the example illustrated in FIG. 40, the position of the first SRS symbol is "first", the number of SRS symbols in the slot is "seven", and the distance between adjacent SRS symbols is "one".

Note that the mobile station may continuously transmit SRS symbols by setting the interval between adjacent SRS symbols to "zero". The interval between adjacent SRS symbols is set in order to leave enough time for beam switching or the like. In the examples illustrated in FIGS. 39 and 40, any of data, control signals, and reference signals may or may not be transmitted in the sections without hatching in the slots. Arranging other symbols such as data and control signals in these sections improves the efficiency of frequency utilization. Arranging reference signals in these sections increases the number of SRSs transmittable in one slot, which is advantageous in the case of observing the state of transmission lines between each antenna of the mobile station and the base station through antenna-switched SRS transmission, because the number of transmission lines observable in one slot is increased, that is, the number of antennas switchable at the mobile station is increased.

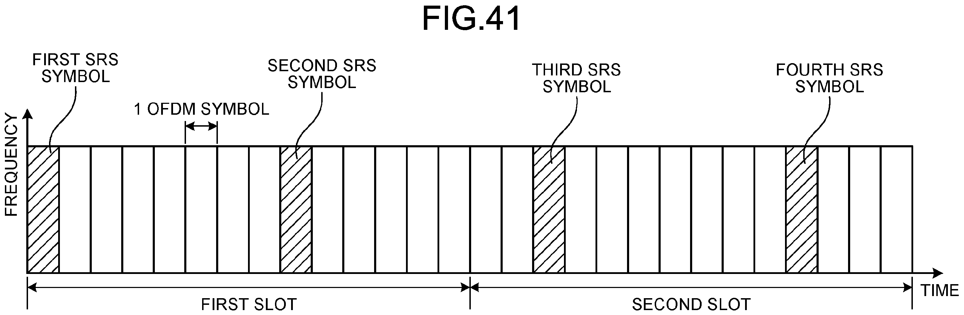

In the examples illustrated in FIGS. 39 and 40, SRS symbols are arranged in one slot, but SRS symbols may be arranged over a plurality of slots. For example, SRS symbols may be arranged in a unit consisting of two slots. Distributing SRS symbols over a plurality of slots improves the accuracy of averaging during fluctuating sounding in the time domain. Distributing SRS symbols on the time axis is also advantageous for movement to an adjacent cell because it is possible to, for example, prevent a failure in receiving some of the SRSs to be used for handover to an adjacent base station. A specific example is illustrated in FIG. 41. FIG. 41 is a diagram illustrating an example of a method of arranging SRS symbols in a plurality of slots, in which four SRS symbols are arranged over two slots. In the example illustrated in FIG. 41, SRS symbols are arranged at intervals of seven symbols. The first SRS symbol and the second SRS symbol are placed in the first slot, and the third SRS symbol and the fourth SRS symbol are placed in the second slot. The first SRS symbol is placed in the first symbol in the first slot, and the third SRS symbol is placed in the third SRS symbol in the second slot. These SRS symbols distributed on the time axis enable the base station to perform sounding responsive to fluctuations in transmission lines associated with movement. Although FIG. 41 illustrates an example in which SRS symbols are arranged over two slots, SRS symbols may be arranged over two or more slots, for example, three slots or four slots. The interval between adjacent SRS symbols is not limited to the seven-symbol interval illustrated in FIG. 41, and may be eight-, nine-, ten-, eleven-, twelve-, or thirteen-symbol interval. Candidates for the interval are set in advance and provided from the base station to the mobile station using RRC, MAC-CE, DCI, or the like.

Note that the transmission period of SRS symbols distributed in a plurality of slots may be set on a slot-by-slot or symbol-by-symbol basis. SRSs that are transmitted at predetermined intervals are called periodic SRSs. SRSs that are transmitted at predetermined intervals only in a predetermined time section are called semi-persistent SRSs. SRSs that are transmitted only once from the mobile station in response to a transmission instruction from the base station are called aperiodic SRSs.

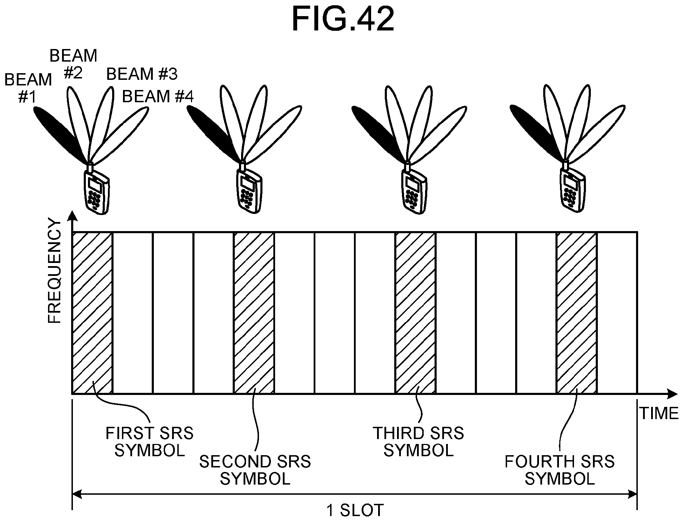

One or more SRS symbols arranged according to parameters indicated by control information, such as the start position of the SRS symbol arrangement and the interval between SRS symbols as described above, are also referred to as SRS resources. SRS resources may be correlated with beam directions. A specific example is illustrated in FIG. 42. FIG. 42 illustrates an example of a method of correlating SRS resources (SRS symbols) with beam directions for transmitting four SRS symbols in one slot. In the example illustrated in FIG. 42, the four SRS symbols (first SRS symbol, second SRS symbol, third SRS symbol, and fourth SRS symbol) are arranged in one slot. In this example, all the four SRS symbols are transmitted using a beam #1 in the same direction. Because the four SRS symbols are transmitted with the same beam (beam #1), the first to fourth SRS symbols constitute one SRS resource.

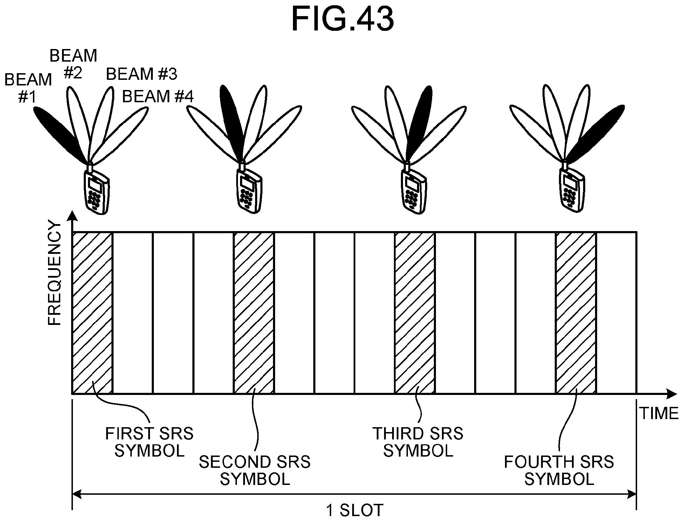

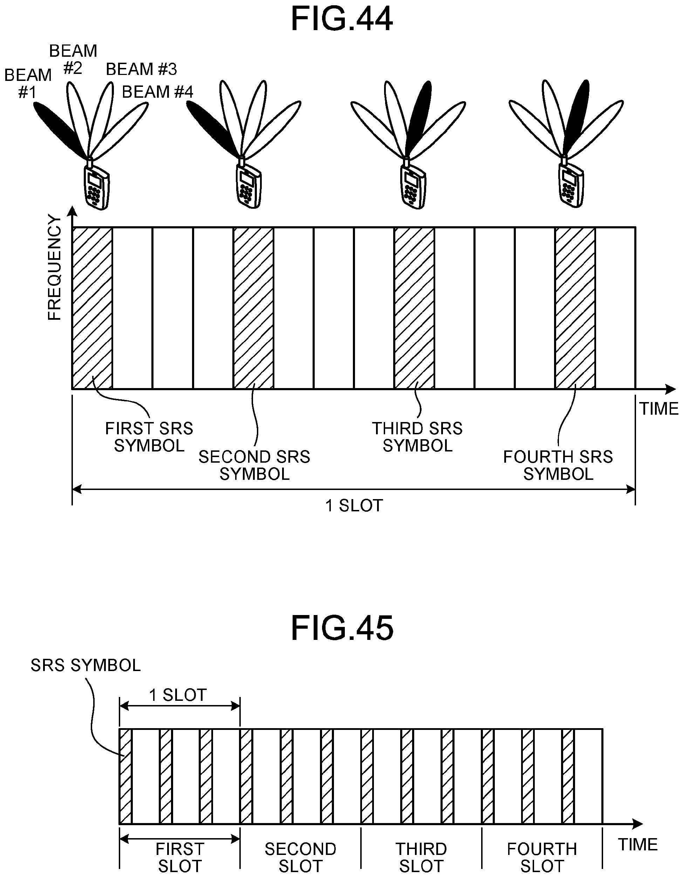

The base station may combine a plurality of SRS resources to generate a new SRS arrangement pattern, and notify the mobile station of the new SRS arrangement pattern. FIG. 43 illustrates an example of transmitting four SRS symbols in one slot as in the example illustrated in FIG. 42. However, the SRS symbols in the example illustrated in FIG. 43 are transmitted in separate directions using different beams. In this case, one SRS symbol corresponds to one SRS resource. That is, the first SRS symbol, the second SRS symbol, the third SRS symbol, and the fourth SRS symbol are set as separate SRS resources. Thus, the example illustrated in FIG. 43 represents a combination of four different SRS resources. FIG. 44 illustrates still another example. In the example illustrated in FIG. 44, the first SRS symbol and the second SRS symbol are set as a first SRS resource that is transmitted with the beam #1, and the third SRS symbol and the fourth SRS symbol are set as a second SRS resource that is transmitted with the beam #3. Thus, the example illustrated in FIG. 44 represents a combination of two SRS resources. Generally, a beam ID can be indicated using an SRS resource indicator (SRI).

Note that one resource may indicate a plurality of beam directions. In this case, an SRI is correlated with a plurality of beams. For example, in the example illustrated in FIG. 43, the first SRS symbol, the second SRS symbol, the third SRS symbol, and the fourth SRS symbol are set as separate SRS resources, and the four different SRS resources are combined. In this case, an SRI is correlated with the four SRS resources. That is, one SRI can be correlated with the beams in the four directions.

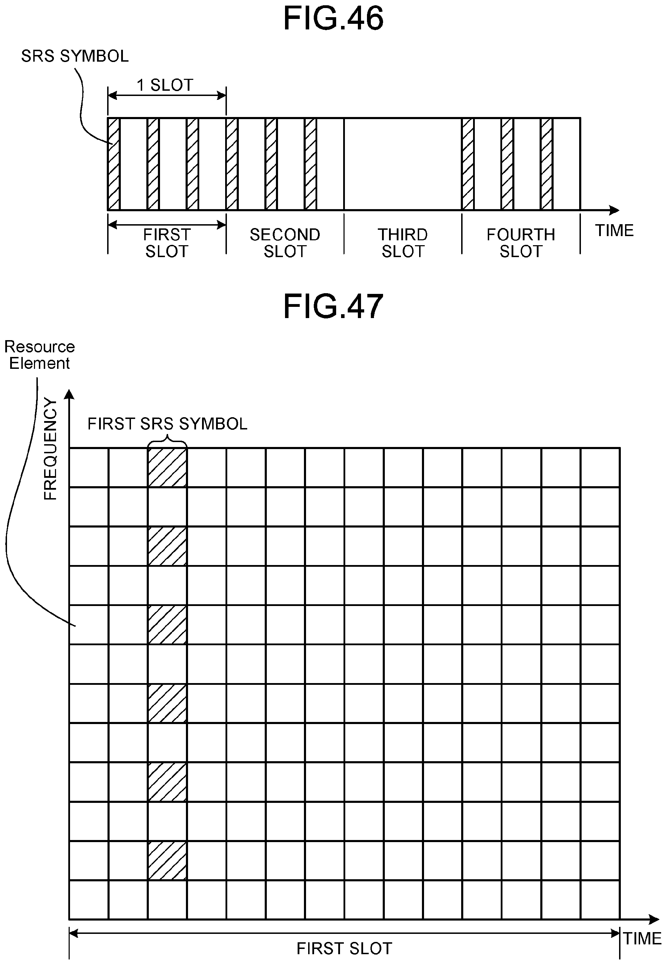

Note that frequent transmission of SRSs in the time domain may cause interference between mobile stations. In this case, the base station only needs to instruct the mobile station to stop transmitting some SRSs. That is, the base station only needs to configure settings to avoid overlaps between the SRS transmission timings of different mobile stations. For example, the base station may set a slot-based SRS symbol transmission pattern. Examples are illustrated in FIGS. 45 and 46. FIG. 45 illustrates an example in which SRS symbols are distributed in four slots. In the example illustrated in FIG. 45, three SRS symbols are transmitted in one slot. Here, suppose that the base station sets a slot-based SRS transmission pattern to "1101" and notifies the mobile station. The bit strings "1" and "0" constituting the transmission pattern respectively indicate SRS symbol transmission in a corresponding slot and cancellation of SRS symbol transmission in a corresponding slot. The position of each bit corresponds to the position of a slot; for example, the first bit corresponds to the first slot and the second bit corresponds to the second slot. In this case, the mobile station does not transmit SRS symbols in the third slot corresponding to the third bit set to "0", as illustrated in FIG. 46. That is, the mobile station regularly transmits SRS symbols using the pattern in which SRS symbols are not transmitted in the third slot of a unit consisting of four slots.

The above is the description of the arrangement of SRSs in the time domain. Next, the arrangement of SRSs in the frequency domain will be described. The arrangement of SRSs in the frequency domain is not illustrated in any of the examples of FIGS. 39, 40, and 41, but various arrangements may be applied in the frequency domain as described below. As mentioned above, the parameters of the function that generates a Zadoff Chu sequence for use in an SRS sequence include sequence number. Sequence numbers may be designated using the position information of SRS symbols in a slot and/or the number of SRS symbols in a slot.

In the frequency domain, that is, in one OFDM symbol where SRSs are arranged, SRSs may be arranged at intervals. An exemplary arrangement is illustrated in FIG. 47. FIG. 47 illustrates an example in which SRSs are distributed in one OFDM symbol to constitute one SRS symbol. In the exemplary arrangement illustrated in FIG. 47, SRS symbols are distributed over 12 resource elements (REs) corresponding to one resource block (RB). In the exemplary arrangement illustrated in FIG. 47, SRSs are arranged in one OFDM symbol, that is, in one resource block, such that the interval between adjacent SRSs in the frequency domain is one RE. Note that SRSs may be arranged in the frequency domain at intervals of a plurality of REs, instead of one RE. Such increased intervals are advantageous in preventing a plurality of SRSs arranged in the frequency domain from interfering with each other in the frequency domain. Note that this kind of pattern, in which SRSs are arranged in the frequency domain at intervals of one or more REs, is called a comb pattern. For example, referring to the frequency and time domains illustrated in FIG. 47, SRS symbols are arranged in the third symbol, and an SRS is placed in the first RE. Then, another SRS can be placed in the seventh RE, which means that the interval between SRSs in the third symbol is six REs. If another mobile station needs to transmit SRSs with the same third symbol, an SRS is placed in the fourth RE, and another SRS is placed in the tenth RE. This arrangement is effective in that two SRS symbols are placed in the same symbol and that the mobile stations do not suffer mutual frequency interference.

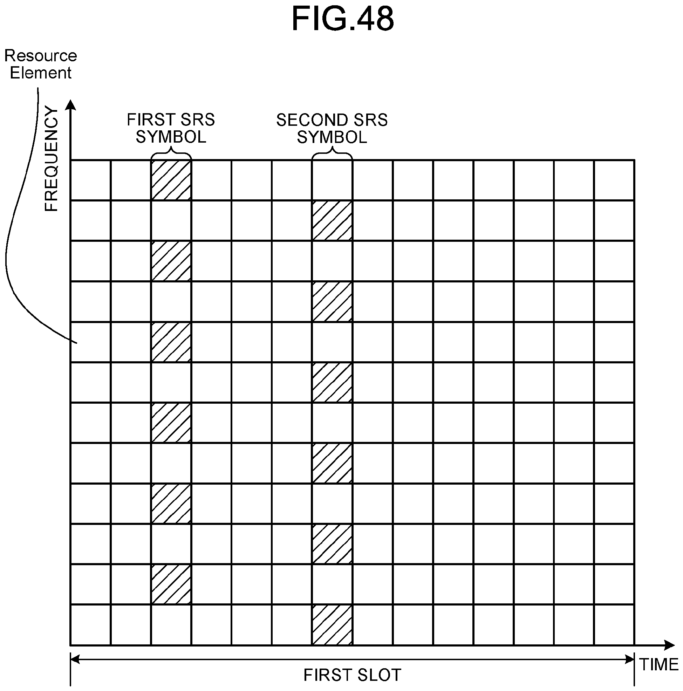

An offset may be applied in the frequency domain. For example, as illustrated in FIG. 48, two SRS symbols (first SRS symbol and second SRS symbol) can be arranged in one slot, in which case the frequency-domain offset of the first SRS symbol and the frequency-domain offset of the second SRS symbol may be set to different values. The different offset values of the SRS symbols produce a staggered arrangement of SRSs between the SRS symbols. This enables sounding of different subcarriers or REs, making it possible to obtain accurate transmission line information in a situation where transmission line characteristics fluctuate in the frequency domain. SRSs can be arranged over a plurality of symbols on the same frequency, which is effective for sounding averaging. Note that SRSs can also be arranged in the frequency domain with no RE intervals. In this case, SRSs may be orthogonalized by being multiplied by an orthogonal code.

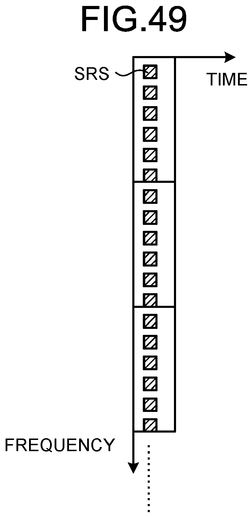

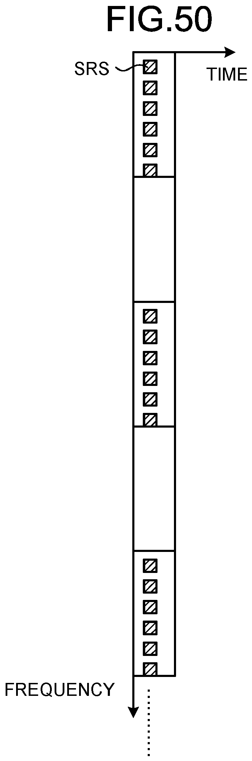

The mobile station may not necessarily transmit SRSs in every RB. Exemplary arrangements of SRSs for this case are illustrated in FIGS. 49 and 50. These arrangements are based on the assumption that a comb pattern is used in the frequency domain. First, at a certain time point, the mobile station places SRSs in every RB for transmission, as illustrated in FIG. 49. Then, at the next time point, the mobile station places SRSs at intervals of one RB for transmission, as illustrated in FIG. 50. In this manner, SRSs can be transmitted at different densities, which is advantageous in preventing overlaps on the frequency axis between SRSs transmitted from different mobile stations.

When the mobile station selects the beam to be used for uplink transmission of data or control information, the mobile station may use a beam used for transmitting a reference signal to transmit data or control information, instead of reselecting an appropriate beam with beam sweeping or the like. Generally, a beam for transmitting a reference signal such as SRS is called a reference beam, and a beam for transmitting data and control information is called a target beam. However, for the sake of simplicity, these are simply referred to as beams without distinction. The mobile station may use, for example, a beam used for transmitting SRS as a beam for transmitting PUSCH containing data. The mobile station may also use a beam used for transmitting SRS as a beam for transmitting PUCCH including control information. In this manner, already-set beams are used for transmitting data or control information, that is, SRS is managed in correlation with data or control information such that these are transmitted with the same beam, whereby the time required for setting an appropriate beam is reduced. This is also advantageous in reducing the amount of control information required for beam settings. Specifically, SRS is correlated with DMRS for PUSCH and PUCCH. The use of the same beam indicates that the same spatial information is used. For example, in 3GPP, QCL-D indicates that two beams have equivalent spatial information, that is, equivalent transmission directions. Note that the information transmitted by SRS may include the usage of SRS or the like. For example, 3GPP defines four types of usage: beam management, codebook, non-codebook, and antenna switching. Note that correlation relationship is also called spatial relation, and the relationship, that is, correlation target, may be indicated by a parameter called spatial relation info.

For beam correlation, beam candidates for PUCCH and PUSCH transmission may be correlated with beams for SRS transmission. Note that beams for PUCCH and PUSCH transmission are beams for DMRS transmission for PUCCH and PUSCH. Beam candidates may be indicated using the numbers assigned to resources for SRS transmission. For correlation, panel identifiers may also be correlated. As described above, group IDs, resource set IDs, or the like may be used for correlation, instead of clear identifiers. That is, the beams used for transmitting SRS are set as candidates for PUCCH and PUSCH transmission beams. The candidates may be provided from the base station to the mobile station through RRC or the like, and the base station may notify the mobile station of the candidates using MAC-CE, DCI, or the like when configuring beam correlation settings. Each candidate is correlated with the beam ID or SRI of an SRS transmission beam. When the mobile station moves, the mobile station needs to change the direction of transmission beams. That is, the mobile station needs to perform transmission beam switching. The base station correlates beams for SRS transmission with transmission or reception beams that are used by the mobile station.

Note that beam correlation is performed based on the result of a process called beam sweeping. In beam sweeping, the mobile station transmits SRS by switching between a plurality of beams by time, and the base station observes the received power or the like of each of the plurality of beams used in the SRS transmission, selects a beam with high received power, and sets the selected beam as the beam with which the mobile station transmits data and control information. For example, in 3GPP, because data are transmitted using PUSCH, information on a beam for DMRS transmission included in PUSCH is correlated with information on SRS that is transmitted by the beam selected in beam sweeping. For correlating information on a beam for transmitting control information with information on a beam for transmitting SRS, for example, information on a beam for DMRS transmission included in PUCCH is correlated with information on SRS that is transmitted by the beam selected in beam sweeping. The information on the beam for transmitting SRS can be the beam ID of the beam for transmitting SRS, panel number, and the like. The base station transmits the information on the beam for transmitting SRS to the mobile station. In the case of PUSCH transmission, the mobile station refers to the information on the beam for transmitting SRS, and transmits PUSCH to the base station using the same beam.

In a case where the mobile station transmits SRS from a plurality of panels, the base station may select SRS beams on a panel-by-panel basis, and correlate beams for transmitting PUSCH with beams for transmitting SRS on a panel-by-panel basis. Information indicating the correlation result is contained in uplink transmission configuration indication (TCI), for example, and provided from the base station to the mobile station using DCI. Correlation processing may be performed by the mobile station. In this case, the mobile station transmits, to the base station, uplink TCI containing information indicating the correlation result.

Uplink transmissions may be regularly scheduled. The uplink transmission period is set by RRC. The start of regular transmissions can be controlled in two ways. The first way is to provide notification of the start time of regular transmissions using an offset indicated by the number of slots or the like. This notification is provided by RRC. The second way is for the mobile station to regularly transmit data or control information after a specified offset from the time of RRC reception, in which case the start time of regular transmissions is provided by a downlink control signal.

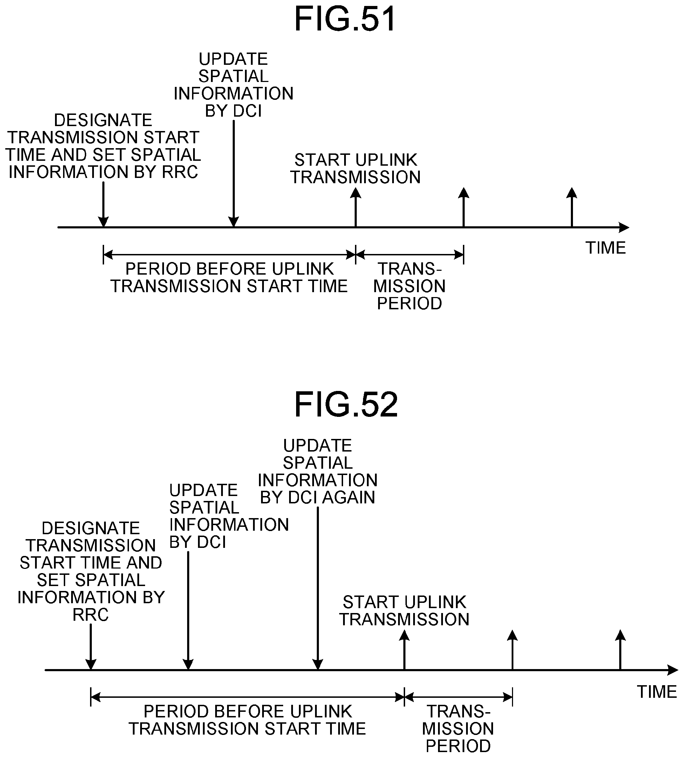

In the above-mentioned case where PUSCH and PUCCH transmission timings are provided from the base station to the mobile station in advance, beam information for PUSCH and PUCCH transmission is set in an updatable manner. For example, beam information set for beams for transmitting PUSCH and PUCCH held by the mobile station is updated by overwriting. Specifically, before the transmission start time specified by the base station in either way described above, the mobile station rewrites uplink beam information. For example, after the base station uses DCI to set the correlation between a beam for transmitting PUSCH and a beam for transmitting SRS, the base station may transmit DCI again before the set PUSCH transmission start time to correlate the beam for transmitting PUSCH with a different beam. That is, by specifying that beam correlation processing should be performed based on information set in the latest DCI received, the mobile station can select the beam to be used for transmission of data or control information according to the latter of the two items of information received indicating beam correlation results. A specific example is illustrated in FIG. 51. In the example illustrated in FIG. 51, spatial information indicates the state of beam correlation. As illustrated in the drawing, the spatial information and the uplink transmission timing are set by RRC, and then the spatial information is updated by DCI. In this case, the mobile station performs uplink transmission according to the settings updated by DCI. As illustrated in FIG. 52, after the spatial information and the uplink transmission timing are set by RRC, the spatial information can be updated twice by DCI. Such rewritable spatial information is advantageous, for example, when the beam transmission direction is changed due to the movement of the mobile station, because the spatial information can be updated so that the beam to be used can be updated.

In a case where many SRS symbols are transmitted in one slot, a collision may occur with PUSCH or PUCCH transmitted by the mobile station in response to an instruction from the base station. A collision means an overlap between SRS and other channels such as PUSCH and PUCCH arranged in the time and frequency domains. In the time domain, an overlap of even a single symbol is treated as a collision. For example, if the base station schedules to arrange SRS symbols in the tenth to fourteenth symbols in a slot and arrange PUCCH symbols in the first to eleventh symbols in the same slot, it is treated as a collision. In the frequency domain, an overlap between an RE containing a PUCCH or PUSCH and an RE containing an SRS is defined as a collision.

The technique described in the present embodiment can be applied to a case where an overlap occurs between PUCCH or PUSCH and SRS only in the time domain, with no overlap in the frequency domain. In a case where the transmission period of other channels such as PUCCH and PUSCH is fixed, aperiodic SRS or the like, which is transmitted from the mobile station in response to a request from the mobile station or the base station, can increase the probability of collision between SRS symbols and other channels. As described above, SRS is used by the base station for sounding to check the status of uplink transmission lines. Therefore, without transmission of SRS from the mobile station, the communication quality deteriorates. On the other hand, PUCCCH contains control-related information such as ACK, NACK, and CSI report, and PUSCH contains data. Therefore, the usage of SRS and the contents of PUCCH or PUSCH should be taken into consideration for priority determination. Thus, priority levels may be assigned for determining whether to transmit SRS symbols or PUSCH and PUCCH. PUCCH or PUSCH may be transmitted in preference to SRS.

In the present embodiment, other channels refer to PUSCH or PUCCH. For example, it is possible to transmit only SRS symbols that do not overlap with other channels without transmitting SRS symbols that overlap with other channels in the time domain. In short, only one or more of the originally scheduled SRSs are transmitted. If some other channel collides with SRS, all the SRS symbols scheduled to be transmitted in this slot may be cancelled so that the colliding channel can be transmitted preferentially.

In the above-mentioned case where 14 SRS symbols are arranged in one slot, the purpose intended by the base station may be to check the state of transmission lines using SRS symbols arranged at a high density per symbol. In this case, the priority relationship between SRS symbols and other channels may be determined according to the number of SRS symbols. For example, the purpose of transmitting 14 SRS symbols in one slot intended by the base station may be to measure the state of transmission lines with high accuracy or to configure settings for a mobile station away from the base station. Therefore, SRS may be transmitted preferentially only when 14 symbols are arranged in one slot. In addition, the priority relationship may be determined according to the type of SRS period, e.g. periodic, semi-persistent, or aperiodic. Alternatively, the priority relationship may be determined according to information contained in PUCCH or PUSCH or usage. In a case where the number of SRS symbols set in one slot is greater than a standardized threshold, the SRS symbols may be transmitted preferentially. For example, suppose that the number of SRS symbols in one slot is X, where X is an integer, and that any of the SRS symbols collides with another channel. In this case, it may be standardized that the SRS or the colliding channel should be transmitted preferentially according to the priority relationship.

The mobile station may preferentially transmit SRS or other channels according to a standardized priority relationship. Alternatively, in response to the implementation of the above settings, the mobile station may assume that no other channel can be set in the corresponding slot. For example, once 14 SRS symbols are set in one slot, the mobile station does not have to assume that other channels can be scheduled in the slot. The reason for standardizing the above-mentioned threshold is that with a certain number of SRS symbols provided in one slot, there is no other place for PUSCH or PUCCH.

As described above, in the event of a collision between SRS and another channel, the transmission timing of the SRS or the colliding channel may be postponed. The period of postponement may be standardized on a slot-by-slot or symbol-by-symbol basis. That is, the postponed transmission of the SRS or the colliding channel is executed after a standardized number of slots or symbols from the current slot. For example, in the event of a collision, it may be standardized that the SRS or the colliding channel should be transmitted after Y slots, where Y is an integer. In addition, collision rules may be determined according to SRS use cases. For example, the standardized higher-order parameters "usage" indicating the usage of SRS include beam management, codebook, non-codebook, and antenna switching. Other types of usage such as for positioning are also standardized in the "usage", based on which the priority relationship with other channels may be determined.

In this manner, in the event of a collision of SRS or other channels, whether to execute transmission is determined according to the priority relationship, which enables handover, accurate beam management for the mobile station, or communication that suits the usage of SRS, and can prevent the communication quality from deteriorating. The above-mentioned processing for collision may also be applied to a case where SRSs are arranged over a plurality of slots.

The configuration of the mobile station according to the present embodiment is similar to the configuration of the mobile station according to the fifth embodiment illustrated in FIG. 10. In the mobile station according to the present embodiment, the signal reception unit 21 illustrated in FIG. 10 receives a control signal transmitted from the base station, and based on the control information extracted from the control signal by the control information extraction unit 26, each processing unit responsible for transmission operation, such as the transmission signal generation unit 31, the signal transmission unit 32, the wireless transmission control unit 33, and the transmission control unit 36, performs transmission using a plurality of panels.

According to the exemplary embodiments, each antenna unit of the base station in FIG. 2, 5, or the like includes an array antenna. In an implementation example of a base station device, the antenna unit and the array may be integrally formed inseparably or separably, or, for example, the antenna may be separable from the device. The components of the antenna unit and the array antenna may be distributed in a plurality of devices, without limitation by any of the embodiments. In an implementation example of a base station device, baseband signals generated by the transmission signal generation unit of the base station in FIG. 2, 5, or the like may be analog signals, digital signals, information (data) for transmission signal generation, or combinations thereof, without limitation by any of the embodiments. In an implementation example of a base station device, the blocks (components and functions) that are not included in the antenna unit of the base station in FIG. 2, 5, or the like may be configured for centralized processing (collective processing) as illustrated in the drawings, or for distributed processing across a plurality of antenna units, without limitation by any of the embodiments. Furthermore, in an implementation example of a base station device, the blocks (components and functions) that are not included in the plurality of antenna units of the base station in FIG. 2, 5, or the like may be independent of the antenna units as illustrated in the drawings, collectively included in one or more of the antenna units, or distributed in the plurality of antenna units. The components included only in the antenna unit in the drawings may be arranged elsewhere other than in the antenna unit, without limitation by any of the partitioning methods in the embodiments. In an implementation example of a base station device, the relationship between the plurality of antenna units illustrated in FIG. 2, 5, or the like and the plurality of array antennas in FIG. 19 or the like can be implemented in various forms such as arranging the two antenna units of FIG. 2 on the two array antennas of FIG. 19 in one-to-one correspondence and arranging the two antenna units on one array antenna. The device for linking the array antennas in FIGS. 18 and 19 represents a device that accommodates the blocks that are not included in the plurality of antenna units of the base station in FIG. 2, 5, or the like, which is only an example and does not impose any restriction on the embodiments.

The hardware illustrated in FIGS. 24 and 25 may be provided in each base station, partially or wholly shared by a plurality of base stations, or partially or wholly shared in common with a device other than a base station (e.g. what is called a core network device of a communication system). The hardware, components, and functions may be configured in a modifiable manner depending on the type of communication service and the quality thereof.

The configurations described in the above-mentioned embodiments indicate examples of the contents of the present invention. The configurations can be combined with another well-known technique, and some of the configurations can be omitted or changed in a range not departing from the gist of the present invention.

### Reference Signs List

1, 1a, 1b, 1c base station; 2 mobile station; 11, 11b candidate beam grouping unit; 12, 28 storage unit; 13, 13b beam setting unit; 14 beam information generation unit; 15, 15b, 31 transmission signal generation unit; 16 feedback information extraction unit; 17, 17b, 23 reception signal generation unit; 18-1, 18a-1, 18b-1, 18-2, 18a-2, 18b-2 antenna unit; 19, 81 beam control unit; 21, 84 signal reception unit; 22, 85 wireless reception control unit; 24 reception signal measurement unit; 25 beam information extraction unit; 26 control information extraction unit; 27 information processing unit; 29 beam selection unit; 30 selected beam information generation unit; 32, 83 signal transmission unit; 33, 82 wireless transmission control unit; 34, 46 reception control unit; 35, 41 upper-layer processing unit; 36, 42 transmission control unit; 43 weight generation unit; 44 antenna mapping unit; 45 antenna demapping unit; 80 antenna port unit; 100 wireless communication system.

## Claims

1. A transmitter comprising:
a plurality of antenna units each capable of forming a plurality of beams;
a grouping unit to perform grouping of each beam formable by the plurality of antenna units, the grouping being performed based on the antenna unit that forms each beam; and
a transmission signal generation unit to generate a transmission signal including beam identification information of a beam formed by the plurality of antenna units and group information indicating a group to which the beam belongs, and output the transmission signal generated to the antenna unit that forms a beam corresponding to the beam identification information included in the transmission signal.

2. The transmitter according to claim 1, wherein
the grouping unit performs the grouping such that beams formed by a same antenna unit are classified into a same group.

3. The transmitter according to claim 1 or 2, wherein
in a case where the plurality of antenna units include antenna units provided at different positions,
the grouping unit performs the grouping such that beams formed by the antenna units provided at the different positions are classified into different groups.

4. The transmitter according to any one of claims 1 to 3, wherein
in a case where the plurality of antenna units include antenna units having a difference less than or equal to a threshold predetermined, the difference being between directions of the antenna units from a communication partner,
the grouping unit performs the grouping such that beams formed by the antenna units having the difference less than or equal to the threshold are classified into a same group.

5. The transmitter according to claim 1, wherein
the grouping unit performs the grouping of beams formed by a same antenna unit such that beams formed toward an area at a distance less than or equal to a predetermined value and beams formed toward an area at a distance greater than the predetermined value are classified into different groups, the distance being from the antenna unit that forms the beams.

6. The transmitter according to any one of claims 1 to 5, wherein
after an installation position of at least one of the antenna units changes or the number of antenna units changes, the grouping unit performs the grouping again.

7. The transmitter according to any one of claims 1 to 6, wherein
the antenna unit is capable of forming first beams for a cell search and second beams having a narrower width and a higher gain than the first beams, and
the grouping unit performs the grouping on each of the first beams and the second beams.

8. The transmitter according to claim 7, wherein
based on a result of the cell search, the transmission signal generation unit generates a transmission signal to be transmitted with one or more of the second beams.

9. The transmitter according to any one of claims 1 to 8, comprising
a beam control unit to collectively control a beam forming operation of each of the plurality of antenna units.

10. A receiver that receives a signal transmitted by the transmitter according to any one of claims 1 to 9, the receiver comprising:
a signal reception unit to receive a signal including the beam identification information and the group information;
a beam selection unit to select a beam to be used for communication with the transmitter based on the group information included in the signal received by the signal reception unit; and
a feedback signal generation unit to generate a signal for feeding back a selection result by the beam selection unit to the transmitter.

11. A wireless communication system comprising:
the transmitter according to any one of claims 1 to 9; and
the receiver to receive a signal transmitted by the transmitter.

12. The wireless communication system according to claim 11, wherein
the receiver includes:
a signal reception unit to receive a signal including the beam identification information and the group information;
a beam selection unit to select a beam to be used for communication with the transmitter based on the group information included in the signal received by the signal reception unit; and
a feedback signal generation unit to generate a signal for feeding back a selection result by the beam selection unit to the transmitter.

13. A wireless communication system comprising:
a plurality of base stations, each including the transmitter according to any one of claims 1 to 9; and
a mobile station including the receiver according to claim 10, wherein
the plurality of base stations include a first base station and second base stations different from the first base station, the first base station being a base station currently connected to the mobile station,
the mobile station receives the beam identification information and the group information transmitted from one or more of the second base stations, measures a reception quality of a reference signal transmitted by the second base stations, and feeds back, to the first base station, the reception quality of the reference signal and beam identification information and group information of a beam used for transmitting the reference signal, and
the first base station selects a base station as a handover destination of the mobile station based on the reception quality, the beam identification information, and the group information fed back from the mobile station.

14. The wireless communication system according to claim 13, wherein
the mobile station measures reception qualities of reference signals transmitted by the second base stations with different beams, groups the reception qualities such that reception qualities of reference signals transmitted from a same group of beams are classified into a same group, selects one or more reception qualities from each group of reception qualities, and feeds back, to the first base station, the reception qualities selected, beam identification information of a beam that transmits each reference signal used for measuring each of the reception qualities selected, and group information of a group to which the beam that transmits each reference signal used for measuring each of the reception qualities selected belongs.

15. The wireless communication system according to claim 13 or 14, wherein
the first base station transmits, to a handover destination base station, the group information fed back from the mobile station, the handover destination base station being the base station selected as the handover destination, transmits, to the mobile station, beam identification information of a beam to be used by the handover destination base station for initial access to the handover destination base station, and instructs the mobile station to perform a handover to the handover destination base station, and
the mobile station executes the initial access for the handover to the handover destination base station based on the beam identification information received from the first base station.

16. The wireless communication system according to any one of claims 13 to 15, wherein
the mobile station receives the beam identification information and the group information transmitted from the first base station, measures a reception quality of a reference signal transmitted by the first base station, and feeds back, to the first base station, the reception quality of the reference signal and beam identification information and group information of a beam used for transmitting the reference signal, and
based on the reception quality of the reference signal transmitted by the first base station and on the beam identification information and group information of the beam used by the first base station for transmitting the reference signal, the first base station determines a switch destination beam to which a beam to be used for communication with the mobile station is switched, the reception quality and the beam identification information and group information being fed back from the mobile station.

17. A wireless communication system comprising:
a plurality of base stations, each including the transmitter according to any one of claims 1 to 9; and
a mobile station including the receiver according to claim 10, wherein
the plurality of base stations include a first base station, the first base station being a base station currently connected to the mobile station,
the mobile station receives the beam identification information and the group information transmitted from the first base station, measures a reception quality of a reference signal transmitted by the first base station, and feeds back, to the first base station, the reception quality of the reference signal and beam identification information and group information of a beam used for transmitting the reference signal, and
based on the reception quality of the reference signal transmitted by the first base station and on the beam identification information and group information of the beam used by the first base station for transmitting the reference signal, the first base station determines a switch destination beam to which a beam to be used for communication with the mobile station is switched, the reception quality and the beam identification information and group information being fed back from the mobile station.

18. The wireless communication system according to any one of claims 13 to 17, wherein
the mobile station includes a plurality of array antennas capable of forming a plurality of beams to be used for communication with the base station, performs grouping of each beam formable by the plurality of array antennas, the grouping being performed based on an installation position of each of the plurality of array antennas, and transmits, to the base station, beam identification information of a beam formed by the plurality of array antennas and group information indicating a group to which the beam belongs.

19. A control circuit that controls a transmitter, the transmitter including a plurality of antenna units each capable of forming a plurality of beams, the control circuit causing the transmitter to execute:
a grouping step of performing grouping of each beam formable by the plurality of antenna units, the grouping being performed based on the antenna unit that forms each beam; and
a transmission signal generation step of generating a transmission signal including beam identification information of a beam formed by the plurality of antenna units and group information indicating a group to which the beam belongs, and outputting the transmission signal generated to the antenna unit that forms a beam corresponding to the beam identification information included in the transmission signal.

20. A storage medium that stores a program for controlling a transmitter, the transmitter including a plurality of antenna units each capable of forming a plurality of beams,
the program causing the transmitter to execute:
a grouping step of performing grouping of each beam formable by the plurality of antenna units, the grouping being performed based on the antenna unit that forms each beam; and
a transmission signal generation step of generating a transmission signal including beam identification information of a beam formed by the plurality of antenna units and group information indicating a group to which the beam belongs, and outputting the transmission signal generated to the antenna unit that forms a beam corresponding to the beam identification information included in the transmission signal.
